# EUROPÄISCHE PATENTSCHRIFT

(11) **EP 1 902 232 B1**
(45) Veröffentlichungstag und Bekanntmachung des Hinweises auf die Patenterteilung: **17.12.2008**
(21) Anmeldenummer: 06762369.4
(22) Anmeldetag: 04.07.2006
(51) Int. Cl.: F16H 3/66

(54) **MEHRSTUFENGETRIEBE**
MULTI-SPEED GEARBOX
BOITE DE VITESSES A RAPPORTS MULTIPLES

(30) Priorität: 08.07.2005 DE 102005032001
(43) Veröffentlichungstag der Anmeldung: 26.03.2008
(73) Patentinhaber: ZF Friedrichshafen AG, 88038 Friedrichshafen (DE)
(72) Erfinder: DIOSI, Gabor, 88045 Friedrichshafen (DE); HAUPT, Josef, 88069 Tettnang (DE); GUMPOLTSBERGER, Gerhard, 88045 Friedrichshafen (DE); ZIEMER, Peter, 88069 Tettnang (DE); BREHMER, Martin, 78467 Konstanz (DE)
(86) Internationale Anmeldenummer: PCT/EP2006/006475
(87) Internationale Veröffentlichungsnummer: WO 2007/006449

(56) Entgegenhaltungen:
- EP-A- 1 533 543
- DE-A1- 3 341 217
- DE-A1- 10 115 983
- DE-A1- 10 115 995
- DE-A1-7102005 002 33
- US-A- 4 683 776

## Beschreibung

Die vorliegende Erfindung betrifft ein Mehrstufengetriebe in Planetenbauweise, insbesondere ein Automatgetriebe für ein Kraftfahrzeug, umfassend eine Antriebswelle, eine Abtriebswelle, vier Planetenradsätze, mindestens acht drehbare Wellen, sowie fünf Schaltelemente, deren selektives Eingreifen verschiedene Übersetzungsverhältnisse zwischen Antriebswelle und Abtriebswelle bewirkt, sodass acht Vorwärtsgänge und ein Rückwärtsgang realisierbar sind.

Automatgetriebe, insbesondere für Kraftfahrzeuge, umfassen nach dem Stand der Technik Planetenradsätze, die mittels Reibungs- bzw. Schaltelementen, wie etwa Kupplungen und Bremsen geschaltet werden und üblicherweise mit einem einer Schlupfwirkung unterliegenden und wahlweise mit einer Überbrückungskupplung versehenen Anfahrelement, wie etwa einem hydrodynamischen Drehmomentwandler oder einer Strömungskupplung verbunden sind.

Im Rahmen der DE 101 15 983 A1 der Anmelderin beispielsweise wird ein Mehrstufengetriebe beschrieben, mit einer Antriebswelle, die mit einem Vorschaltsatz verbunden ist, mit einer Abtriebswelle, die mit einem Nachschaltsatz verbunden ist, und mit maximal sieben Schaltelementen, durch deren wahlweises Schalten mindestens sieben Vorwärtsgänge ohne Gruppenschaltung schaltbar sind. Der Vorschaltsatz wird aus einem schaltbaren oder nicht schaltbaren Planetenradsatz oder aus maximal zwei nicht schaltbaren, miteinander gekoppelten Planetenradsätzen gebildet. Der Nachschaltsatz ist als Zweisteg-Vierwellen-Getriebe mit zwei schaltbaren Planetenradsätzen ausgebildet und weist vier freie Wellen auf. Die erste freie Welle dieses Zweisteg-Vierwellen-Getriebes ist mit dem ersten Schaltelement verbunden, die zweite freie Welle mit dem zweiten und dritten Schaltelement, die dritte freie Welle mit dem vierten und fünften Schaltelement und die vierte freie Welle ist mit der Abtriebswelle verbunden. Für ein Mehrstufengetriebe mit insgesamt sechs Schaltelementen wird erfindungsgemäß vorgeschlagen, die dritte freie Welle oder die erste freie Welle des Nachschaltsatzes zusätzlich mit einem sechsten Schaltelement zu verbinden. Für ein Mehrstufengetriebe mit insgesamt sieben Schaltelementen wird erfindungsgemäß vorgeschlagen, die dritte freie Welle zusätzlich mit einem sechsten Schaltelement und die erste freie Welle zusätzlich mit einem siebten Schaltelement zu verbinden.

Mehrere andere Mehrstufengetriebe sind beispielsweise auch aus der DE 101 15 995 A1 der Anmelderin bekannt, bei denen vier schaltbare, miteinander gekoppelte Planetenradsätze und sechs oder sieben reibschlüssige Schaltelemente vorgesehen sind, durch deren selektives Schließen eine Drehzahl einer Antriebswelle des Getriebes derart auf eine Abtriebswelle des Getriebes übertragbar ist, dass neun oder elf Vorwärtsgänge und zumindest ein Rückwärtsgang schaltbar sind. Je nach Getriebeschema sind in jedem Gang zwei oder drei Schaltelemente geschlossen, wobei bei einem Wechsel von einem Gang in den jeweils nächstfolgend höheren oder nächstfolgend niedrigeren Gang zur Vermeidung von Gruppenschaltungen jeweils nur ein geschlossenes Schaltelement geöffnet und ein zuvor nicht geschlossenes Schaltelement zugeschaltet wird.

Die EP-A-1533543 offenbart ein Mehrstufengetriebe in Planetenbauweise, insbesondere Automatgetriebe für ein Kraftfahrzeug, umfassend eine Antriebswelle, eine Abtriebswelle, vier Planetenradsätze, mindestens acht drehbare Wellen sowie (mindestens) fünf Schaltelemente, deren selektives Eingreifen verschiedene Übersetzungsverhältnisse zwischen Antriebswelle und Abtriebswelle bewirkt, sodass acht Vorwärtsgänge und ein Rückwärtsgang realisierbar sind, wobei unterschiedliche Koppelungen der jeweiligen Elemente möglich sind.

Ferner wird in der gattungsgemäßen, nicht vorveröffentlichen Patentanmeldung DE 102005002337.1 bzw, WO 2006074707 A1 der Anmelderin ein Mehrstufengetriebe mit einer Antriebswelle, einer Abtriebswelle, vier miteinander gekoppelten einzelnen Planetenradsätzen und fünf Schaltelementen vorgeschlagen, bei dem acht Vorwärtsgänge gruppenschaltungsfrei schaltbar sind, also derart, dass bei einem Wechsel von einem Vorwärtsgang in den nächstfolgend höheren oder niedrigeren Vorwärtsgang jeweils nur eines der zuvor geschlossenen Schaltelemente geöffnet und nur eines der zuvor geöffneten Schaltelemente geschlossen wird. Das Mehrstufengetriebe weist auch einen Rückwärtsgang auf. In allen Vorwärtsgängen und im Rückwärtsgang sind jeweils drei Schaltelemente geschlossen. Hinsichtlich der kinematischen Koppelung der vier Planetenradsätze untereinander und zur Antriebs- und Abtriebswelle ist vorgesehen, dass ein Steg des vierten Planetenradsatzes und die Antriebswelle miteinander verbunden sind und eine erste Welle des Getriebes bilden, ein Steg des dritten Planetenradsatzes und die Abtriebswelle miteinander verbunden sind und eine zweite Welle des Getriebes bilden, ein Sonnenrad des ersten Planetenradsatzes und ein Sonnenrad des vierten Planetenradsatzes miteinander verbunden sind und eine dritte Welle des Getriebes bilden, ein Hohlrad des ersten Planetenradsatzes eine vierte Welle des Getriebes bildet, ein Hohlrad des zweiten Planetenradsatzes und ein Sonnenrad des dritten Planetenrädsatzes miteinander verbunden sind und eine fünfte Welle des Getriebes bilden, ein Steg des ersten Planetenradsatzes und ein Hohlrad des dritten Planetenradsatzes miteinander verbunden sind und eine sechste Welle des Getriebes bilden, ein Sonnenrad des zweiten Planetenradsatzes und ein Hohlrad des vierten Planetenradsatzes miteinander verbunden sind und eine siebte Welle des Getriebes bilden und ein Steg des zweiten Planetenradsatzes eine achte Welle des Getriebes bildet. Hinsichtlich der kinematischen Koppelung der fünf Schaltelemente an die vier Planetenradsätze und an Antriebs- und Abtriebswelle ist vorgesehen, dass das erste Schaltelement im Kraftfluss zwischen der dritten Welle und einem Gehäuse des Getriebes, das zweite Schaltelement zwischen der vierten Welle und dem Gehäuse des Getriebes, das dritte Schaltelement zwischen der ersten und fünften Welle, das vierte Schaltelement entweder zwischen der achten und zweiten Welle oder zwischen der achten und sechsten Welle, sowie das fünfte Schaltelement entweder zwischen der siebten und fünften Welle oder zwischen der siebten und achten oder zwischen der fünften und achten Welle angeordnet ist.

Automatisch schaltbare Fahrzeuggetriebe in Planetenbauweise im Allgemeinen sind im Stand der Technik also bereits vielfach beschrieben und unterliegen einer permanenten Weiterentwicklung und Verbesserung. So sollen diese Getriebe eine ausreichende Anzahl von Vorwärtsgängen sowie einen Rückwärtsgang und eine für Kraftfahrzeuge sehr gut geeignete Übersetzung mit einer hohen Gesamtspreizung sowie günstigen Stufensprüngen aufweisen. Ferner sollen diese eine hohe Anfahrübersetzung in Vorwärtsrichtung ermöglichen und einen direkten Gang enthalten sowie für den Einsatz sowohl in PKW als auch NKW geeignet sein. Außerdem sollen diese Getriebe einen geringen Bauaufwand, insbesondere eine geringe Anzahl an Schaltelementen erfordern und bei sequentieller Schaltweise Doppelschaltungen vermeiden, so dass bei Schaltungen in definierten Ganggruppen jeweils nur ein Schaltelement gewechselt wird.

Der vorliegenden Erfindung liegt die Aufgabe zugrunde, ein Mehrstufengetriebe der eingangs genannten Art mit zumindest acht gruppenschaltungsfrei schaltbaren Vorwärtsgängen und einem Rückwärtsgang vorzuschlagen, bei dem unter Verwendung von insgesamt vier Planetenradsätzen eine möglichst geringe Anzahl an Schaltelementen benötigt wird. Zudem soll das Getriebe eine große Spreizung bei vergleichsweise harmonischer Gangabstufung aufweisen und zumindest in den Hauptfahrgängen einen günstigen Wirkungsgrad - also vergleichsweise geringe Schlepp- und Verzahnungsverluste - aufweisen.

Diese Aufgabe wird erfindungsgemäß durch ein Mehrstufengetriebe mit den Merkmalen des Patentanspruchs 1 bzw. des Patentanspruchs 2 bzw. des Patentanspruchs 3 bzw. des Patentanspruchs 4 bzw. des Patentanspruchs 5 bzw. des Patentanspruchs 6 bzw. des Patentanspruchs 7 gelöst. Weitere vorteilhafte Ausgestaltungen und Weiterbildungen gehen aus den Unteransprüchen hervor.

Demnach wird eine ganze Familie von Mehrstufengetrieben in Planetenbauweise vorgeschlagen, die alle von der gattungsgemäßen Patentanmeldung DE 102005002337.1 der Anmelderin ausgehen. Alle erfindungsgemäßen Mehrstufengetriebe weisen eine Antriebswelle, eine Abtriebswelle, vier miteinander gekoppelte Planetenradsätze, mindestens acht drehbare Wellen sowie fünf Schaltelementen (zwei Bremsen und drei Kupplungen), deren selektives Eingreifen verschiedene Übersetzungsverhältnisse zwischen der Antriebswelle und der Abtriebswelle bewirkt, so dass acht Vorwärtsgänge und ein Rückwärtsgang realisierbar sind. In jedem Gang sind jeweils drei der fünf Schaltelemente geschlossen, wobei bei einem Wechsel von einem Vorwärtsgang in den nächstfolgend höheren oder niedrigeren Vorwärtsgang jeweils nur eines der zuvor geschlossenen Schaltelemente geöffnet und nur eines der zuvor geöffneten Schaltelemente geschlossen wird.

In einer ersten erfindungsgemäßen Lösung der Aufgabe wird vorgeschlagen, dass
■ ein Steg des vierten Planetenradsatzes und die Antriebswelle miteinander verbunden sind und die erste Welle des Getriebes bilden,
■ ein Steg des dritten Planetenradsatzes und die Abtriebswelle miteinander verbunden sind und die zweite Welle des Getriebes bilden,
■ ein Sonnenrad des ersten Planetenradsatzes und ein Sonnenrad des vierten Planetenradsatzes miteinander verbunden sind und die dritte Welle des Getriebes bilden,
■ ein Hohlrad des ersten Planetenradsatzes die vierte Welle des Getriebes bildet,
■ ein Sonnenrad des dritten Planetenradsatzes die fünfte Welle des Getriebes bildet,
■ ein Steg des ersten Planetenradsatzes und ein Steg des zweiten Planetenradsatzes und ein Hohlrad des dritten Planetenradsatzes miteinander verbunden sind und die sechste Welle des Getriebes bilden,
■ ein Sonnenrad dies zweiten Planetenradsatzes und ein Hohlrad des vierten Planetenradsatzes miteinander verbunden sind und die siebte Welle des Getriebes bilden,
■ ein Hohlrad des zweiten Planetenradsatzes die achte Welle des Getriebes bildet,
■ das erste Schaltelement im Kraftfluss zwischen der dritten Welle und einem Gehäuse des Getriebes angeordnet ist,
■ das zweite Schaltelement im Kraftfluss zwischen der vierten Welle und dem Gehäuse des Getriebes angeordnet ist,
■ das dritte Schaltelement im Kraftfluss zwischen der ersten und fünften Welle des Getriebes angeordnet ist,
■ das vierte Schaltelement im Kraftfluss zwischen der zweiten und achten Welle des Getriebes angeordnet ist und
■ das fünfte Schaltelement im Kraftfluss zwischen der fünften und siebten Welle des Getriebes angeordnet ist.

In einer zweiten erfindungsgemäßen Lösung der Aufgabe wird vorgeschlagen, dass
■ ein Steg des vierten Planetenradsatzes und die Antriebswelle miteinander verbunden sind und die erste Welle des Getriebes bilden,
■ ein Steg des zweiten Planetenradsatzes und ein Steg des dritten Planetenradsatzes und die Abtriebswelle miteinander verbunden sind und die zweite Welle des Getriebes bilden,
■ ein Sonnenrad des ersten Planetenradsatzes und ein Sonnenrad des vierten Planetenradsatzes miteinander verbunden sind und die dritte Welle des Getriebes bilden,
■ ein Hohlrad des ersten Planetenradsatzes die vierte Welle des Getriebes bildet,
■ ein Hohlrad des zweiten Planetenradsatzes und ein Sonnenrad des dritten Planetenradsatzes miteinander verbunden sind die fünfte Welle des Getriebes bilden,
■ ein Steg des ersten Planetenradsatzes und ein Hohlrad des dritten Planetenradsatzes miteinander verbunden sind und die sechste Welle des Getriebes bilden,
■ ein Hohlrad des vierten Planetenradsatzes die siebte Welle des Getriebes bildet,
■ ein Sonnenrad des zweiten Planetenradsatzes die achte Welle des Getriebes bildet,
■ das erste Schaltelement im Kraftfluss zwischen der dritten Welle und einem Gehäuse des Getriebes angeordnet ist,
■ das zweite Schaltelement im Kraftfluss zwischen der vierten Welle und dem Gehäuse des Getriebes angeordnet ist,
■ das dritte Schaltelement im Kraftfluss zwischen der ersten und fünften Welle des Getriebes angeordnet ist,
■ das vierte Schaltelement im Kraftfluss zwischen der siebten und achten Welle des Getriebes angeordnet ist und
■ das fünfte Schaltelement im Kraftfluss zwischen der fünften und siebten Welle des Getriebes angeordnet ist.

In einer dritten erfindungsgemäßen Lösung der Aufgabe wird vorgeschlagen, dass
■ ein Steg des vierten Planetenradsatzes und die Antriebswelle miteinander verbunden sind und die erste Welle des Getriebes bilden,
■ ein Hohlrad des zweiten Planetenradsatzes und ein Steg des dritten Planetenradsatzes und die Abtriebswelle miteinander verbunden sind und die zweite Welle des Getriebes bilden,
■ ein Sonnenrad des ersten Planetenradsatzes und ein Sonnenrad des vierten Planetenradsatzes miteinander verbunden sind und die dritte Welle des Getriebes bilden,
■ ein Hohlrad des ersten Planetenradsatzes die vierte Welle des Getriebes bildet,
■ ein Sonnenrad des dritten Planetenradsatzes die fünfte Welle des Getriebes bildet,
■ ein Steg des ersten Planetenradsatzes und ein Hohlrad des dritten Planetenradsatzes miteinander verbunden sind und die sechste Welle des Getriebes bilden,
■ ein Sonnenrad des zweiten Planetenradsatzes und ein Hohlrad des vierten Planetenradsatzes miteinander verbunden sind und die siebte Welle des Getriebes bilden und
■ ein Steg des zweiten Planetenradsatzes die achte Welle des Getriebes bildet,
■ das erste Schaltelement im Kraftfluss zwischen der dritten Welle und einem Gehäuse des Getriebes angeordnet ist,
■ das zweite Schaltelement im Kraftfluss zwischen der vierten Welle und dem Gehäuse des Getriebes angeordnet ist,
■ das dritte Schaltelement im Kraftfluss zwischen der ersten und fünften Welle des Getriebes angeordnet ist,
■ das vierte Schaltelement im Kraftfluss zwischen der sechsten und achten Welle des Getriebes angeordnet ist und
■ das fünfte Schaltelement im Kraftfluss zwischen der fünften und siebten Welle des Getriebes angeordnet ist.

In einer vierten erfindungsgemäßen Lösung der Aufgabe wird vorgeschlagen, dass
■ ein Steg des vierten Planetenradsatzes und die Antriebswelle miteinander verbunden sind und die erste Welle des Getriebes bilden,
■ ein Hohlrad des zweiten Planetenradsatzes und ein Steg des dritten Planetenradsatzes und die Abtriebswelle miteinander verbunden sind und die zweite Welle des Getriebes bilden,
■ ein Sonnenrad des ersten Planetenradsatzes und ein Sonnenrad des vierten Planetenradsatzes miteinander verbunden sind und die dritte Welle des Getriebes bilden,
■ ein Hohlrad des ersten Planetenradsatzes die vierte Welle des Getriebes bildet,
■ ein Sonnenrad des dritten Planeteriradsatzes die fünfte Welle des Getriebes bildet,
■ ein Steg des ersten Planetenradsatzes und ein Steg des zweiten Planetenradsatzes und ein Hohlrad des dritten Planetenradsatzes miteinander verbunden sind und die sechste Welle des Getriebes bilden,
■ ein Hohlrad des vierten Planetenradsatzes die siebte Welle des Getriebes bildet,
■ ein Sonnenrad des zweiten Planetenradsatzes die achte Welle des Getriebes bildet
■ das erste Schaltelement im Kraftfluss zwischen der dritten Welle und einem Gehäuse des Getriebes angeordnet ist,
■ das zweite Schaltelement im Kraftfluss zwischen der vierten Welle und dem Gehäuse des Getriebes angeordnet ist,
■ das dritte Schaltelement im Kraftfluss zwischen der ersten und fünften Welle des Getriebes angeordnet ist,
■ das vierte Schaltelement im Kraftfluss zwischen der siebten und achten Welle des Getriebes angeordnet ist und
■ das fünfte Schaltelement im Kraftfluss zwischen der fünften und siebten Welle des Getriebes angeordnet ist.

In einer fünften erfindungsgemäßen Lösung der Aufgabe wird vorgeschlagen, dass
■ ein Steg des vierten Planetenradsatzes und die Antriebswelle miteinander verbunden sind und die erste Welle des Getriebes bilden,
■ ein Steg des dritten Planetenradsatzes und die Abtriebswelle miteinander verbunden sind und die zweite Welle des Getriebes bilden,
■ ein Sonnenrad des ersten Planetenradsatzes und ein Sonnenrad des vierten Planetenradsatzes miteinander verbunden sind und die dritte Welle des Getriebes bilden,
■ ein Hohlrad des ersten Planetenradsatzes die vierte Welle des Getriebes bildet,
■ ein Sonnenrad des dritten Planetenradsatzes die fünfte Welle des Getriebes bildet,
■ ein Steg des ersten Planetenradsatzes und ein Steg des zweiten Planetenradsatzes und ein Hohlrad des dritten Planetenradsatzes miteinander verbunden sind und die sechste Welle des Getriebes bilden,
■ ein Hohlrad des zweiten Planetenradsatzes und ein Hohlrad des vierten Planetenradsatzes miteinander verbunden sind und die siebte Welle des Getriebes bilden,
■ ein Sonnenrad des zweiten Planetenradsatzes die achte Welle des Getriebes bildet,
■ das erste Schaltelement im Kraftfluss zwischen der dritten Welle und einem Gehäuse des Getriebes angeordnet ist,
■ das zweite Schaltelement im Kraftfluss zwischen der vierten Welle und dem Gehäuse des Getriebes angeordnet ist,
■ das dritte Schaltelement im Kraftfluss zwischen der ersten und fünften Welle des Getriebes angeordnet ist,
■ das vierte Schaltelement im Kraftfluss zwischen der fünften und achten Welle des Getriebes angeordnet ist und
■ das fünfte Schaltelement im Kraftfluss zwischen der fünften und siebten Welle des Getriebes angeordnet ist.

In einer sechsten erfindungsgemäßen Lösung der Aufgabe wird vorgeschlagen, dass
■ ein Steg des vierten Planetenradsatzes und die Antriebswelle miteinander verbunden sind und die erste Welle des Getriebes bilden,
■ ein Steg des dritten Planetenradsatzes und die Abtriebswelle miteinander verbunden sind und die zweite Welle des Getriebes bilden,
■ ein Sonnenrad des ersten Planetenradsatzes und ein Sonnenrad des vierten Planetenradsatzes miteinander verbunden sind und die dritte Welle des Getriebes bilden,
■ ein Hohlrad des ersten Planetenradsatzes die vierte Welle des Getriebes bildet,
■ ein Hohlrad des zweiten Planetenradsatzes und ein Sonnenrad des dritten Planetenradsatzes miteinander verbunden sind und die fünfte Welle des Getriebes bilden,
■ ein Steg des ersten Planetenradsatzes und ein Steg des zweiten Planetenradsatzes und ein Hohlrad des dritten Planetenradsatzes miteinander verbunden sind und die sechste Welle des Getriebes bilden,
■ ein Hohlrad des vierten Planetenradsatzes die siebte Welle des Getriebes bildet,
■ und ein Sonnenrad des zweiten Planetenradsatzes die achte Welle des Getriebes bildet,
■ das erste Schaltelement im Kraftfluss zwischen der dritten Welle und einem Gehäuse des Getriebes angeordnet ist,
■ das zweite Schaltelement im Kraftfluss zwischen der vierten Welle und dem Gehäuse des Getriebes angeordnet ist,
■ das dritte Schaltelement im Kraftfluss zwischen der ersten und fünften Welle des Getriebes angeordnet ist,
■ das vierte Schaltelement im Kraftfluss zwischen der siebten und achten Welle des Getriebes angeordnet ist,
■ das fünfte Schaltelement im Kraftfluss zwischen der fünften und siebten Welle des Getriebes angeordnet.

In einer siebten erfindungsgemäßen Lösung der Aufgabe wird vorgeschlagen, dass
■ ein Steg des vierten Planetenradsatzes und die Antriebswelle miteinander verbunden sind und die erste Welle des Getriebes bilden,
■ ein Steg des dritten Planetenradsatzes und die Abtriebswelle miteinander verbunden sind und die zweite Welle des Getriebes bilden,
■ ein Sonnenrad des ersten Planetenradsatzes und ein Sonnenrad des vierten Planetenradsatzes verdrehfest miteinander verbunden sind und die dritte Welle des Getriebes bilden,
■ ein Hohlrad des ersten Planetenradsatzes die vierte Welle des Getriebes bildet,
■ ein Sonnenrad des zweiten Planetenradsatzes und ein Sonnenrad des dritten Planetenradsatzes miteinander verbunden sind und die fünfte Welle des Getriebes bilden,
■ ein Steg des ersten Planetenradsatzes und ein Hohlrad des dritten Planetenradsatzes miteinander verbunden sind und die sechste Welle des Getriebes bilden,
■ ein Hohlrad des zweiten Planetenradsatzes und ein Hohlrad des vierten Planetenradsatzes miteinander verbunden sind und die siebte Welle des Getriebes bilden,
■ ein Steg des zweiten Planetenradsatzes die achte Welle des Getriebes bildet,
■ das erste Schaltelement im Kraftfluss zwischen der dritten Welle und einem Gehäuse des Getriebes angeordnet ist,
■ das zweite Schaltelement im Kraftfluss zwischen der vierten Welle und dem Gehäuse des Getriebes angeordnet ist,
■ das dritte Schaltelement im Kraftfluss zwischen der ersten und fünften Welle des Getriebes angeordnet ist,
■ das vierte Schaltelement im Kraftfluss zwischen der sechsten und achten Welle des Getriebes angeordnet ist und
■ das fünfte Schaltelement im Kraftfluss zwischen der fünften und siebten Welle des Getriebes angeordnet ist.

Der gemeinsame Erfindungsgedanken aller sieben Lösungen liegt darin, dass die kinematische Kopplung des ersten, dritten und vierten Planetenradsatzes untereinander und zur Antriebs- und Abtriebswelle sowie das Schaltschema der fünf Schaltelemente aus der gattungsgemäßen Patentanmeldung DE 102005002337.1 übernommen wurden, der zweite Planetenradsatz gegenüber der gattungsgemäßen Patentanmeldung DE 102005002337.1 jedoch in unterschiedliche Art und Weise an die anderen drei Planetenradsätze angekoppelt ist.

Für alle erfindungsgemäßen Mehrstufengetriebe der Getriebefamilie gilt also, dass sich der erste Vorwärtsgang durch Schließen des ersten, zweiten und dritten Schaltelementes, der zweite Vorwärtsgang durch Schließen des ersten, zweiten und fünften Schaltelementes, der dritte Vorwärtsgang durch Schließen des zweiten, dritten und fünften Schaltelementes, der vierte Vorwärtsgang durch Schließen des zweiten, vierten und fünften Schaltelementes, der fünfte Vorwärtsgang durch Schließen des zweiten, dritten und vierten Schaltelementes, der sechste Vorwärtsgang durch Schließen des dritten, vierten und fünften Schaltelementes, der siebte Vorwärtsgang durch Schließen des ersten, dritten und vierten Schaltelementes, der achte Vorwärtsgang durch Schließen des ersten, vierten und fünften Schaltelementes und der Rückwärtsgang durch Schließen des ersten, zweiten und vierten Schaltelementes ergibt.

Für alle erfindungsgemäßen Mehrstufengetriebe der Getriebefamilie gilt zudem:
Alle vier Planetenradsätze sind vorzugsweise als so genannte Minus-Planetenradsätze ausgeführt, deren jeweilige Planetenräder mit Sonnenrad und Hohlrad des jeweiligen Planetenradsatzes kämmen. Hinsichtlich der räumlichen Anordnung der vier Planetenradsätze im Gehäuse des Getriebes wird in einer vorteilhaften Ausgestaltung vorgeschlagen, alle vier Planetenradsätze koaxial zueinander nebeneinander anzuordnen, in einer Reihenfolge "erster, vierter, zweiter, dritter Planetenradsatz". Für eine Anwendung mit koaxial zueinander verlaufender Antriebs- und Äbtriebswelle ist es in diesem Fall zweckmäßig, dass der erste Planetenradsatz der dem Antrieb des Getriebes zugewandte Planetenradsatz der erfindungsgemäßen Planetenradsatzgruppe ist.

Die räumliche Anordnung der Schaltelemente der erfindungsgemäßen Mehrstufengetriebe innerhalb deren Getriebegehäuse ist im Prinzip nur durch die Abmessungen und die äußere Formgebung des Getriebegehäuses GG begrenzt. Zahlreiche Anregungen hinsichtlich der räumliche Anordnung und konstruktiver Ausgestaltung der Schaltelemente sind beispielsweise der gattungsgemäßen Patentanmeldung DE 102005002337.1 entnehmbar.

Durch die erfindungsgemäße Ausgestaltung der Mehrstufengetriebe ergeben sich insbesondere für Personenkraftwagen geeignete Übersetzungen mit großer Gesamtspreizung in harmonischer Gangabstufung, wodurch ein guter Fahrkomfort und eine signifikante Verbrauchsabsenkung erzielt werden.

Darüber hinaus wird mit den erfindungsgemäßen Mehrstufengetrieben durch eine geringe Anzahl an Schaltelementen, nämlich zwei Bremsen und drei Kupplungen, der Bauaufwand vergleichsweise gering. In vorteilhafter Weise ist es mit den erfindungsgemäßen Mehrstufengetrieben möglich, ein Anfahren mit einem hydrodynamischen Wandler, einer externen Anfahrkupplung oder auch mit sonstigen geeigneten externen Anfahrelementen durchzuführen. Es ist auch denkbar, den Anfahrvorgang mit einem im Getriebe integrierten Anfahrelement zu ermöglichen. Vorzugsweise eignet sich hierfür eine der beiden Bremsen, die im ersten und zweiten Vorwärtsgang und im Rückwärtsgang betätigt wird.

Darüber hinaus ergibt sich bei den erfindungsgemäßen Mehrstufengetrieben in allen Gängen ein guter Wirkungsgrad einerseits infolge geringer Schleppverluste, da in jedem Gang jeweils nur zwei Schaltelemente nicht im Eingriff sind, andererseits auch infolge geringer Verzahnungsverluste in den einfach aufgebauten Einzel-Planetenradsätzen.

Außerdem sind die erfindungsgemäßen Mehrstufengetriebe derart konzipiert, dass eine Anpassbarkeit an unterschiedliche Triebstrangausgestaltungen sowohl in Kraftflussrichtung als auch in räumlicher Hinsicht ermöglicht wird. So ist es beispielsweise ohne besondere konstruktive Maßnahmen möglich, Antrieb und Abtrieb des Getriebes wahlweise koaxial oder achsparallel zueinander anzuordnen.

Die Erfindung wird im Folgenden anhand der Zeichnungen beispielhaft näher erläutert. Gleiche bzw. vergleichbare Bauteile sind dabei auch mit gleichen Bezugszeichen versehen. Es zeigen:

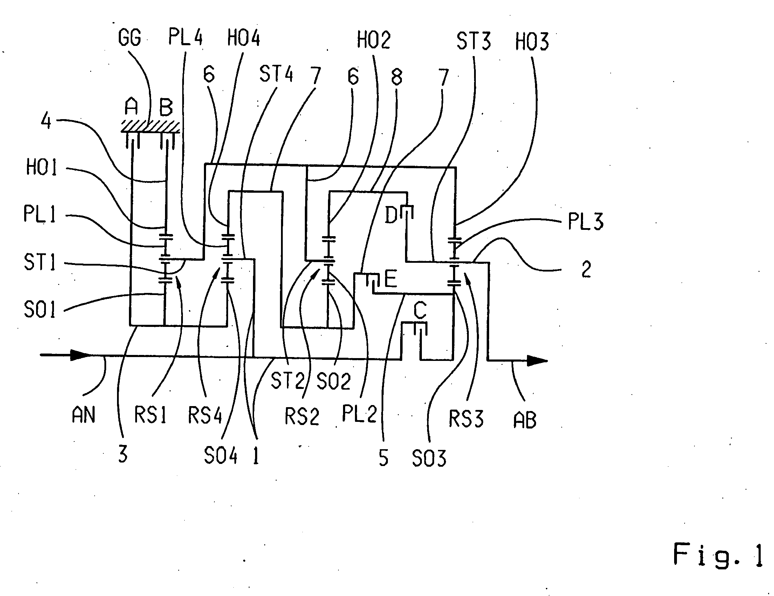

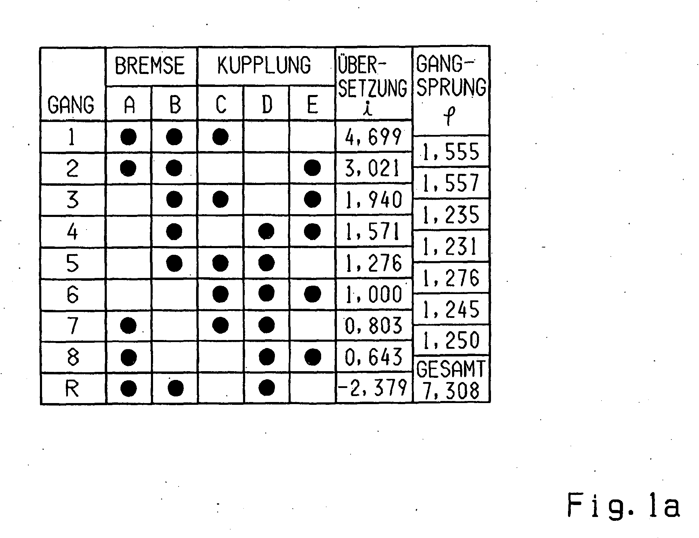

- Figur 1: eine schematische Darstellung eines Ausführungsbeispiels für ein Mehrstufengetriebe gemäß der ersten erfindungsge- mäßen Lösung;
- Figur 1 a: ein beispielhaftes Schaltschema für das Mehrstufengetriebe gemäß. Figur 1;
- Figur 2: eine schematische Darstellung eines Ausführungsbeispiels für ein Mehrstufengetriebe gemäß der zweiten erfindungs- gemäßen Lösung;
- Figur 2a: ein beispielhaftes Schaltschema für das Mehrstufengetriebe gemäß Figur 2;
- Figur 3: eine schematische Darstellung eines Ausführungsbeispiels für ein Mehrstufengetriebe gemäß der dritten erfindungsge- mäßen Lösung;
- Figur 3a: ein beispielhaftes Schaltschema für das Mehrstufengetriebe gemäß Figur 3;
- Figur 4: eine schematische Darstellung eines Ausführungsbeispiels für ein Mehrstufengetriebe gemäß der vierten erfindungsge- mäßen Lösung;
- Figur 4a: ein beispielhaftes Schaltschema für das Mehrstufengetriebe gemäß Figur 4;
- Figur 4b: eine beispielhafte Detailkonstruktion für das Mehrstufenge- triebe gemäß Figur 4;
- Figur 5: eine schematische Darstellung eines Ausführungsbeispiels für ein Mehrstufengetriebe gemäß der fünften erfindungsge- mäßen Lösung;
- Figur 5a: ein beispielhaftes Schaltschema für das Mehrstufengetriebe gemäß Figur 5;
- Figur 5b: eine erste beispielhafte Bauteilanordnungsvariante für das Mehrstufengetriebe gemäß Figur 5;
- Figur 5c: eine zweite beispielhafte Bauteilanordnungsvariante für das Mehrstufengetriebe gemäß Figur 5;
- Figur 6: eine schematische Darstellung eines Ausführungsbeispiels für ein Mehrstufengetriebe gemäß der sechsten erfindungs- gemäßen Lösung;
- Figur 6a: ein beispielhaftes Schaltschema für das Mehrstufengetriebe gemäß Figur 6;
- Figur 6b: eine erste beispielhafte Bauteilanordnungsvariante für das Mehrstufengetriebe gemäß Figur 6;
- Figur 6c: eine zweite beispielhafte Bauteilanordnungsvariante für das Mehrstufengetriebe gemäß Figur 6;
- Figur 6d: eine dritte beispielhafte Bauteilanordnungsvariante für das Mehrstufengetriebe gemäß Figur 6;
- Figur 7: eine schematische Darstellung eines Ausführungsbeispiels für ein Mehrstufengetriebe gemäß der siebten erfindungs- gemäßen Lösung;
- Figur 7a: ein beispielhaftes Schaltschema für das Mehrstufengetriebe gemäß Figur 7; und
- Figur 7b: eine beispielhafte Bauteilanordnungsvariante für das Mehr- stufengetriebe gemäß Figur 7.

Figur 1 zeigt ein Ausführungsbeispiel für ein Mehrstufengetriebe gemäß der ersten erfindungsgemäßen Lösung, in schematischer Darstellung. Das Getriebe umfasst eine Antriebswelle AN und eine Abtriebswelle AB, sowie vier Planetenradsätze RS1, RS2, RS3, RS4 und fünf Schaltelemente A, B, C, D, E, die alle in einem Gehäuse GG des Getriebes angeordnet sind. Alle vier Planetenradsätze RS1, RS2, RS3, RS4 sind als einfache Minus-Planetenradsätze ausgebildet und in diesem Ausführungsbeispiel in axialer Richtung in der Reihenfolge "RS1, RS4, RS2, RS3" koaxial hintereinander angeordnet. Ein Minus-Planetenradsatz weist bekanntlich Planetenräder auf, die mit Sonnen- und Hohlrad dieses Planetensatzes kämmen. Die Hohlräder der vier Planetenradsätze RS1, RS2, RS3, RS4 sind mit HO1, HO2, HO3 und HO4 bezeichnet, die Sonnenräder mit SO1, SO2, SO3 und SO4, die Planetenräder mit PL1, PL2, PL3 und PL4, und die Stege, an denen die genannten Planetenräder rotierbar gelagert sind, mit ST1, ST2, ST3 und ST4. Die Schaltelemente A und B sind als Bremsen ausgebildet, die im dargestellten Ausführungsbeispiel beide als reibschlüssig schaltbare Lamellenbremse ausgeführt sind, selbstverständlich in einer anderen Ausgestaltung auch als reibschlüssig schaltbare Bandbremse oder beispielsweise auch als formschlüssig schaltbare Klauen- oder Konusbremse ausgeführt sein können. Die Schaltelemente C, D und E sind als Kupplungen ausgebildet, die im dargestellten Ausführungsbeispiel alle als reibschlüssig schaltbare Lamellenkupplung ausgeführt sind, selbstverständlich in einer anderen Ausgestaltung beispielsweise auch als formschlüssig schaltbare Klauen- oder Konuskupplung ausgeführt sein können. Mit diesen fünf Schaltelementen A bis E ist ein selektives Schalten von acht Vorwärtsgängen und einem Rückwärtsgang realisierbar. Das erfindungsgemäße Mehrstufengetriebe weist insgesamt zumindest acht drehbare Wellen auf, die mit 1 bis 8 bezeichnet sind.

Hinsichtlich der kinematischen Kopplung der einzelnen Elemente der vier Planetenradsätze RS1, RS2, RS3, RS4 untereinander und zur Antriebs- und Abtriebswelle AN, AB ist bei dem Mehrstufengetriebe gemäß Figur 1 folgendes vorgesehen: Der Steg ST4 des vierten Planetenradsatzes RS4 und die Antriebswelle AN sind ständig miteinander verbunden und bilden die erste Welle 1 des Getriebes. Der Steg ST3 des dritten Planetenradsatzes RS3 und die Abtriebswelle AB sind ständig miteinander verbunden und bilden die zweite Welle 2 des Getriebes. Das Sonnenrad SO1 des ersten Planetenradsatzes RS1 und das Sonnenrad SO4 des vierten Planetenradsatzes RS4 sind ständig miteinander verbunden und bilden die dritte Welle 3 des Getriebes. Das Hohlrad HO1 des ersten Planetenradsatzes RS1 bildet die vierte Welle 4 des Getriebes. Das Sonnenrad SO3 des dritten Planetenradsatzes RS3 bildet die fünfte Welle 5 des Getriebes. Der Steg ST1 des ersten Planetenradsatzes RS1 und der Steg ST2 des zweiten Planetenradsatzes RS2 und das Hohlrad HO3 des dritten Planetenradsatzes RS3 sind ständig miteinander verbunden und bilden die sechste Welle 6 des Getriebes. Das Sonnenrad SO2 des zweiten Planetenradsatzes RS2 und das Hohlrad HO4 des vierten Planetenradsatzes RS4 sind ständig miteinander verbunden und bilden die siebte Welle 7 des Getriebes. Das Hohlrad HO2 des zweiten Planetenradsatzes RS2 schließlich bildet die achte Welle 8 des Getriebes.

Hinsichtlich der kinematischen Kopplung der fünf Schaltelemente A bis E an die so beschriebenen Wellen 1 bis 8 des Getriebes ist bei dem Mehrstufengetriebe gemäß Figur 1 folgendes vorgesehen: Die Bremse A als erstes Schaltelement ist im Kraftfluss zwischen der dritten Welle 3 und dem Gehäuse GG des Getriebes angeordnet. Die Bremse B als zweites Schaltelement ist im Kraftfluss zwischen der vierten Welle 4 und dem Gehäuse GG des Getriebes angeordnet. Die Kupplung C als drittes Schaltelement ist im Kraftfluss zwischen der ersten und der fünften Welle 1, 5 angeordnet. Die Kupplung D als viertes Schaltelement ist im Kraftfluss zwischen der zweiten und der achten Welle 2, 8 angeordnet. Die Kupplung E als fünftes Schaltelement schließlich ist im Kraftfluss zwischen der fünften und der siebten Welle 5, 7 angeordnet.

Der Unterschied zwischen den Radsatzschemata der gattungsgemäßen Patentanmeldung DE 102005002337.1 und der Figur 1 liegt somit in der kinematischen Anbindung des zweiten Planetenradsatzes RS2 an die anderen drei Planetenradsätze RS1, RS3, RS4 des Getriebes.

In dem in Figur 1 dargestellten Ausführungsbeispiel ist der erste Planetenradsatz RS1 der antriebsnahe Radsatz des Getriebes und der dritte Planetenradsatz RS3 der abtriebsnahe Radsatz des Getriebes, wobei Antriebswelle AN und Abtriebswelle AB beispielhaft koaxial zueinander angeordnet sind. Dem Fachmann ist leicht ersichtlich, dass dieses Getriebe ohne besonderen Aufwand derart modifizierbar ist, dass Antriebs- und Abtriebswelle nicht mehr koaxial zueinander angeordnet sind, beispielsweise achsparallel oder winklig zueinander. Bei einer derartigen Anordnung wird der Fachmann bei Bedarf auch den Antrieb des Getriebes nahe dem dritten Planetenradsatz RS3, also auf der dem ersten Planetenradsatz RS1 abgewandten Seite des dritten Planetenradsatzes RS3 anordnen.

Im Prinzip kann die räumliche Anordnung der Schaltelemente des in Figur 1 dargestellten Ausführungsbeispiels eines erfindungsgemäßen Mehrstufengetriebes innerhalb des Getriebes beliebig sein und wird nur durch die Abmessungen und die äußere Formgebung des Getriebegehäuses GG begrenzt.

In dem in Figur 1 dargestellten Ausführungsbeispiel sind die beiden Bremsen A, B räumlich gesehen im Bereich des hier antriebsnahen ersten Planetenradsatzes RS1 angeordnet, dabei axial nebeneinander, wobei die kinematische Anbindung der beiden Bremsen A, B an die beiden Planetenradsätzen RS4 und RS1 bedingt, dass die Bremse B näher am zweiten Planetenradsatz RS2 angeordnet-ist als die Bremse A, bzw. dass die Bremse A näher am Antrieb des Getriebes angeordnet ist als die Bremse B. Räumlich gesehen ist die Bremse B zumindest teilweise in einem Bereich radial über dem ersten Planetenradsatz RS1 angeordnet und die Bremse A entsprechend auf der dem vierten Planetenradsatz RS4 abgewandten (antriebsnahen) Seite des ersten Planetenradsatzes RS1. Selbstverständlich wird der Fachmann diese beispielhafte räumliche Anordnung der beiden Bremsen A, B bei Bedarf modifizierten. So kann die Bremse A beispielsweise auch zumindest teilweise radial über dem ersten Planetenradsatz RS1 und die Bremse B zumindest teilweise radial über dem vierten Planetenradsatz RS4 angeordnet sein. In noch einer anderen Ausgestaltung können die beiden Bremsen A, B beispielsweise auch in radial übereinander axial angrenzend an den ersten Planetenradsatz RS1 auf dessen dem vierten Planetenradsatz RS4 abgewandten Seite angeordnet sein, wobei dann die Bremse B zweckmäßigerweise auf einem größeren Durchmesser angeordnet ist als die Bremse A.

Wie aus Figur 1 weiterhin ersichtlich, sind die drei Kupplungen C, D und E räumlich gesehen in einem Bereich axial zwischen dem zweiten und dritten Planetenradsatz RS2, RS3 angeordnet. Dabei ist die Kupplung E benachbart zum zweiten Planetenradsatz RS2 und die Kupplung D benachbart zum dritten Planetenradsatz RS3 angeordnet. Die Kupplung C ist räumlich gesehen beispielhaft zumindest teilweise radial unterhalb des Lamellenpaketes der Kupplung D angeordnet. In einer anderen Ausgestaltung kann die Kupplung C auch zumindest teilweise radial unterhalb des Lamellenpaketes der Kupplung E angeordnet sein. In noch einer anderen Ausgestaltung kann die Kupplung C beispielsweise aber auch axial zwischen den beiden Kupplungen D, E angeordnet sein, wobei dann alle drei Kupplungen D, C, E vorzugsweise auf gleichem oder zumindest ähnlichen Durchmesser angeordnet sind. In einer weiteren Ausgestaltung kann die Kupplung C aber auch auf der dem zweiten Planetenradsatz RS2 abgewandten Seite des dritten Planetenradsatzes RS3 angeordnet sein. Weiterhin kann die Kupplung C auch in einem Bereich axial zwischen dem vierten und zweiten Planetenradsatz RS4, RS2 angeordnet sein, dann vorzugsweise benachbart zum bzw. axial angrenzend an den vierten Planetenradsatz RS4.

Entsprechend der räumlichen Anordnung der vier Radsätze in axialer Richtung gesehenen in der Folge "RS1, RS4, RS2, RS3" in Verbindung mit der in Figur 1 dargestellten räumlichen Anordnung der fünf Schaltelemente A bis E verläuft die erste Welle 1 des Getriebes abschnittsweise zentrisch innerhalb der dritten Welle 3, abschnittsweise zentrisch innerhalb der siebten Welle 7 und abschnittsweise zentrisch innerhalb der fünften Welle 5. Dabei verläuft die fünfte Welle 5 ihrerseits abschnittsweise zentrisch innerhalb der achten Welle 8 und übergreift in ihrem axialen Verlauf die Kupplung C. Die achte Welle 8 wiederum übergreift in ihrem axialen Verlauf die Kupplung E. Weiterhin übergreift die sechste Welle 6 in ihrem axialen Verlauf den vierten Planetenradsatz RS4, die Welle 7, den zweiten Planetenradsatz RS2, die Welle 8 und die Kupplung D und somit auch die beiden Kupplungen E und C vollständig. Der erste, vierte und zweite Planetenradsatz RS1, RS4, RS2 wird also nur von der Welle 1 bzw. der Antriebswelle AN in axialer Richtung zentrisch durchgriffen. Die Kupplung C ist zumindest weitgehend innerhalb eines Zylinderraums angeordnet, der durch einen als Außenlamellenträger für diese Kupplung C ausgebildeten Abschnitt der Welle 1 gebildet wird. Die Kupplung E ist zumindest weitgehend innerhalb eines Zylinderraums angeordnet, der durch einen als Außenlamellenträger für diese Kupplung E ausgebildeten Abschnitt der Welle 7 gebildet wird. Die Kupplung D ist zumindest teilweise innerhalb eines Zylinderraums angeordnet, der durch die Welle 8 gebildet wird. Anderseits sind die Kupplungen D, C, E auch innerhalb eines durch die Welle 6 gebildeten Zylinderraums angeordnet, die Kupplung E innerhalb eines durch die Welle 8 gebildeten Zylinderraums und die Kupplung C auch innerhalb eines durch die Welle 5 gebildeten Zylinderraums.

In Figur 1a ist ein Schaltschema des erfindungsgemäßen Mehrstufengetriebes gemäß Figur 1 dargestellt. In jedem Gang sind drei Schaltelemente geschlossen und zwei Schaltelemente offen. Neben der Schaltlogik können dem Schaltschema auch beispielhafte Werte für die jeweiligen Übersetzungen i der einzelnen Gangstufen und die daraus zu bestimmenden Stufensprüngen entnommen werden. Die angegebenen Übersetzungen i ergeben sich aus den (typischen) Standgetriebeübersetzungen der vier Planetensätze RS1, RS2, RS3, RS4 von minus 1,60, minus 3,70, minus 3,70 und minus 1,80. Des weiteren kann dem Schaltschema entnommen werden, dass bei sequentieller Schaltweise Doppelschaltungen bzw. Gruppenschaltungen vermieden werden, da zwei in der Schaltlogik benachbarte Gangstufen zwei Schaltelemente gemeinsam benutzen. Der sechste Gang ist als direkter Gang ausgebildet.

Der erste Vorwärtsgang ergibt sich durch Schließen der Bremsen A und B und der Kupplung C, der zweite Vorwärtsgang durch Schließen der Bremsen A und B und der Kupplung E, der dritte Vorwärtsgang durch Schließen der Bremse B und der Kupplungen C und E, der vierte Vorwärtsgang durch Schließen der Bremse B und der Kupplungen D und E, der fünfte Vorwärtsgang durch Schließen der Bremse B und der Kupplungen C und D, der sechste Vorwärtsgang durch Schließen der Kupplungen C, D und E, der siebte Vorwärtsgang durch Schließen der Bremse A und der Kupplungen C und D, sowie der achte Vorwärtsgang durch Schließen der Bremse A und der Kupplungen D und E. Wie aus dem Schaltschema weiter ersichtlich, ergibt sich der Rückwärtsgang durch Schließen der Bremsen A und B und der Kupplung D.

Gemäß der Erfindung ist ein Anfahren des Kraftfahrzeugs mit einem im Getriebe integrierten Schaltelement möglich. Hierbei ist ein Schaltelement besonders geeignet, das sowohl im ersten Vorwärtsgang als auch im Rückwärtsgang benötigt wird, hier also vorzugsweise die Bremse A oder die Bremse B. In vorteilhafter Weise werden diese beiden Bremsen A, B auch im zweiten Vorwärtsgang benötigt. Wird die Bremse B als im Getriebe integriertes Anfahrelement genutzt, so ist damit sogar ein Anfahren in den ersten fünf Vorwärtsgängen und dem Rückwärtsgang möglich. Wie aus dem Schaltschema ersichtlich, kann zum Anfahren in Vorwärtsfahrtrichtung auch die Kupplung C und zum Anfahren in Rückwärtsfahrtrichtung die Kupplung D als getriebeinternes Anfahrelement verwendet werden.

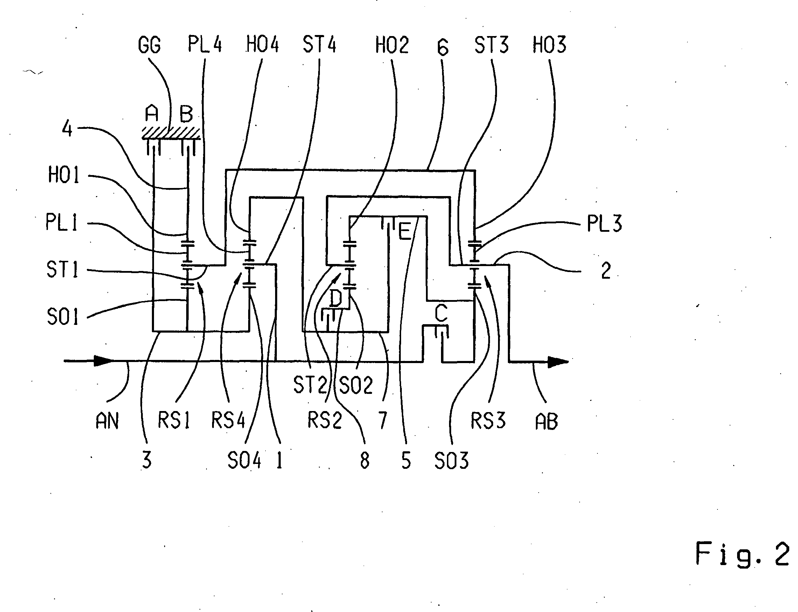

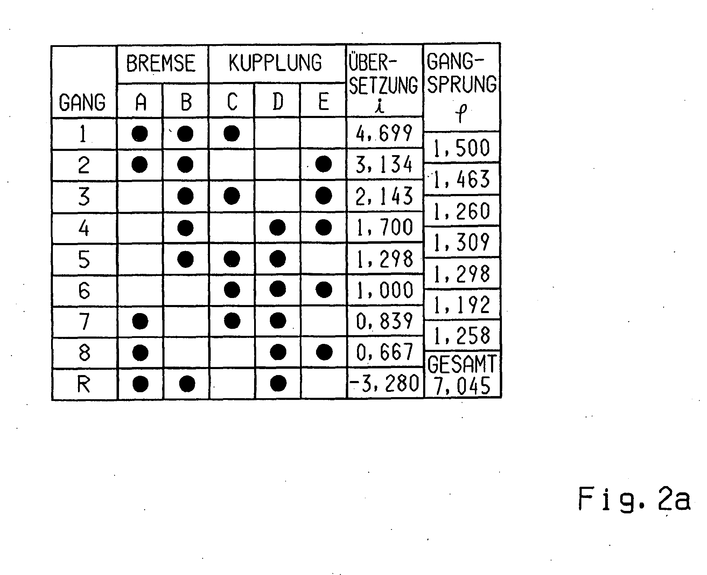

Figur 2 zeigt nun ein Ausführungsbeispiel für ein Mehrstufengetriebe gemäß der zweiten erfindungsgemäßen Lösung, wiederum in schematischer Darstellung. Vergleichbar zu Figur 1, weist das Getriebe eine Antriebswelle AN und eine Abtriebswelle AB, in einem Gehäuse GG des Getriebes angeordnete vier Planetenradsätze RS1, RS2, RS3, RS4 und fünf Schaltelemente A, B, C, D, E, sowie insgesamt zumindest acht drehbare Wellen 1, 2, 3, 4, 5, 6, 7, 8 auf. Alle vier Planetenradsätze RS1, RS2, RS3, RS4 sind als einfache- Minus-Planetenradsätze ausgebildet und in diesem Ausführungsbeispiel in axialer Richtung in der Reihenfolge "RS1, RS4, RS2, RS3" koaxial hintereinander angeordnet. Die Schaltelemente A und B sind als Bremsen ausgebildet, beispielhaft ausgeführt als reibschlüssig schaltbare Lamellenbremsen. Die Schaltelemente C, D und E sind als Kupplungen ausgebildet, beispielhaft ausgeführt als reibschlüssig schaltbare Lamellenkupplungen. Mit diesen fünf Schaltelementen A bis E ist ein selektives Schalten von acht Vorwärtsgängen und einem Rückwärtsgang realisierbar.

Hinsichtlich der kinematischen Kopplung der einzelnen Elemente der vier Planetenradsätze RS1, RS2, RS3, RS4 untereinander und zur Antriebs- und Abtriebswelle AN, AB ist bei dem Mehrstufengetriebe gemäß Figur 2 folgendes vorgesehen: Ein Steg ST4 des vierten Planetenradsatzes RS4 und die Antriebswelle AN sind ständig miteinander verbunden und bilden die erste Welle 1 des Getriebes. Ein Steg ST2 des zweiten Planetenradsatzes RS2 und ein Steg ST3 des dritten Planetenradsatzes RS3 und die Abtriebswelle AB sind ständig miteinander verbunden und bilden die zweite Welle 2 des Getriebes. Ein Sonnenrad SO1 des ersten Planetenradsatzes RS1 und ein Sonnenrad SO4 des vierten Planetenradsatzes RS4 sind ständig miteinander verbunden und bilden die dritte Welle 3 des Getriebes. Ein Hohlrad HO1 des ersten Planetenradsatzes RS1 bildet die vierte Welle 4 des Getriebes. Ein Hohlrad HO2 des zweiten Planetenradsatzes RS2 und ein Sonnenrad SO3 des dritten Planetenradsatzes RS3 sind ständig miteinander verbunden und bilden die fünfte Welle 5 des Getriebes. Ein Steg ST1 des ersten Planetenradsatzes RS1 und ein Hohlrad H03 des dritten Planetenradsatzes RS3 sind ständig miteinander verbunden und bilden die sechste Welle 6 des Getriebes. Ein Hohlrad HO4 des vierten Planetenradsatzes RS4 bildet die siebte Welle 7 des Getriebes. Ein Sonnenrad S02 des zweiten Planetenradsatzes RS2 schließlich bildet die achte Welle 8 des Getriebes.

Hinsichtlich der kinematischen Kopplung der fünf Schaltelemente A bis E an die so beschriebenen Wellen 1 bis 8 des Getriebes ist bei dem Mehrstufengetriebe gemäß Figur 2 folgendes vorgesehen: Die Bremse A ist im Kraftfluss zwischen der dritten Welle 3 und dem Getriebegehäuse GG, die Bremse B im Kraftfluss zwischen der vierten Welle 4 und dem Getriebegehäuse GG, die Kupplung C im Kraftfluss zwischen der ersten und fünften Welle 1, 5, die Kupplung D im Kraftfluss zwischen der siebten und achten Welle 7, 8 und die Kupplung E im Kraftfluss zwischen der fünften und siebten Welle 5, 7 angeordnet.

Der Unterschied zwischen den Radsatzschemata der gattungsgemäßen Patentanmeldung DE 102005002337.1 und Figur 1 und Figur 2 liegt somit wiederum in der kinematischen Anbindung des zweiten Planetenradsatzes RS2 die anderen drei Planetenradsätze RS1, RS3, RS4 des Getriebes.

Im Prinzip kann die räumliche Anordnung der Schaltelemente des in Figur 2 dargestellten Ausführungsbeispiels eines erfindungsgemäßen Mehrstufengetriebes innerhalb des Getriebes beliebig sein und wird nur durch die Abmessungen und die äußere Formgebung des Getriebegehäuses GG begrenzt. So wurde in Figur 2 die räumliche Anordnung der beiden Bremsen A, B beispielhaft aus Figur 1 übernommen. Entsprechend sind die diesbezüglich im Rahmen der Beschreibung der Figur 1 getroffenen Aussagen sinngemäß auch auf Figur 2 übertragbar.

Wie aus Figur 2 weiterhin ersichtlich, ist die Kupplung C ähnlich wie in Figur 1 räumlich gesehen in einem Bereich axial zwischen dem zweiten und dritten Planetenradsatz RS2, RS3 angeordnet, dabei benachbart zum dritten Planetenradsatz RS3. Auch die Kupplung E ist räumlich gesehen in einem Bereich axial zwischen dem zweiten und dritten Planetenradsatz RS2, RS3 angeordnet, dabei benachbart zum zweiten Planetenradsatz RS2. Selbstverständlich ist die dargestellte konstruktive Ausbildung der Kupplungen C, E wieder als beispielhaft anzusehen. So kann in einer anderen Ausgestaltung beispielsweise vorgesehen sein, dass die beiden Kupplungen C, D axial nebeneinander auf gleichem oder zumindest ähnlichen Durchmessen angeordnet sind, oder dass die Kupplung C räumlich gesehen zumindest teilweise radial unter einem Lamellenpaket des Kupplung E angeordnet ist. Wie in Figur 1 kann die Kupplung C in noch einer anderen Ausgestaltung im Wesentlichen auch auf der Seite des dritten Planetenradsatzes RS3 angeordnet sein, die dem zweiten Planetenradsatz RS2 bzw. der Kupplung E gegenüberliegt, oder auch in einem Bereich axial zwischen dem vierten und zweiten Planetenradsatz RS4, RS2.

Wie aus Figur 2 weiterhin ersichtlich, ist die Kupplung D räumlich gesehen in einem Bereich axial zwischen dem vierten und zweiten Planetenradsatz RS4, RS2 angeordnet, dabei benachbart zum zweiten Planetenradsatz RS2. Selbstverständlich ist auch hier die dargestellte konstruktive Ausbildung der Kupplung D wieder als beispielhaft anzusehen. So kann in einer anderen Ausgestaltung beispielsweise vorgesehen sein, dass die Kupplung D auf einem größeren Durchmesser als dargestellt angeordnet ist, ein Lamellenpaket der Kupplung D beispielsweise auf einem Durchmesser ähnlich dem Hohlrad H02 des zweiten Planetenradsatzes RS2. In noch einer anderen Ausgestaltung kann die Kupplung D auch räumlich gesehen in einem Bereich axial zwischen dem zweiten und dritten Planetenradsatz RS2, RS3 angeordnet sein, dann vorzugsweise unmittelbar axial angrenzend an den zweiten Planetenradsatz RS2 und im Wesentlichen axial zwischen RS2 und Kupplung E.

Entsprechend der räumlichen Anordnung der vier Radsätze in axialer Richtung gesehenen in der Folge "RS1, RS4, RS2, RS3" in Verbindung mit der in Figur 2 dargestellten räumlichen Anordnung der fünf Schaltelemente A bis E verläuft die erste Welle 1 des Getriebes abschnittsweise zentrisch innerhalb der dritten Welle 3, abschnittsweise zentrisch innerhalb der siebten Welle 7 und abschnittsweise zentrisch innerhalb der fünften Welle 5. Dabei verläuft die fünfte Welle 5 ihrerseits abschnittsweise zentrisch innerhalb eines Abschnitts der zweiten Welle 2 und übergreift in ihrem axialen Verlauf die Kupplung C. Der genannte Abschnitt der Welle 2 wiederum übergreift in seinem axialen Verlauf die Kupplung E vollständig. Weiterhin übergreift die sechste Welle 6 in ihrem axialen Verlauf den vierten Planetenradsatz RS4, die Welle 7, die Kupplung D, den zweiten Planetenradsatz RS2 und den genannten Abschnitt der Welle 2 und somit auch die Welle 5 und die beiden Kupplungen E und C vollständig. Der erste und vierte Planetenradsatz RS1, RS4 wird also nur von der Welle 1 bzw. der Antriebswelle AN in axialer Richtung zentrisch durchgriffen, während der zweite Planetenradsatz RS2 von zwei Wellen - nämlich von Welle 1 bzw. Antriebswelle und Welle 7 - in axialer Richtung zentrisch durchgriffen wird. Die Kupplung D ist zumindest weitgehend innerhalb eines Zylinderraums angeordnet, der durch die Welle 8 gebildet wird. Weiterhin ist die Kupplung E innerhalb eines durch die Welle 5 gebildeten Zylinderraums und die Kupplung C zumindest weitgehend innerhalb eines durch die Welle 1 gebildeten Zylinderraums angeordnet. Andererseits sind die Kupplungen D, C, E auch innerhalb eines durch die Welle 6 gebildeten Zylinderraums angeordnet, die Kupplungen C, E auch innerhalb eines durch die Welle 2 gebildeten Zylinderraums und die Kupplung C auch innerhalb eines durch die Welle 5 gebildeten Zylinderraumes.

In Figur 2a ist ein Schaltschema des erfindungsgemäßen Mehrstufengetriebes gemäß Figur 2 dargestellt. In jedem Gang sind drei Schaltelemente geschlossen und zwei Schaltelemente offen, wobei die Schaltlogik identisch ist zu Figur 1a. Neben dieser Schaltlogik, können dem Schaltschema auch beispielhafte Werte für die jeweiligen Übersetzungen i der einzelnen Gangstufen und die daraus zu bestimmenden Stufensprünge φ entnommen werden. Die angegebenen Übersetzungen i ergeben sich aus den (typischen) Standgetriebeübersetzungen der vier Planetensätze RS1, RS2, RS3, RS4 von minus 2,10, minus 1,60, minus 3,70 und minus 2,00.

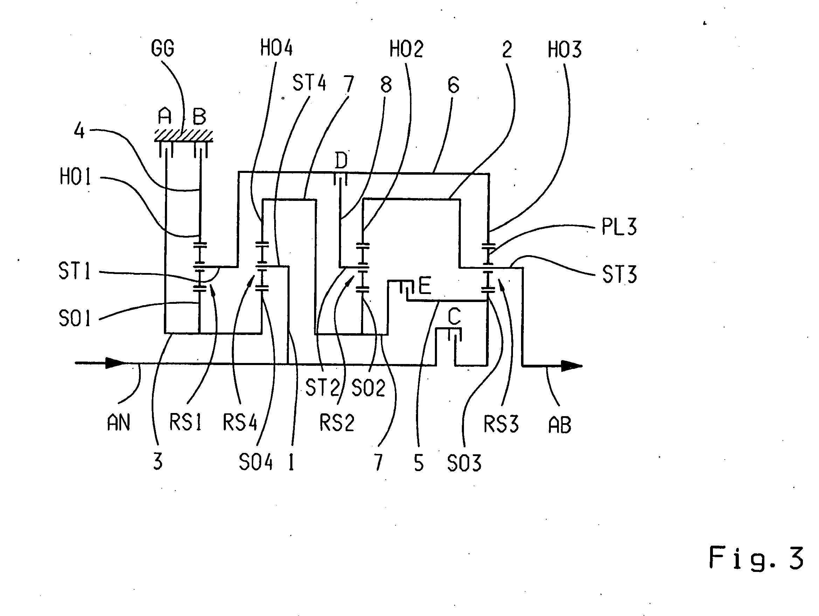

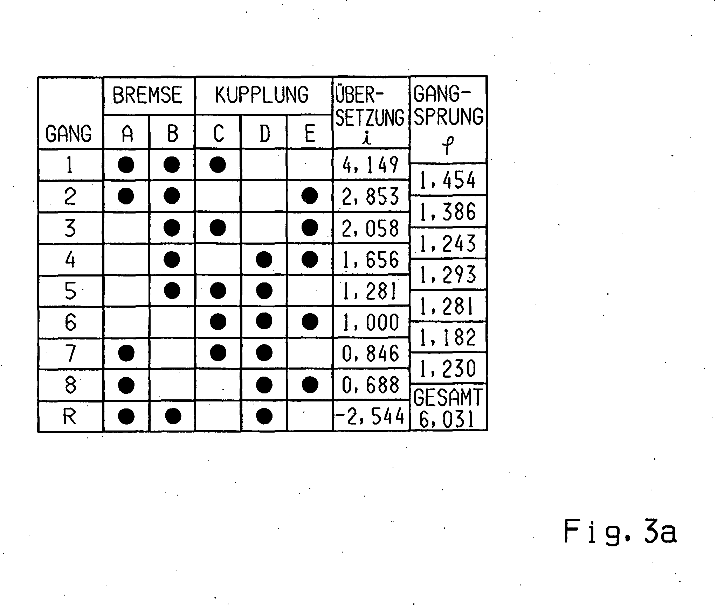

Figur 3 zeigt nun ein Ausführungsbeispiel für ein Mehrstufengetriebe gemäß der dritten erfindungsgemäßen Lösung, wiederum in schematischer Darstellung. Vergleichbar zu Figur 1, weist das Getriebe eine Antriebswelle AN und eine Abtriebswelle AB, in einem Gehäuse GG des Getriebes angeordnete vier Planetenradsätze RS1, RS2, RS3, RS4 und fünf Schaltelemente A, B, C, D, E, sowie insgesamt zumindest acht drehbare Wellen 1, 2, 3, 4, 5, 6, 7, 8 auf. Alle vier Planetenradsätze RS1, RS2, RS3, RS4 sind als einfache Minus-Planetenradsätze ausgebildet und in diesem Ausführungsbeispiel in axialer Richtung in der Reihenfolge "RS1, RS4, RS2, RS3" koaxial hintereinander angeordnet. Die Schaltelemente A und B sind als Bremsen ausgebildet, beispielhaft ausgeführt als reibschlüssig schaltbare Lamellenbremsen. Die Schaltelemente C, D und E sind als Kupplungen ausgebildet, beispielhaft ausgeführt als reibschlüssig schaltbare Lamellenkupplungen. Mit diesen fünf Schaltelementen A bis E ist ein selektives Schalten von acht Vorwärtsgängen und einem Rückwärtsgang realisierbar.

Hinsichtlich der kinematischen Kopplung der einzelnen Elemente der vier Planetenradsätze RS1, RS2, RS3, RS4 untereinander und zur Antriebs- und Abtriebswelle AN, AB ist bei dem Mehrstufengetriebe gemäß Figur 3 folgendes vorgesehen: Ein Steg ST4 des vierten Planetenradsatzes RS4 und die Antriebswelle AN sind ständig miteinander verbunden und bilden die erste Welle 1 des Getriebes. Ein Hohlrad H02 des zweiten Planetenradsatzes RS2 und ein Steg ST3 des dritten Planetenradsatzes RS3 und die Abtriebswelle AB sind ständig miteinander verbunden und bilden die zweite Welle 2 des Getriebes. Ein Sonnenrad SO1 des ersten Planetenradsatzes RS1 und ein Sonnenrad S04 des vierten Planetenradsatzes RS4 sind ständig miteinander verbunden und bilden die dritte Welle 3 des Getriebes. Ein Hohlrad HO1 des ersten Planetenradsatzes RS1 bildet die vierte Welle 4 des Getriebes. Ein Sonnenrad S03 des dritten Planetenradsatzes RS3 bildet die fünfte Welle 5 des Getriebes. Ein Steg ST1 des ersten Planetenradsatzes RS1 und ein Hohlrad H03 des dritten Planetenradsatzes RS3 sind ständig miteinander verbunden und bilden die sechste Welle 6 des Getriebes. Ein Sonnenrad S02 des zweiten Planetenradsatzes RS2 und ein Hohlrad H04 des vierten Planetenradsatzes RS4 sind ständig miteinander verbunden und bilden die siebte Welle 7 des Getriebes. Ein Steg ST2 des zweiten Planetenradsatzes RS2 schließlich bildet die achte Welle 8 des Getriebes.

Hinsichtlich der kinematischen Kopplung der fünf Schaltelemente A bis E an die so beschriebenen Wellen 1 bis 8 des Getriebes ist bei dem Mehrstufengetriebe gemäß Figur 3 folgendes vorgesehen: Die Bremse A ist im Kraftfluss zwischen der dritten Welle 3 und dem Getriebegehäuse GG, die Bremse B im Kraftfluss zwischen der vierten Welle 4 und dem Getriebegehäuse GG, die Kupplung C im Kraftfluss zwischen der ersten und fünften Welle 1, 5, die Kupplung D im Kraftfluss zwischen der sechsten und achten Welle 6, 8 und die Kupplung E im Kraftfluss zwischen der fünften und siebten Welle 5, 7 angeordnet.

Der Unterschied zwischen den Radsatzschemata der gattungsgemäßen Patentanmeldung DE 102005002337.1 und der Figuren 1 bis 3 liegt somit in der kinematischen Anbindung des zweiten Planetenradsatzes RS2 an die anderen drei Planetenradsätze RS1, RS3, RS4 des Getriebes.

Im Prinzip kann die räumliche Anordnung der Schaltelemente des in Figur 3 dargestellten Ausführungsbeispiels eines erfindungsgemäßen Mehrstufengetriebes innerhalb des Getriebes beliebig sein und wird nur durch die Abmessungen und die äußere Formgebung des Getriebegehäuses GG begrenzt. So wurde in Figur 3 die räumliche Anordnung der beiden Bremsen A, B und der zwei Kupplungen C, E beispielhaft aus Figur 1 übernommen; entsprechend sind die diesbezüglich im Rahmen der Beschreibung der Figur 1 getroffenen Aussagen sinngemäß auch auf Figur 3 übertragbar.

Wie aus Figur 3 weiterhin ersichtlich, ist die Kupplung D räumlich gesehen in einem Bereich axial zwischen dem vierten und zweiten Planetenradsatz RS4, RS2 angeordnet, dabei benachbart zum zweiten Planetenradsatz RS2 auf einem vergleichsweise großen Durchmesser. Selbstverständlich ist auch hier die dargestellte konstruktive Ausbildung der Kupplung D wieder als beispielhaft anzusehen. So kann in einer anderen Ausgestaltung beispielsweise vorgesehen sein, dass die Kupplung D - insbesondere deren Lamellenpaket räumlich gesehen zumindest teilweise in einem Bereich radial über dem zweiten oder vierten Planetenradsatz RS2, RS4 angeordnet ist. In noch einer anderen Ausgestaltung kann die Kupplung D aber auch räumlich gesehen im Wesentlichen in einem Bereich axial zwischen dem ersten und vierten Planetenradsatz RS1, RS4 angeordnet sein, dann vorzugsweise unmittelbar axial angrenzend an den ersten Planetenradsatz RS1. In einer weiteren Ausgestaltung kann die Kupplung D beispielsweise auch im Wesentlichen in einem Bereich axial zwischen dem zweiten und dritten Planetenradsatz RS2, RS3 angeordnet sein, dann vorzugsweise unmittelbar axial angrenzend an den dritten Planetenradsatz RS3.

Entsprechend der räumlichen Anordnung der vier Radsätze in axialer Richtung gesehenen in der Folge "RS1, RS4, RS2, RS3" in Verbindung mit der in Figur 3 dargestellten räumlichen Anordnung der fünf Schaltetemente A bis E verläuft die erste Welle 1 des Getriebes abschnittsweise zentrisch innerhalb der dritten Welle 3, abschnittsweise zentrisch innerhalb der siebten Welle 7 und abschnittsweise zentrisch innerhalb der fünften Welle 5. Dabei verläuft die fünfte Welle 5 ihrerseits abschnittsweise zentrisch innerhalb eines Abschnitts der zweiten Welle 2 und übergreift in ihrem axialen Verlauf die Kupplung C. Der genannte Abschnitt der Welle 2 wiederum übergreift in seinem axialen Verlauf die Kupplung E vollständig. Weiterhin übergreift die sechste Welle 6 in ihrem axialen Verlauf den vierten Planetenradsatz RS4, die Welle 7, die Kupplung D, den zweiten Planetenradsatz RS2, den genannten Abschnitt der Welle 2 und somit auch die Welle 5 und die beiden Kupplungen E und C vollständig. Der erste, vierte und zweite Planetenradsatz RS1, RS4, RS2 wird also nur von der Welle 1 bzw. der Antriebswelle AN in axialer Richtung zentrisch durchgriffen. Die Kupplung D ist innerhalb eines Zylinderraums angeordnet, der durch die Welle 6 gebildet wird. Weiterhin ist die Kupplung E zumindest weitgehend innerhalb eines durch die Welle 7 gebildeten Zylinderraums und die Kupplung C zumindest weitgehend innerhalb eines durch die Welle 1 gebildeten Zylinderraums angeordnet. Andererseits sind die Kupplungen C, E auch innerhalb eines durch die Welle 6 gebildeten Zylinderraums und auch innerhalb eines durch die Welle 2 gebildeten Zylinderraums angeordnet. Weiterhin ist die Kupplung C auch innerhalb eines durch die Welle 5 gebildeten Zylinderraums angeordnet.

In Figur 3a ist ein Schaltschema des erfindungsgemäßen Mehrstufengetriebes gemäß Figur 3 dargestellt. In jedem Gang sind drei Schaltelemente geschlossen und zwei Schaltelemente offen, wobei die Schaltlogik identisch ist zu Figur 1a. Neben dieser Schaltlogik, können dem Schaltschema auch beispielhafte Werte für die jeweiligen Übersetzungen i der einzelnen Gangstufen und die daraus zu bestimmenden Stufensprüngen φ entnommen werden. Die angegebenen Übersetzungen i ergeben sich aus den (typischen) Standgetriebeübersetzungen der vier Planetensätze RS1, RS2, RS3, RS4 von minus 2,10, minus 3,70, minus 3,15 und minus 2,20.

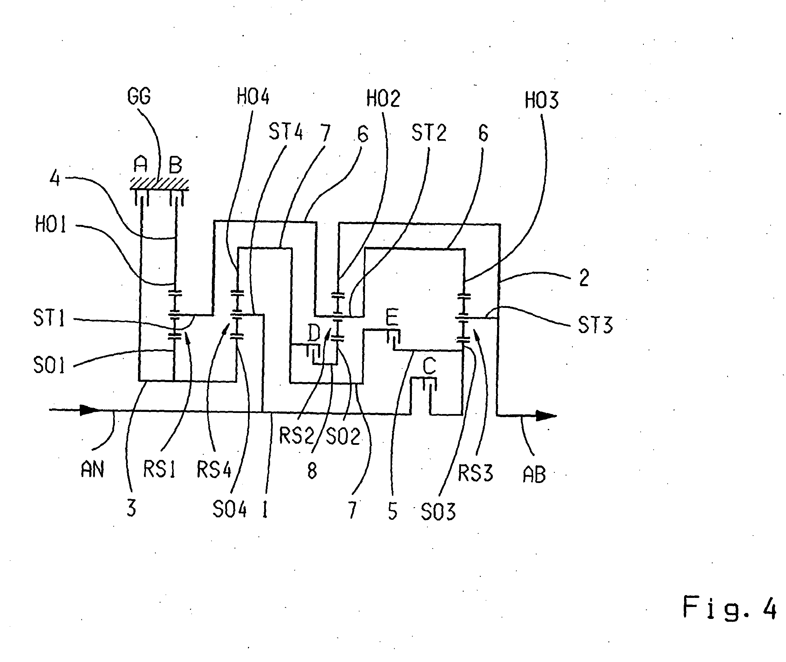

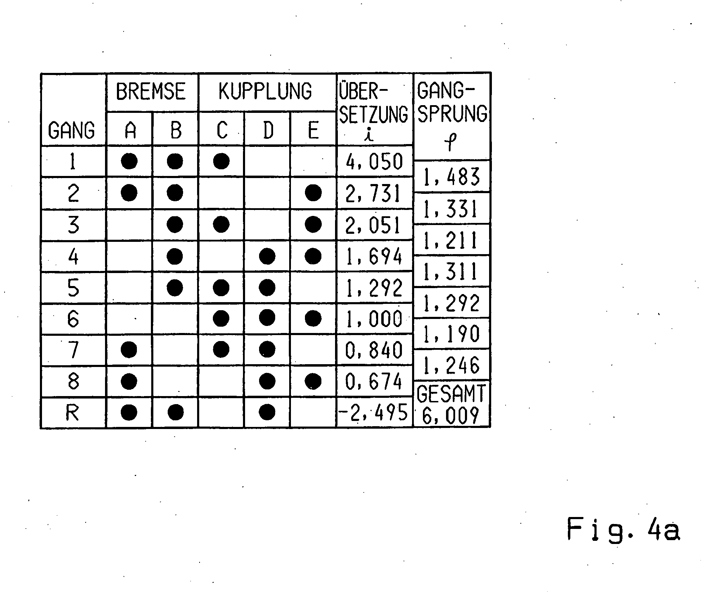

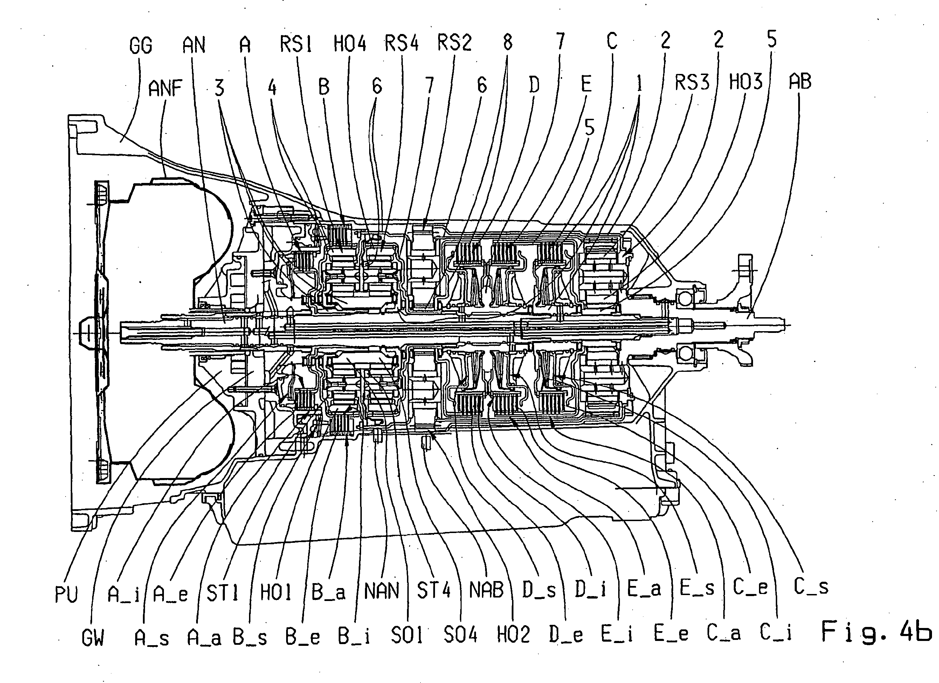

Figur 4 zeigt nun ein Ausführungsbeispiel für ein Mehrstufengetriebe gemäß der vierten erfindungsgemäßen Lösung, wiederum in schematischer Darstellung. Vergleichbar zu Figur 1, weist das Getriebe eine Antriebskette AN und eine Abtriebswelle AB, in einem Gehäuse GG des Getriebes angeordnete vier Planetenradsätze RS1, RS2, RS3, RS4 und fünf Schaltelemente A, B, C, D, E, sowie insgesamt zumindest acht drehbare Wellen 1, 2, 3, 4, 5, 6, 7, 8 auf. Alle vier Planetenradsätze RS1, RS2, RS3, RS4 sind als einfache Minus-Planetenradsätze ausgebildet und in diesem Ausführungsbeispiel in axialer Richtung in der Reihenfolge "RS1, RS4, RS2, RS3" koaxial hintereinander angeordnet. Die Schaltelemente A und B sind als Bremsen ausgebildet, beispielhaft ausgeführt als reibschlüssig schaltbare Lamellenbremsen. Die Schaltelemente C, D und E sind als Kupplungen ausgebildet, beispielhaft ausgeführt als reibschlüssig schaltbare Lamellenkupplungen. Mit diesen fünf Schaltelementen A bis E ist ein selektives Schalten von acht Vorwärtsgängen und einem Rückwärtsgang realisierbar.

Hinsichtlich der kinematischen Kopplung der einzelnen Elemente der vier Planetenradsätze RS1, RS2, RS3, RS4 untereinander und zur Antriebs- und Abtriebswelle AN, AB ist bei dem Mehrstufengetriebe gemäß Figur 4 folgendes vorgesehen: Ein Steg ST4 des vierten Planetenradsatzes RS4 und die Antriebswelle AN sind ständig miteinander verbunden und bilden die erste Welle 1 des Getriebes. Ein Hohlrad H02 des zweiten Planetenradsatzes RS2 und ein Steg ST3 des dritten Planetenradsatzes RS3 und die Abtriebswelle AB sind ständig miteinander verbunden und bilden die zweite Welle 2 des Getriebes. Ein Sonnenrad SO1 des ersten Planetenradsatzes RS1 und ein Sonnenrad S04 des vierten Planetenradsatzes RS4 sind ständig miteinander verbunden und bilden die dritte Welle 3 des Getriebes. Ein Hohlrad HO1 des ersten Planetenradsatzes RS1 bildet die vierte Welle 4 des Getriebes. Ein Sonnenrad SO3 des dritten Planetenradsatzes RS3 bildet die fünfte Welle 5 des Getriebes. Ein Steg ST1 des ersten Planetenradsatzes RS1 und ein Steg ST2 des zweiten Planetenradsatzes RS2 und ein Hohlrad H03 des dritten Planetenradsatzes RS3 sind ständig miteinander verbunden und bilden die sechste Welle 6 des Getriebes. Ein Hohlrad H04 des vierten Planetenradsatzes RS4 bildet die siebte Welle 7 des Getriebes. Ein Sonnenrad S02 des zweiten Planetenradsatzes RS2 schließlich bildet die achte Welle 8 des Getriebes.

Hinsichtlich der kinematischen Kopplung der fünf Schaltelemente A bis E an die so beschriebenen Wellen 1 bis 8 des Getriebes ist bei dem Mehrstufengetriebe gemäß Figur 4 folgendes vorgesehen: Die Bremse A ist im Kraftfluss zwischen der dritten Welle 3 und dem Getriebegehäuse GG, die Bremse B im Kraftfluss zwischen der vierten Welle 4 und dem Getriebegehäuse GG, die Kupplung C im Kraftfluss zwischen der ersten und fünften Welle 1, 5, die Kupplung D im Kraftfluss zwischen der siebten und achten Welle 7, 8 und die Kupplung E im Kraftfluss zwischen der fünften und siebten Welle 5, 7 angeordnet..

Der Unterschied zwischen den Radsatzschemata der gattungsgemäßen Patentanmeldung DE 102005002337:1 und der Figuren 1 bis 4 liegt somit in der kinematischen Anbindung des zweiten Planetenradsatzes RS2 an die anderen drei Planetenradsätze RS1, RS3, RS4 des Getriebes.

Im Prinzip kann die räumliche Anordnung der Schaltelemente des in Figur 4 dargestellten Ausführungsbeispiels eines erfindungsgemäßen Mehrstufengetriebes innerhalb des Getriebes beliebig sein und wird nur durch die Abmessungen und die äußere Formgebung des Getriebegehäuses GG begrenzt. So wurde in Figur 4 die räumliche Anordnung der beiden Bremsen A, B wiederum beispielhaft aus Figur 1 übernommen. Auch die räumliche Anordnung der zwei Kupplungen C, E ist ähnlich wie in Figur 1, wobei hier die Kupplung C beispielhaft zumindest teilweise radial unter einem Lamellenpaket der Kupplung E angeordnet ist. Entsprechend sind die im Rahmen der Beschreibung der Figur 1 getroffenen Aussagen zur räumlichen Anordnung dieser vier Schaltelemente A, B, C, E sinngemäß auch auf Figur 4 übertragbar.

Wie aus Figur 4 weiterhin ersichtlich, ist die Kupplung D räumlich gesehen in einem Bereich axial zwischen dem vierten und zweiten Planetenradsatz RS4, RS2 angeordnet, dabei benachbart zum zweiten Planetenradsatz RS2. Selbstverständlich ist auch hier die dargestellte konstruktive Ausbildung der Kupplung D wieder als beispielhaft anzusehen. So kann in einer anderen Ausgestaltung beispielsweise vorgesehen sein, dass die Kupplung D auf einem größeren Durchmesser als dargestellt angeordnet ist, ein Lamellenpaket der Kupplung D beispielsweise auf einem Durchmesser ähnlich dem Hohlrad H02 des zweiten Planetenradsatzes RS2. In noch einer anderen Ausgestaltung kann die Kupplung D auch räumlich gesehen in einem Bereich axial zwischen dem zweiten und dritten Planetenradsatz RS2, RS3 angeordnet sein, dann vorzugsweise unmittelbar axial angrenzend an den zweiten Planetenradsatz RS2 und im Wesentlichen axial zwischen RS2 und Kupplung E.

Da gemäß Figur 4 das Hohlrad HO4 des vierten Planetenradsatzes RS4 bzw. die Welle 7 nunmehr nur schaltbare Verbindungen und keine permanente Verbindung zu einem anderen Radsatzelement ausweist, kann in einer von Figur 4 abweichenden Bauteilanordnung auch vorgesehen sein, dass die Kupplung E räumlich gesehen in einem Bereich axial zwischen dem vierten und zweiten Planetenradsatz RS4, RS2 angeordnet ist, dann vorzugsweise benachbart zum vierten Planetenradsatz RS4 (bzw. axial zwischen dem vierten Planetenradsatz RS4 und der Kupplung D, falls die Kupplung D unverändert auf der dem vierten Planetenradsatz RS4 zugewandten Seite des zweiten Planetenradsatzes RS2 angeordnet ist).

Entsprechend der räumlichen Anordnung der vier Radsätze in axialer Richtung gesehenen in der Folge "RS1, RS4, RS2, RS3" in Verbindung mit der in Figur 4 dargestellten räumlichen Anordnung der fünf Schaltelemente A bis E verläuft die erste Welle 1 des Getriebes abschnittsweise zentrisch innerhalb der dritten Welle 3 und abschnittsweise zentrisch innerhalb der siebten Welle 7. Der erste und vierte Planetenradsatz RS1, RS4 wird also nur von der Welle 1 bzw. der Antriebswelle AN in axialer Richtung zentrisch durchgriffen. Im Bereich des zweiten Planetenradsatzes RS2 verläuft die siebte Welle 7 wiederum abschnittsweise zentrisch innerhalb der achten Welle 8 und durchgreift dabei den zweiten Planetenradsatz RS2 in axialer Richtung zentrisch. Somit wird der zweite Planetenradsatz RS2 von zwei Wellen - nämlich von Welle 1 bzw. Antriebswelle und Welle 7 - in axialer Richtung zentrisch durchgriffen. Die fünfte Welle 5 übergreift in ihrem axialen Verlauf die Kupplung C. Weiterhin übergreift die sechste Welle 6 in ihrem axialen Verlauf den vierten Planetenradsatz RS4, die Welle 7 sowie die Kupplung D, durchgreift den zweiten Planetenradsatz RS2 und übergreift wiederum die Kupplung E und die Welle 5 und somit auch die Kupplung C vollständig. Der im Bereich zwischen den Planetenradsätzen RS2, RS3 befindliche Abschnitt der Welle 6 wiederum verläuft zentrisch innerhalb eines Abschnitts der zweiten Welle 2. Die Kupplung D ist einerseits zumindest weitgehend innerhalb eines Zylinderraums angeordnet, der durch einen als Außenlamellenträger für diese Kupplung D ausgebildeten Abschnitt der Welle 7 gebildet wird, andererseits auch innerhalb eines durch die Welle 6 gebildeten Zylinderraums. Die Kupplung E ist einerseits zumindest weitgehend innerhalb eines Zylinderraums angeordnet, der durch einen als Außenlamellenträger für diese Kupplung E ausgebildeten Abschnitt der Welle 7 gebildet wird, andererseits auch innerhalb eines durch die Welle 6 gebildeten Zylinderraums und auch innerhalb eines durch den genannten Abschnitt der Welle 2 gebildeten Zylinderraums. Die Kupplung C schließlich ist einerseits zumindest weitgehend innerhalb eines Zylinderraums angeordnet, der durch einen als Außenlamellenträger für diese Kupplung C ausgebildeten Abschnitt der Welle 1 gebildet wird, andererseits auch innerhalb eines durch die Welle 5 gebildeten Zylinderraums und damit auch innerhalb eines durch die Welle 6 bzw. die Welle 2 gebildeten Zylinderraums angeordnet.

In Figur 4a ist ein Schaltschema des erfindungsgemäßen Mehrstufengetriebes gemäß Figur 4 dargestellt. In jedem Gang sind drei Schaltelemente geschlossen und zwei Schaltelemente offen, wobei die Schaltlogik identisch ist zu Figur 1a. Neben dieser Schaltlogik, können dem Schaltschema auch beispielhafte Werte für die jeweiligen Übersetzungen i der einzelnen Gangstufen und die daraus zu bestimmenden Stufensprünge φ entnommen werden. Die angegebenen Übersetzungen i ergeben sich aus den (typischen) Standgetriebeübersetzungen der vier Planetensätze RS1, RS2, RS3, RS4 von minus 2,13, minus 3,70, minus 3,05 und minus 2,07.

In Figur 4b ist nun eine beispielhafte Detailkonstruktion für das Mehrstufengetriebe gemäß Figur 4 dargestellt. Das in Figur 4b dargestellte Getriebe zeichnet sich durch einen äußerst kompakten Aufbau aus. Dabei weist der zweite Planetenradsatz RS2 eine von Figur 4a abweichende Standgetriebeübersetzung von nunmehr "minus 4,00" auf. Gegenüber Figur 4 zusätzlich eingezeichnet ist ein beispielhaft als hydrodynamischer Drehmomentwandler ausgebildetes Anfahrelement ANF, welches im Kraftfluß zwischen einem nicht näher dargestellten Antriebsmotor des Getriebes und der Antriebswelle AN des Getriebes angeordnet ist. Selbstverständlich kann ein derartiger, an sich bekannter Drehmomentwandler auch einen Torsionsdämpfer und/oder eine Überbrückungskupplung aufweisen.

Wie in Figur 4b leicht ersichtlich, ist die räumliche Anordnung der fünf Schaltelemente A bis E abweichend von Figur 4. Die drei Planetenradsätze RS1, RS4 und RS2 sind nunmehr vom Antrieb des Getriebes bzw. vom Anfahrelement ANF her gesehen koaxial in dieser Reihenfolge unmittelbar axial aneinander angrenzend angeordnet. Der Planetenradsatz RS3 ist wie in Figur 4 auf der dem Antrieb des Getriebes gegenüberliegenden Seite des Getriebes angeordnet. Wie in Figur 4 sind Antriebswelle AN und Abtriebswelle AB koaxial zueinander angeordnet, sodass sich Antrieb und Abtrieb des Getriebes auf gegenüberliegenden Seiten des Getriebes befinden.

Die Bremse A als erstes Schaltelement des Getriebes ist auf der Seite des antriebsnahen ersten Planetenradsatzes RS1 angeordnet, die dem Anfahrelement ANF zugewandt ist bzw. dem vierten Planetenradsatz RS4 gegenüberliegt. Ein mit A_l bezeichnetes Lamellenpaket der Bremse A ist benachbart zum Planetenradsatz RS1 auf einem Durchmesser angeordnet, der in etwa dem Innendurchmesser des Hohlrades HO1 des ersten Planetenradsatzes RS1 entspricht. Ein mit A_i bezeichneter Innenlamellenträger der Bremse A zur Aufnahme der hier beispielhaft als Belaglamellen ausgebildeten innenverzahnten Lamellen des Lamellenpaketes A_l ist verdrehfest mit den Sonnenrädern SO1, SO4 des ersten und vierten Planetenradsatzes RS1, RS4 verbunden (Welle 3 des Getriebes) und radial auf der Antriebswelle AN gelagert. Die beiden Sonnenräder SO1, S04 sind dabei beispielhaft einstückig ausgeführt. Ein mit A_a bezeichneter Außenlamellenträger der Bremse A zur Aufnahme der hier beispielhaft als Stahllamellen ausgebildeten außenverzahnten Lamellen des Lamellenpaketes A_l übernimmt hier beispielhaft gleichzeitig die Funktion einer Kanalplatte zur Ölverteilung und ist über eine Gehäusewand GW mit dem Getriebegehäuse GG verschraubt. Der Innenlamellenträger A_i stützt sich über ein Axiallager an dem getriebegehäusefesten Außenlamellenträger A_a ab. Die genannte Gehäusewand GW bildet gleichzeitig die dem Anfahrelement ANF zugewandte Außenwand des Getriebegehäuses und nimmt auch eine zur Druck- und Schmiermittelversorgung des Getriebes benötigte Ölpumpe PU auf. Eine Servoeinrichtung A_s der Bremse A zur Betätigung deren Lamellenpaketes A_l ist auf der dem Planetenradsatz RS1 gegenüberliegenden bzw. der dem Anfahrelement ANF zugewandten Seite des Lamellenpaketes A_l angeordnet und axial verschiebbar in dem Außenlamellenträger A_a gelagert, umfassend einen Druckraum, einen auf das Lamellenpaket A_l wirkenden Kolben sowie ein beispielhaft als Tellerfeder ausgebildetes Kolbenrückstellelement.

Die Bremse B als zweites Schaltelement des Getriebes ist unmittelbar angrenzend an den antriebsnahen ersten Planetenradsatzes RS1 angeordnet, wobei ein mit B_l bezeichnetes Lamellenpaket räumlich gesehen radial über dem Hohlrad HO1 des ersten Planetenradsatzes RS1 angeordnet ist. Ein mit B_i bezeichneter Innenlamellenträger der Bremse B zur Aufnahme der hier beispielhaft als Belaglamellen ausgebildeten innenverzahnten Lamellen des Lamellenpaketes B_l bildet einen Abschnitt der Welle 4 des Getriebes, ist verdrehfest mit dem Hohlrad HO1 des ersten Planetenradsatzes RS1 verbunden und axial zwischen dem Innenlamellenträger A_i der Bremse A und dem antriebsnahen Stegblech des Stegs ST1 des ersten Planetenradsatzes RS1 gelagert. Ein mit B_a bezeichneter Außenlamellenträger der Bremse B zur Aufnahme der hier beispielhaft als Stahllamellen ausgebildeten außenverzahnten Lamellen des Lamellenpaketes B_l ist in das Getriebegehäuse GG integriert. Eine Servoeinrichtung B_s der Bremse B zur Betätigung deren Lamellenpaketes B_l ist auf der dem Planetenradsatz RS4 gegenüberliegenden bzw. der dem Anfahrelement ANF zugewandten Seite des Lamellenpaketes B_l angeordnet und an dem Außenlamellenträger A_a der Bremse A und dem Getriebegehäuse GG axial verschiebbar gelagert, umfassend einen Druckraum, einen auf das Lamellenpaket B_l wirkenden Kolben sowie ein beispielhaft als Tellerfeder ausgebildetes Kolbenrückstellelement.

Wie in Figur 4b weiterhin ersichtlich, sind die drei Kupplungen D, E und C vom Antrieb des Getriebes her gesehen in dieser Reihenfolge axial nebeneinander zwischen dem zweiten und dritten Planetenradsatze RS2, RS3 angeordnet. Dabei ist die Kupplung C als drittes Schaltelement des Getriebes benachbart zum dritten Planetenradsatz RS3, die Kupplung D als viertes Schaltelement des Getriebes benachbart zum zweiten Planetenradsatz RS2, die Kupplung E als fünftes Schaltelement des Getriebes axial zwischen den Kupplungen D und C angeordnet. Das jeweilige Lamellenpaket der drei Kupplungen C, D, E ist mit C_l, D_l bzw. E_l bezeichnet, wobei diese Lamellenpakete C_l, D_l, E-l in für ein Gleichteilekonzept vorteilhafter Weise auf gleichem Durchmesser angeordnet sind. Der jeweilige Innenlamellenträger der drei Kupplungen C, D, E zur Aufnahme von hier beispielhaft als Stahllamellen ausgebildeten innenverzahnten Lamellen des jeweiligen Lamellenpaketes C_l, D_l bzw. E_l ist mit C_l, D_l bzw. E_i bezeichnet. Der jeweilige Außenlamellenträger der drei Kupplungen C, D, E zur Aufnahme von hier beispielhaft als Belaglamellen ausgebildeten außenverzahnten Lamellen des jeweiligen Lamellenpaketes C_l, D_l bzw. E_l ist mit C_a, D_a, E_a bezeichnet. Die jeweilige Servoeinrichtung der drei Kupplungen C, D, E zur Betätigung deren Lamellenpaketes C_l, D_l, E_l schließlich ist mit C_s, D_s, E_s bezeichnet. Jede dieser Servoeinrichtungen C_s, D_s, E_s weist eine Stützscheibe, einen auf das jeweiligen Lamellenpaket wirkenden Kolben, einen auf den Kolben wirkenden Druckraum, ein beispielhaft als Tellerfeder ausgebildetes Kolbenrückstellelement, eine Stauscheibe, sowie einen auf den Kolben wirkenden Druckausgleichraum zur Kompensation des rotatorischen Drucks des rotierenden Druckraums auf.

Der Innenlamellenträger C_i der Kupplung C bildet einen Abschnitt der Welle 1 des Getriebes und ist entsprechend dem zugrundeliegenden Getriebeschema (Figur 4) - hier beispielhaft über ein geeignetes Mitnahmeprofil - verdrehfest mit der Antriebswelle AN verbunden, wobei dieser Verbindungsabschnitt als eine Nabe des Innenlamellenträger C_i ausgebildet ist. Die Servoeinrichtung C_s der Kupplung C ist an dem Innenlamellenträger C_i der Kupplung C axial verschiebbar gelagert und räumlich gesehen radial oberhalb der genannten Nabe des Innenlamellenträgers C_i angeordnet. Der mit Druckmittel befüllbare Druckraum der Servoeinrichtung C_s wird gebildet durch die auf der Nabe des Innenlamellenträgers C_i axial festgesetzte Stützscheibe der Kupplung C, durch den Kolben der Servoeinrichtung C_s und durch einen Abschnitt der Nabe des Innenlamellenträgers C_i, wobei der genannte Kolben gegenüber der genannten Stützscheibe und der Nabe des Innenlamellenträgers C_i axial verschiebbar druckmitteldicht abgedichtet ist. Räumlich gesehen ist dieser Druckraum radial unterhalb des Lamellenpaketes C_l der Kupplung C angeordnet. Der Kolben der Servoeinrichtung C_s umgreift den Lamellenmitnahmeabschnitt des Innenlamellenträgers C_i in axialer und radialer Richtung und betätigt das ihm zugeordnete Lamellenpaket C_I axial in Richtung des zweiten Planetenradsatzes RS2, wenn der Druckraum der Servoeinrichtung C_s mit Druckmittel befüllt wird, gegen die Rückstellkraft der Tellerfeder des Servoeinrichtung C_s, wobei die genannte Tellerfeder axial eingespannt ist zwischen dem genannten Kolben und der axial an der Nabe des Innenlamellenträgers C_i anliegenden Stauscheibe der Servoeinrichtung C_s. Die Druckmittelzufuhr zum Druckraum der Servoeinrichtung C_s erfolgt beispielhaft von der Abtriebsseite des Getriebes her. Der drucklos mit Schmiermittel befüllbare Druckausgleichsraum der Servoeinrichtung C_s wird gebildet durch Stauscheibe und Kolben der Servoeinrichtung C_s, wobei der genannte Kolben gegenüber der genannten Stauscheibe axial verschiebbar schmiermitteldicht abgedichtet ist. Räumlich gesehen ist der Druckausgleichsraum der Servoeinrichtung C_s auf der dem Druckraum der Servoeinrichtung C_s gegenüberliegenden Seite des Kolbens der Servoeinrichtung C_s angeordnet, radial unterhalb der Lamellenpaketes C_l der Kupplung C. Somit ist der Druckausgleichsraum der Servoeinrichtung C_s näher am zweiten Planetenradsatz RS2 angeordnet als der Druckraum der Servoeinrictung C_s.

Der Außenlamellenträger C_a der Kupplung C und der Außenlamellenträger E_a der zur Kupplung C benachbarten Kupplung E sind als gemeinsames Bauteil ausgeführt und bilden einen Abschnitt der Welle 5 des Getriebes und sind entsprechend dem zugrundeliegenden Getriebeschema (Figur 4) mit dem Sonnenrad S03 des dritten Planetenradsatzes RS3 - hier beispielhaft über eine Schweißverbindung - verdrehfest verbunden. Geometrisch ist dieser gemeinsame Außenlamellenträger C_a / E_a als ein in Richtung Planetenradsatz RS2 hin geöffneter zylinderförmiger Topf ausgebildet, in dessen Zylinderraum die Kupplung C vollständig und die Kupplung E zumindest überwiegend angeordnet sind.

Der Innenlamellenträger D_i der Kupplung D und der Innenlamellenträger E_i der Kupplung E sind als gemeinsames Bauteil ausgeführt und bilden einen Abschnitt der Welle 7 des Getriebes und sind entsprechend dem zugrundeliegenden Getriebeschema (Figur 4) mit dem Hohlrad H04 des vierten Planetenradsatzes RS4 verdrehfest verbunden. In dem dargestellten Aufführungsbeispiel ist hierzu vorgesehen, dass der gemeinsame Innenlamellenträger D_i /E_i eine Nabe aufweist, die über ein geeignetes Mitnahmeprofil mit einem zylinderförmigen Blechtopf verbunden ist, welcher wiederum einen anderen Abschnitt der Welle 7 bildet, wobei dieser Blechtopf an seinem Außendurchmesser mit dem Hohlrad H04 verdrehfest verbunden ist und einen Nabenabschnitt aufweist, der das Sonnenrad S02 des zweiten Planetenradsatzes RS2 in axialer Richtung zentrisch durchgreift und auf der dem vierten Planetenradsatzes RS4 gegenüberliegenden Seite dieses Planetenradsatzes RS2 mit der Nabe des gemeinsamen Innenlamellenträgers D_i / E_i formschlüssig verbunden ist.

Sowohl die Servoeinrichtung D_s der Kupplung D als auch die Servoeinrichtung E_s der Kupplung E sind an dem gemeinsamen Innenlamellenträger D_i /E_i axial verschiebbar gelagert. Hierzu ist die genannte Nabe des gemeinsamen Innenlamellenträgers D_i /E_i durch eine Zylinderwand mittig in zwei etwa gleich lange axiale Abschnitte unterteilt, wobei die Servoeinrichtung D_s räumlich gesehen radial oberhalb des dem Planetenradsatz RS2 zugewandten Nabenabschnitts und die Servoeinrichtung E_s räumlich gesehen radial oberhalb des dem Planetenradsatz RS2 abgewandten Nabenabschnitts des gemeinsamen Innenlamellenträgers D_i / E_i angeordnet sind. Beide Servoeinrichtungen D_s, E_s sind konstruktiv ähnlich ausgeführt wie die zuvor im Detail beschriebene Servoeinrichtung C_s der Kupplung C, wobei die Servoeinrichtungen D_s axial spiegelbildlich zur Servoeinrichtung C_s aufgebaut ist, sodass die Betätigungsrichtung der Servoeinrichtungen C_s, D_s entgegengesetzt und die Betätigungsrichtung der Servoeinrichtungen C_s, E_s gleichgerichtet ist. Entsprechend kann die detaillierte Beschreibung der Servoeinrichtung C_s sinngemäß auf die beiden Servoeinrichtungen D_s, E_s übertragen und an dieser Stelle auf eine weitere detaillierte Beschreibung verzichtet werden. Hingewiesen sei noch darauf, dass die (voneinander unabhängigen) Druckmittelzuführungen zu den Druckräumen der Servoeinrichtungen D_s, E_s der Kupplungen D, E beispielhaft von der Antriebsseite des Getriebes her erfolgt, abweichend von der Druckmittelzuführung zu dem Druckraum der Servoeinrichtung C_s der Kupplung C.

In Figur 4b zusätzlich eingezeichnet ist auch ein Drehzahlsensor NAN zur Bestimmung der Drehzahl der Antriebswelle AN. Im dargestellten Beispiel wird diese Antriebswellendrehzahl (hier gleichzeitig die Turbinenwellendrehzahl des Drehmomentwandlers ANF) an dem Steg ST4 des vierten Planetenradsatzes RS4 durch den rotierenden Blechtopf der Welle 6 hindurch gemessen. Das entsprechende Geberrad (Zahnscheibe) ist dabei räumlich gesehen radial zwischen dem Hohlrad H04 des vierten Planetenradsatzes RS4 und dem dieses Hohlrad H04 in axialer Richtung übergreifenden Blechtopf der Welle 6 angeordnet. Um die Antriebswellendrehzahl durch den rotierenden Blechtopf der Welle 6 hindurch messen zu können, ist dieser Blechtopf beispielsweise aus einem nicht-magnetischen Werkstoff gefertigt oder im Bereich des Drehzahlsensors NAN umfangsverteilt mit Ausnehmungen bzw. radialen Durchbrüchen versehen. Weiterhin ist in Figur 4b ein Drehzahlsensor NAB zur Bestimmung der Drehzahl der Abtriebswelle AB eingezeichnet, beispielhaft räumlich gesehen radial über dem Hohlrad H02 des zweiten Planetenradsatzes RS2, dessen Außendurchmesser entsprechend geometrisch als Geberrad (Zahnscheibe) für den Drehzahlsensor NAB ausgebildet ist. Selbstverständlich kann der Drehzahlsensor NAB auch als eine Sensoreinheit zur Bestimmung von Drehzahl und Drehrichtung der Abtriebswelle AB ausgeführt sein.

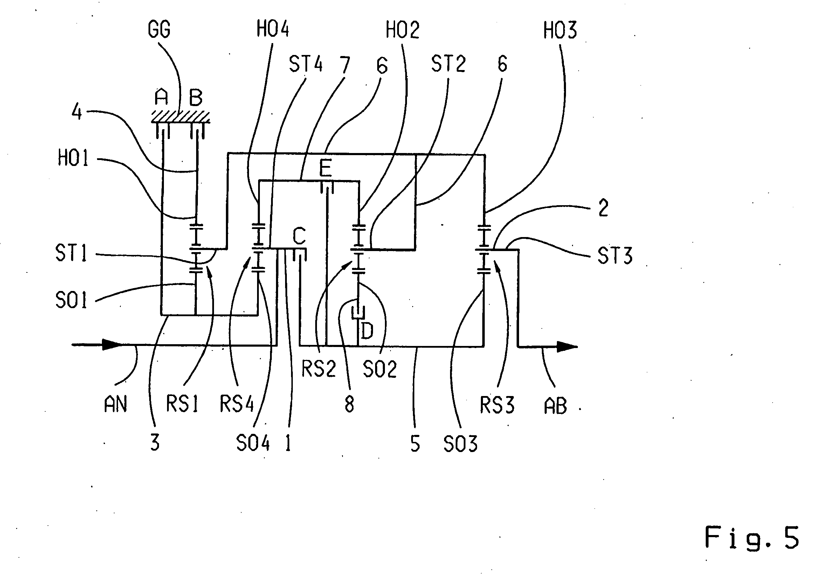

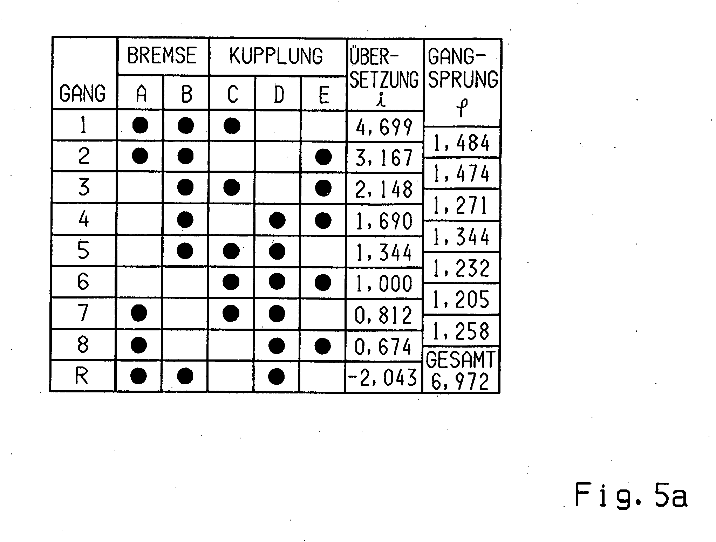

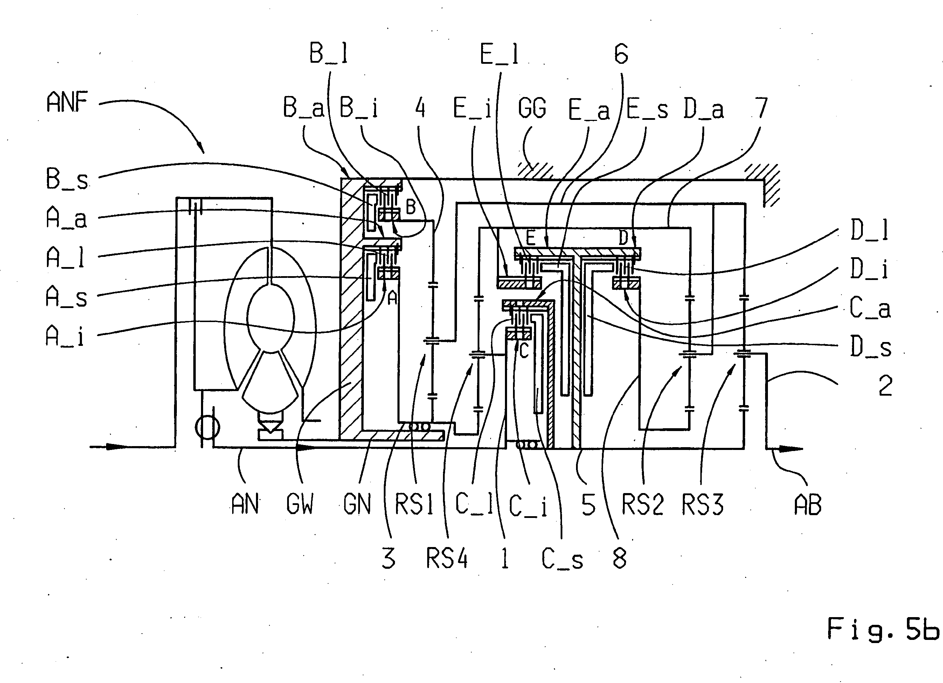

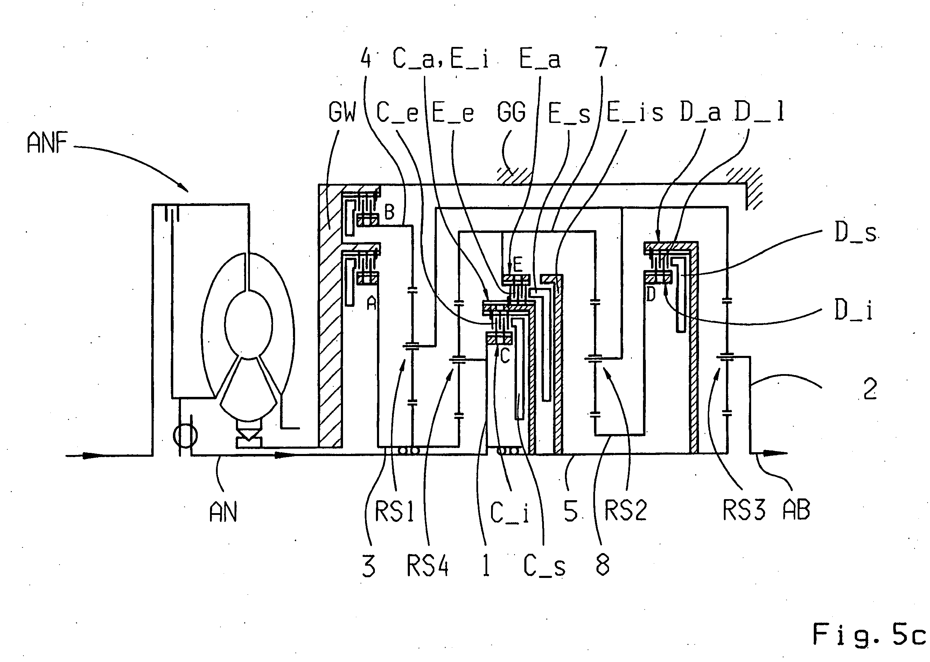

Figur 5 zeigt ein Ausführungsbeispiel für ein Mehrstufengetriebe gemäß der fünften erfindungsgemäßen Lösung, wiederum in schematischer Darstellung. Vergleichbar zu Figur 1, weist das Getriebe eine Antriebswelle AN und eine Abtriebswelle AB, in einem Gehäuse GG des Getriebes angeordnete vier Planetenradsätze RS1, RS2, RS3, RS4 und fünf Schaltelemente A, B, C, D, E, sowie insgesamt zumindest acht drehbare Wellen 1, 2, 3, 4, 5, 6, 7, 8 auf. Alle vier Planetenradsätze RS1, RS2, RS3, RS4 sind als einfache Minus-Planetenradsätze ausgebildet und in diesem Ausführungsbeispiel in axialer Richtung in der Reihenfolge "RS1, RS4, RS2, RS3" koaxial hintereinander angeordnet. Die Schaltelemente A und B sind als Bremsen ausgebildet, beispielhaft ausgeführt als reibschlüssig schaltbare Lamellenbremsen. Die Schaltelemente C, D und E sind als Kupplungen ausgebildet, beispielhaft ausgeführt als reibschlüssig schaltbare Lamellenkupplungen. Mit diesen fünf Schaltelementen A bis E ist ein selektives Schalten von acht Vorwärtsgängen und einem Rückwärtsgang realisierbar.

Hinsichtlich der kinematischen Kopplung der einzelnen Elemente der vier Planetenradsätze RS1, RS2, RS3, RS4 untereinander und zur Antriebs- und Abtriebswelle AN, AB ist bei dem Mehrstufengetriebe gemäß Figur 5 folgendes vorgesehen: Ein Steg ST4 des vierten Planetenradsatzes RS4 und die Antriebswelle AN sind ständig miteinander verbunden und bilden die erste Welle 1 des Getriebes. Ein Steg ST3 des dritten Planetenradsatzes RS3 bildet die zweite Welle 2 des Getriebes. Ein Sonnenrad SO1 des ersten Planetenradsatzes RS1 und ein Sonnenrad S04 des vierten Planetenradsatzes RS4 sind ständig miteinander verbunden und bilden die dritte Welle 3 des Getriebes. Ein Hohlrad HO1 des ersten Planetenradsatzes RS1 bildet die vierte Welle 4 des Getriebes. Ein Sonnenrad S03 des dritten Planetenradsatzes RS3 bildet die fünfte Welle 5 des Getriebes. Ein Steg ST1 des ersten Planetenradsatzes RS1 und ein Steg ST2 des zweiten Planetenradsatzes RS2 und ein Hohlrad H03 des dritten Planetenradsatzes RS3 sind ständig miteinander verbunden und bilden die sechste Welle 6 des Getriebes. Ein Hohlrad H02 des zweiten Planetenradsatzes RS2 und ein Hohlrad H04 des vierten Planetenradsatzes RS4 sind ständig miteinander verbunden und bilden die siebte Welle 7 des Getriebes. Ein Sonnenrad S02 des zweiten Planetenradsatzes RS2 schließlich bildet die achte Welle 8 des Getriebes.

Hinsichtlich der kinematischen Kopplung der fünf Schaltelemente A bis E an die so beschriebenen Wellen 1 bis 8 des Getriebes ist bei dem Mehrstufengetriebe gemäß Figur 5 folgendes vorgesehen: Die Bremse A ist im Kraftfluss zwischen der dritten.Welle 3 und dem Getriebegehäuse GG, die Bremse B im Kraftfluss zwischen der vierten Welle 4 und dem Getriebegehäuse GG, die Kupplung C im Kraftfluss zwischen der ersten und fünften Welle 1, 5, die Kupplung D im Kraftfluss zwischen der fünften und achten Welle 5, 8 und die Kupplung E im Kraftfluss zwischen der fünften und siebten Welle 5, 7 angeordnet.

Der Unterschied zwischen den Radsatzschemata der gattungsgemäßen Patentanmeldung DE 102005002337.1 und der Figuren 1 bis 5 liegt somit in der kinematischen Anbindung des zweiten Planetenradsatzes RS2 an die anderen drei Planetenradsätze RS1, RS3, RS4 des Getriebes.

Im Prinzip kann die räumliche Anordnung der Schaltelemente des in Figur 5 dargestellten Ausführungsbeispiels eines erfindungsgemäßen Mehrstufengetriebes innerhalb des Getriebes beliebig sein und wird nur durch die Abmessungen und die äußere Formgebung des Getriebegehäuses GG begrenzt. So wurde in Figur 5 die räumliche Anordnung der beiden Bremsen A, B wiederum beispielhaft aus Figur 1 übernommen, entsprechende sind die diesbezüglich im Rahmen der Beschreibung der Figur 1 getroffenen Aussagen sinngemäß auch auf Figur 5 übertragbar.

Wie aus Figur 5 weiterhin ersichtlich, ist die Kupplung C räumlich gesehen in einem Bereich axial zwischen dem vierten und zweiten Planetenradsatz RS4, RS2 angeordnet, dabei benachbart zum vierten Planetenradsatz RS4. Diese Möglichkeit wurde bereits im Rahmen der Beschreibung von Figur 1 angedeutet. Entsprechend kann in einer anderen Ausgestaltung des Getriebes mit dem Radsatzschema der Figur 5 vorgesehen sein, dass die Kupplung C räumlich gesehen in einem Bereich axial zwischen dem zweiten und dritten Planetenradsatz RS2, RS3 angeordnet ist oder auch auf der Seite des dritten Planetenradsatzes RS3, die dem zweiten Planetenradsatz RS2 gegenüberliegt. Wie aus Figur 5 weiterhin ersichtlich, ist die Kupplung E räumlich gesehen ebenfalls in einem Bereich axial zwischen dem vierten und zweiten Planetenradsatz RS4, RS2 angeordnet, dabei benachbart zum zweiten Planetenradsatz RS2.

Für den Fachmann ist leicht erkennbar, dass die in Figur 5 angedeutete räumliche Lage der Kupplung D im Bereich des Sonnenrades S02 des zweiten Planetenradsatzes RS2 eher geeignet ist für eine reibschlüssig schaltbare Konuskupplung als für eine Lamellenkupplung. Entsprechend wird der Fachmann die Kupplung D bei Bedarf auch axial neben dem zweiten Planetenradsatz RS2 anordnen. Auf konstruktiv sinnvolle Varianten zur Anordnung der Schaltelemente wird später noch im Detail eingegangen.

Entsprechend der räumlichen Anordnung der vier Radsätze in axialer Richtung gesehenen in der Folge "RS1, RS4, RS2, RS3" in Verbindung mit der in Figur 5 dargestellten räumlichen Anordnung der fünf Schaltelemente A bis E verläuft die erste Welle 1 des Getriebes abschnittsweise zentrisch innerhalb der dritten Welle 3. Der erste und vierte Planetenradsatz RS1, RS4 wird also nur von der Welle 1 bzw. der Antriebswelle AN in axialer Richtung zentrisch durchgriffen. Als einzige Welle des Getriebes durchdringt die fünfte Welle 5 den zweiten Planetenradsatz RS2 in axialer Richtung zentrisch. Die siebte Welle 7 übergreift in ihrem axialen Verlauf die Kupplung C vollständig und bildet einen abschnittsweise als Außenlamellenträger ausgebildeten Zylinderraum, innerhalb dessen die Kupplung E angeordnet ist. Die Kupplung C ist zumindest weitgehend innerhalb eines Zylinderraums angeordnet, der durch einen als Außenlamellenträger für diese Kupplung C ausgebildeten Abschnitt der Welle 1 gebildet wird. Die sechste Welle 6 übergreift in ihrem axialen Verlauf den vierten Planetenradsatz RS4, die Welle 7, den zweiten Planetenradsatz RS2 und somit auch die Kupplungen C und D vollständig. Somit ist die Kupplung C auch innerhalb eines durch die Welle 7 gebildeten Zylinderraums und auch innerhalb eines durch die Welle 6 gebildeten Zylinderraums angeordnet. Weiterhin ist auch die Kupplung E innerhalb eines durch die Welle 6 gebildeten Zylinderraums angeordnet.

In Figur 5a ist ein Schaltschema des erfindungsgemäßen Mehrstufengetriebes gemäß Figur 5 dargestellt. In jedem Gang sind drei Schaltelemente geschlossen und zwei Schaltelemente offen, wobei die Schaltlogik identisch ist zu Figur 1a. Neben dieser Schaltlogik, können dem Schaltschema auch beispielhafte Werte für die jeweiligen Übersetzungen i der einzelnen Gangstufen und die daraus zu bestimmenden Stufensprünge φ entnommen werden. Die angegebenen Übersetzungen i ergeben sich aus den (typischen) Standgetriebeübersetzungen der vier Planetensätze RS1, RS2, RS3, RS4 von minus 2,115, minus 1,550, minus 3,700 und minus 2,065.

Ausgehend von dem Getriebeschema gemäß Figur 5 werden im folgenden anhand der Figuren 5b und 5c zwei beispielhafte Bauteilanordnungsvarianten für dieses erfindungsgemäße Getriebe näher beschrieben. Dabei ist das und zweite Schaltelement A, B jeweils beispielhaft als Lamellenbremse und das dritte, vierte und fünfte Schaltelement C, D, E jeweils beispielhaft als Lamellenkupplung ausgeführt. Das jeweilige Lamellenpaket mit Innen- und Außenlamellen der Schaltelemente A, B, C, D, E ist mit A_l, B_l, C_l, D_l bzw. E_l bezeichnet, der jeweilige Innenlamellenträger mit A_i, B_i, C_i, D_i bzw. E_i, der jeweilige Außenlamellenträger mit A_a, B_a, C_a, D_a bzw. E_a und - in stark vereinfacht schematischer Darstellung - die jeweilige Servoeinrichtung zur Betätigung des Schaltelementes mit A_s, B_s, C_s, D_s bzw. E_s. In bekannter Weise können alle Servoeinrichtungen A_s bis E_s einen Druckraum, einen auf das jeweilige Lamellenpaket A_l bis E_l wirkenden Kolben sowie ein als Tellerfeder oder ringförmiges Paket parallelgeschalteter Spiralfedern ausgebildetes Kolbenrückstellelement aufweisen, die Senroeinrichtungen C_s bis E_s der drei Kupplungen C bis E zusätzlich auch einen dynamischen Druckausgleich zur Kompensation des rotatorischen Drucks des jeweiligen rotierenden Druckraums. Zusätzlich in den Figuren 5b und 5c eingezeichnet ist ein an sich bekannter hydrodynamischer Drehmomentwandler mit integrierter Überbrückungskupplung, der als beispielhaftes Anfahrelement ANF des Getriebes im Kraftfluss zwischen einem nicht näher dargestellten Antriebsmotor des Getriebes und der Antriebswelle AN des Getriebes angeordnet ist. Antriebswelle AN und Abtriebswelle AB sind beispielhaft koaxial zueinander angeordnet, sodass sich Antrieb und Abtrieb des Getriebes auf gegenüberliegenden Seiten des Getriebes befinden. Der erste und vierte Planetenradsatz RS1, RS4 sind in beiden Bauteilanordnungsvarianten unmittelbar nebeneinander angeordnet, wobei der erste Planetenradsatz RS1 dem Anfahrelement ANF bzw. dem Antriebsmotor zugewandt ist.

Figur 5b zeigt nun die erste beispielhafte Bauteilanordnungsvariante für das Mehrstufengetriebe gemäß Figur 5. Ähnlich wie in Figur 5 sind die beiden Bremsen A, B auf der antriebsnahen Seite des Getriebes in der Nähe des antriebsnahen ersten Planetenradsatzes RS1 angeordnet. Im Unterschied zu Figur 5 ist die Bremse A räumlich gesehen nunmehr zumindest im wesentlichen radial unterhalb der Bremse B angeordnet. Dabei ist die Bremse A auf der Seite des ersten Planetenradsatzes RS1 angeordnet, die dem Anfahrelement ANF zugewandt ist bzw. dem vierten Planetenradsatz RS4 gegenüberliegt. Das Lamellenpaket A_l der Bremse A ist axial neben dem Planetenradsatz RS1 auf einem Durchmesser angeordnet, der in etwa dem Innendurchmesser des Hohlrades des ersten Planetenradsatzes RS1 entspricht. Der Innenlamellenträger A_i der Bremse A zur Aufnahme der hier beispielhaft als Belaglamellen ausgebildeten innenverzahnten Lamellen des Lamellenpaketes A_l ist verdrehfest mit den Sonnenrädern des ersten und vierten Planetenradsatzes RS1, RS4 verbunden und bildet einen Abschnitt der dritten Welle 3 des Getriebes und ist radial auf einer getriebegehäusefesten GN gelagert. Der Außenlamellenträger A_a der Bremse A zur Aufnahme der hier beispielhaft als Stahllamellen ausgebildeten außenverzahnten Lamellen des Lamellenpaketes A_l ist beispielhaft in eine getriebegehäusefeste Gehäusewand GW integriert. Die genannte Gehäusewand GW bildet gleichzeitig die dem Anfahrelement ANF zugewandte Außenwand des Getriebegehäuses GG. Die Servoeinrichtung A_s der Bremse A zur Betätigung des ihr zugeordneten Lamellenpaketes A_l ist auf der dem Planetenradsatz RS1 gegenüberliegenden bzw. der dem Anfahrelement ANF zugewandten Seite des Lamellenpaketes A_l angeordnet und axial verschiebbar in dem Außenlamellenträger A_a bzw. der Gehäusewand GW gelagert.

Auch die Bremse B ist unmittelbar zum antriebsnahen ersten Planetenradsatzes RS1 angeordnet. Dabei ist das Lamellenpaket B_l der Bremse B räumlich gesehen zumindes weitgehend radial über dem Lamellenpaket A_l der Bremse A angeordnet, also auf einem Durchmesser größer dem ersten Planetenradsatz RS1. Der Innenlamellenträger B_i der Bremse B zur Aufnahme der hier beispielhaft als Belaglamellen ausgebildeten innenverzahnten Lamellen des Lamellenpaketes B_l bildet einen Abschnitt der vierten Welle 4 des Getriebes und ist entsprechend dem zugrundliegenden Getriebeschema verdrehfest mit dem Hohlrad des ersten Planetenradsatzes RS1 verbunden. Der Außenlamellenträger B_a der Bremse B zur Aufnahme der hier beispielhaft als Stahllamellen ausgebildeten außenverzahnten Lamellen des Lamellenpaketes B_l ist beispielhaft in die getriebegehäusefeste Gehäusewand GW integriert. Die Servoeinrichtung B_s der Bremse B zur Betätigung des ihr zugeordneten Lamellenpaketes B_l ist auf der dem Planetenradsatz RS4 gegenüberliegenden bzw. der dem Anfahrelement ANF zugewandten Seite des Lamellenpaketes B_l angeordnet und an dem Außenlamellenträger B_a der Bremse B bzw. der Gehäusewand GW axial verschiebbar gelagert und räumlich gesehen im Wesentlichen radial über der Servoeinrichtung A_s der Bremse A angeordnet. Für den Fachmann ist leicht ersichtlich, dass die Druckmittelzuführung zu den Servoeinrichtungen A_s, B_s der beiden Bremsen A, B über entsprechende Bohrungen bzw. Kanäle innerhalb der Gehäusewand GW konstruktiv vergleichsweise einfach realisierbar ist.

Wie in Figur 5b weiterhin ersichtlich, sind die drei Kupplungen D, E und C räumlich gesehen axial zwischen dem vierten und zweiten Planetenradsatz RS4, RS2 angeordnet. Dabei bilden die beiden Kupplungen D und E eine vormontierbare Baugruppe mit axial nebeneinander angeordneten Lamellenpaketen D_l, E_l, wobei die Kupplung C räumlich gesehen in etwa radial unter dem Lamellenpaket E_l der Kupplung E angeordnet ist, und wobei die Lamellenpakete E_l, C_l der Kupplungen E, C benachbart zum vierten Planetenradsatze RS4 und das Lamellenpaket D_l der Kupplung B benachbart zum zweiten Planetenradsatz RS2 angeordnet sind.

Für die beiden Kupplungen D, E ist ein gemeinsamer zylinderförmiger Außenlamellenträger D_a / E_a vorgesehen, der die hier beispielhaft als Stahllamellen ausgebildeten außenverzahnten Lamellen der Lamellenpakete D_l, E_l aufnimmt und einen Abschnitt der fünften Welle 5 der Getriebes bildet und entsprechend dem zugrunde liegenden Getriebeschema verdrehfest mit dem Sonnenrad des dritten Planetenradsatzes RS3 verbunden ist. Außerdem sind die Servoeinrichtungen D_s, E_s beider Kupplungen D, E an diesem gemeinsamen Außenlamellenträger D_a / E_a axial verschiebbar gelagert und rotieren entsprechend beide ständig mit Drehzahl der Welle 5, wobei beide Servoeinrichtungen D_s, E_s axial unmittelbar nebeneinander zwischen den beiden Lamellenpaketen D_l, E_l angeordnet sind und nur durch eine Mantelfläche des gemeinsamen Außenlamellenträgers D_a / E_a voneinander getrennt sind. Entsprechend betätigt die Servoeinrichtung D_s das ihr zugeordnete Lamellenpaket D_l beim Schließen der Kupplung D axial in Richtung des zweiten Planetenradsatzes RS2, wohingegen die Servoeinrichtung E_s das ihr zugeordnete Lamellenpaket E_l beim Schließen der Kupplung E axial in Richtung des vierten Planetenradsatzes RS4 betätigt. Der Innenlamellenträger D_i der Kupplung D zur Aufnahme der hier beispielhaft als Belaglamellen ausgebildeten innenverzahnten Lamellen des Lamellenpaketes D_l bildet einen Abschnitt der achten Welle 8 des Getriebes und ist entsprechend dem zugrundeliegenden Getriebeschema verdrehfest mit dem Sonnenrad des zweiten Planetenradsatzes RS2 verbunden. Der Innenlamellenträger E_i der Kupplung E zur Aufnahme der hier beispielhaft als Belaglamellen ausgebildeten innenverzahnten Lamellen des Lamellenpaketes E_l bildet einen Abschnitt der siebten Welle 7 des Getriebes und ist entsprechend dem zugrundeliegenden Getriebeschema verdrehfest mit den Hohlrädern des zweiten und vierten Planetenradsatzes RS2, RS4 verbunden.

Wie bereits angedeutet, ist die Kupplung C räumlich gesehen innerhalb eines Zylinderraums angeordnet, der durch den Außenlamellenträger E_a der Kupplung E - also den der Kupplung E zugeordneten Abschnitt des gemeinsamen Außenlamellenträgers D_a / E_a - gebildet wird. Dabei ist der Außenlamellenträger C_a der Kupplung C als ein in Richtung Planetenradsatz RS4 hin geöffneter zylinderförmiger Topf ausgebildet, der einerseits radial unterhalb des Innenlamellenträgers E_i der Kupplung E angeordnet ist und andererseits an die Servoeinrichtung E_s der Kupplung E angrenzt. Innerhalb dieses Außenlamellenträgers C_a sind das Lamellenpaket C_l und die diesem Lamellenpaket zugeordnete Servoeinrichtung C_s der Kupplung C angeordnet, wobei der Außenlamellenträger C_a hier beispielhaft außenverzahnte Stahllamellen dieses Lamellenpaket C_l aufnimmt und die am Außenlamellenträger C_a axial verschiebbar gelagerte Servoeinrichtung C_s das Lamellenpaket C_l beim Schließen der Kupplung C axial in Richtung des vierten Planetenradsatzes RS4 betätigt. Kinematisch ist der Außenlamellenträger C_a der Kupplung C der fünften Welle 5 des Getriebes zugeordnet, entsprechend rotiert die Servoeinrichtung C_s stets mit Drehzahl des Sonnenrades des dritten Planetenradsatzes RS3. Der Innenlamellenträger C_i der Kupplung C zur Aufnahme von hier beispielhaft als Belaglamellen ausgebildeten innenverzahnten Lamellen des Lamellenpaketes C_l bildet einen Abschnitt der ersten Welle 1 des Getriebes und ist entsprechend dem zugrundeliegenden Getriebeschema verdrehfest mit dem Steg des vierten Planetenradsatzes RS4 und der Antriebswelle AN verbunden. In Figur 5b angedeutet ist auch eine Lagerung zwischen Außenlamellenträger C_a bzw. Welle 5 und Antriebswelle AN bzw. Welle 1 des Getriebes. Für den Fachmann ist leicht ersichtlich, dass Druck- und Schmiermittelzuführung zu allen drei Kupplungen C, D, E konstruktiv vergleichsweise einfach realisierbar ist, beispielsweise über entsprechende Bohrungen bzw. Kanäle der Welle 5, in die wiederum das Druck- bzw. Schmiermittel über nur zwei rotierende Druck- bzw. Schmiermittelzuführungen eingebracht wird (wahlweise über die Antriebswelle AN oder die Abtriebswelle AB).

In Figur 5c schließlich ist die zweite beispielhafte Bauteilanordnungsvariante für das Mehrstufengetriebe gemäß Figur 5 dargestellt. Dabei wurde die räumliche Anordnung und Konstruktion der beiden Bremsen A, B unverändert aus Figur 5b übernommen, sodass auf deren nochmalige Beschreibung an dieser Stelle verzichtet werden kann. Ähnlich wie in Figur 5, sind in Figur 5c die beiden Kupplungen C und E axial zwischen den beiden Planetenradsätzen RS4 und RS2 angeordnet, die Kupplung D jedoch nunmehr axial zwischen den Planetenradsätzen RS2 und RS3.

Wie in Figur 5c ersichtlich, ist nunmehr für die beiden Kupplungen C und E ein gemeinsamer zylinderförmiger Lamellenträger vorgesehen, der für die Kupplung C als Außenlamellenträger C_a und für die Kupplung E als Innenlamellenträger E_i ausgebildet ist. Entsprechend ist am Innendurchmesser des zylindrischen Abschnitts dieses gemeinsamen Lamellenträgers C_a / E_i ein geeignetes Mitnahmeprofil zur Aufnahme der hier beispielhaft als Stahllamellen ausgeführten Außenlamellen des Lamellenpaketes C_l der Kupplung C vorgesehen und am Außendurchmesser des zylindrischen Abschnitts dieses gemeinsamen Lamellenträger C_a / E_i ein geeignetes Mitnahmeprofil zur Aufnahme der hier beispielhaft als Stahllamellen ausgeführten Innenlamellen des Lamellenpaketes E_l der Kupplung E. Dabei sind die Lamellenpakete C_l und E_l räumlich gesehen in etwa - also zumindest teilweise - radial übereinander angeordnet. Der Innenlamellenträger C_i der Kupplung C zur Aufnahme von hier beispielhaft als Belaglamellen ausgebildeten Innenlamellen des Lamellenpaketes C_l bildet einen Abschnitt der ersten Welle 1 des Getriebes und ist entsprechend dem zugrundeliegenden Getriebeschema verdrehfest mit dem Steg des vierten Planetenradsatzes RS4 und der Antriebswelle AN verbunden. Der Außenlamellenträger E_a der Kupplung E zur Aufnahme von hier beispielhaft als Belaglamellen ausgebildeten Außenlamellen des Lamellenpaketes E_l der Kupplung E bildet einen Abschnitt der siebten Welle 7 des Getriebes und ist mit den Hohlrädern des zweiten und vierten Planetenradsatzes RS2, RS4 verdrehfest verbunden. Das Lamellenpaket C_l und die diesem Lamellenpaket C_l zugeordnete Servoeinrichtung C_s der Kupplung C sind innerhalb des Zylinderraums angeordnet, der durch den gemeinsamen Lamellenträger C_a / E_i gebildet wird, wobei die Servoeinrichtung C_s das ihr zugeordnete Lamellenpaket C_l beim Schließen der Kupplung C axial in Richtung des vierten Planetenradsatzes RS4 hin betätigt. Die dem Lamellenpaket E_l zugeordnete Servoeinrichtung E_s der Kupplung E ist im wesentlichen auf der Seite des gemeinsamen Lamellenträgers C_a / E_i angeordnet, die dem Lamellenpaket C_l bzw. dem vierten Planetenradsatz RS4 gegenüberliegt und im dargestellten Ausführungsbeispiel an einer Stützscheibe E_is und/oder an dem gemeinsamen Lamellenträger C_a / E_i axial verschiebbar gelagert, wobei diese Stützscheibe E_is ihrerseits gegenüber dem gemeinsamen Lamellenträger C_a / E_i axial festgesetzt ist. Beim Schließen der Kupplung E betätigt die Servoeinrichtung E_s das ihr zugeordnete Lamellenpaket E_s axial ebenfalls in Richtung des vierten Planetenradsatzes RS4. Kinematisch sind der gemeinsamen Lamellenträger C_a / E_i und die Stützscheibe E_is der fünften Welle 5 des Getriebes zugeordnet und entsprechend dem zugrundeliegenden Getriebeschema verdrehfest mit dem Sonnenrad des dritten Planetenradsatzes RS3 verbunden ist. Somit rotieren beide Servoeinrichtungen C_s, E_s stets mit Drehzahl des Sonnenrades des dritten Planetenradsatzes RS3.

Wie in Figur 5c weiterhin ersichtlich, ist der Außenlamellenträger D_a der Kupplung D als in Richtung des zweiten Planetenradsatzes RS2 hin geöffneter zylinderförmiger Topf ausgebildet, der kinematisch ebenfalls der fünften Welle 5 des Getriebes zugeordnet ist und entsprechend dem zugrundeliegenden Getriebeschema verdrehfest mit dem Sonnenrad des dritten Planetenradsatzes RS3 verbunden ist. Der Innenlamellenträger D_i der Kupplung D zur Aufnahme von hier beispielhaft als Belaglamellen ausgebildeten Innenlamellen des Lamellenpaketes D_l bildet einen Abschnitt der achten Welle 8 des Getriebes und ist entsprechend dem zugrundeliegenden Getriebeschema verdrehfest mit dem Sonnenrad des zweiten Planetenradsatzes RS2 verbunden. Das Lamellenpaket D_l und die diesem Lamellenpaket D_l zugeordnete Servoeinrichtung D_s der Kupplung D sind innerhalb eines Zylinderraums angeordnet, der durch den Außenlamellenträger D_a gebildet wird. Beim Schließen betätigt die ständig mit Drehzahl des Sonnenrades des dritten Planetenradsatzes RS3 rotierende Servoeinrichtung D_s das ihr zugeordnete Lamellenpaket D_l axial in Richtung des zweiten Planetenradsatzes RS2.

Für den Fachmann ist leicht ersichtlich, dass Druck- und Schmiermittelzuführung zu allen drei Kupplungen C, D, E konstruktiv vergleichsweise einfach realisierbar ist, beispielsweise über entsprechende Bohrungen bzw. Kanäle der Welle 5, in die wiederum das Druck- bzw. Schmiermittel über rotierende Druck- bzw. Schmiermittelzuführungen wahlweise über die Antriebswelle AN oder die Abtriebswelle AB eingebracht wird.

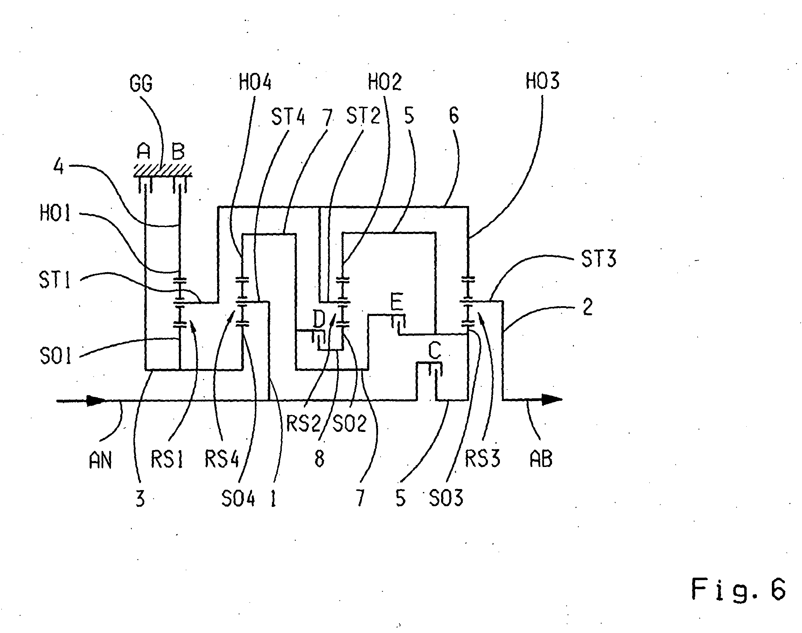

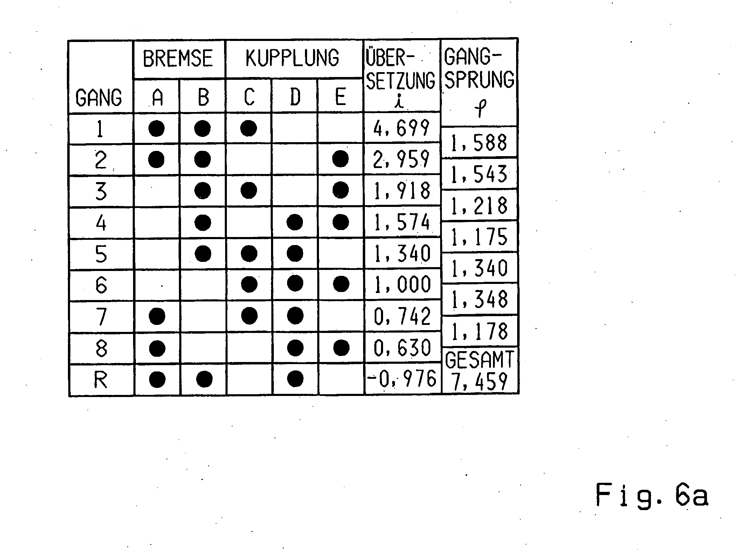

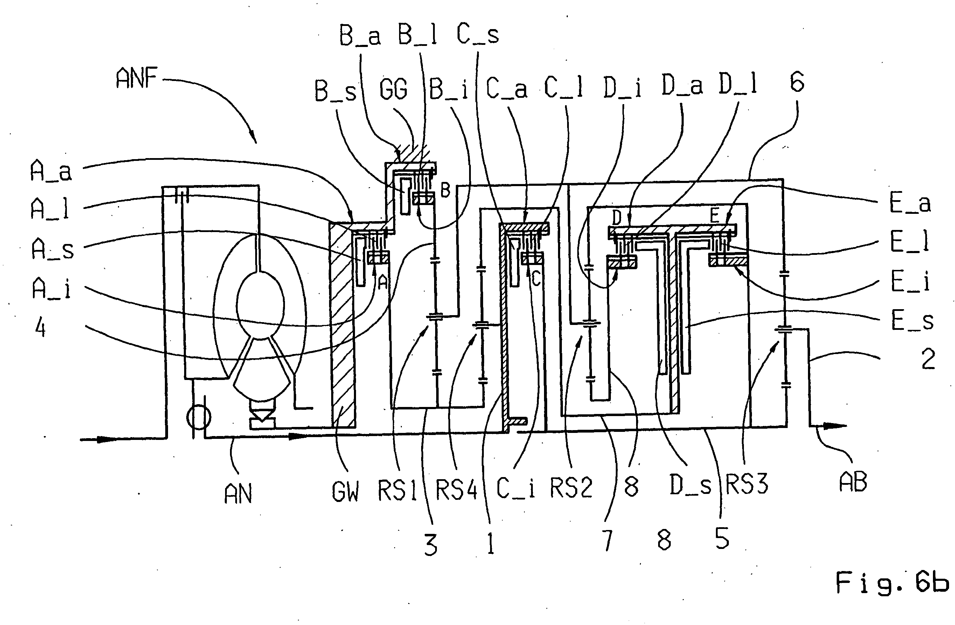

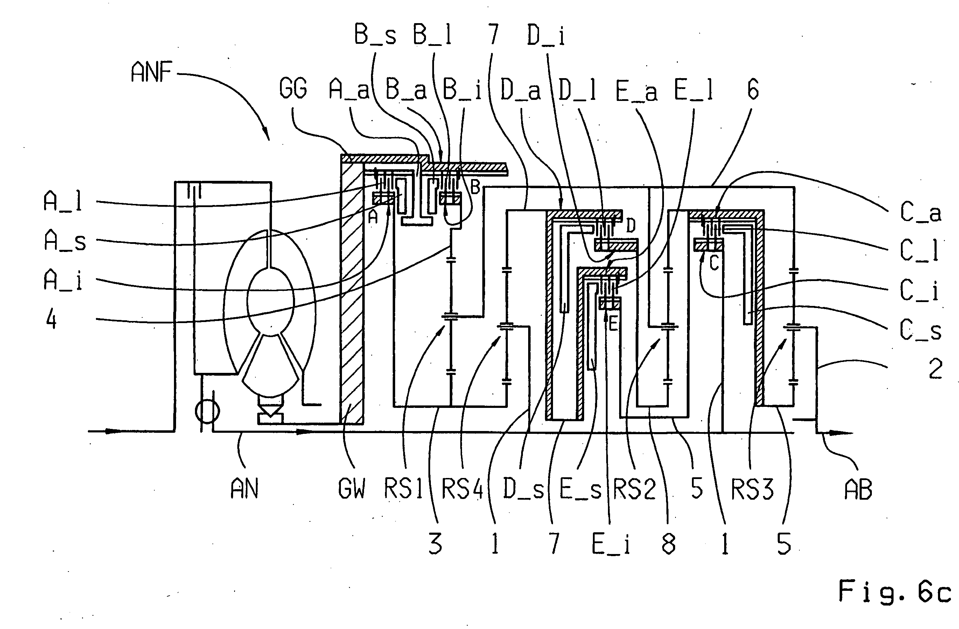

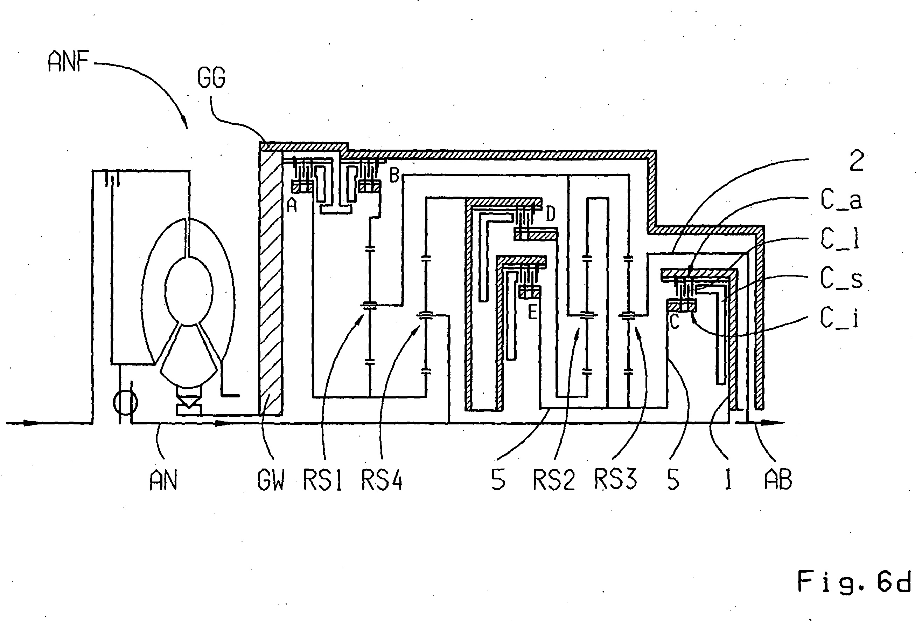

Figur 6 zeigt nun ein Ausführungsbeispiel für ein Mehrstufengetriebe gemäß der sechsten erfindungsgemäßen Lösung, wiederum in schematischer Darstellung. Vergleichbar zu Figur 1, weist das Getriebe eine Antriebswelle AN und eine Abtriebswelle AB, in einem Gehäuse GG des Getriebes angeordnete vier Planetenradsätze RS1, RS2, RS3, RS4 und fünf Schaltelemente A, B, C, D, E, sowie insgesamt zumindest acht drehbare Wellen 1, 2, 3, 4, 5, 6, 7, 8 auf. Alle vier Planetenradsätze RS1, RS2, RS3, RS4 sind als einfache Minus-Planetenradsätze ausgebildet und in diesem Ausführungsbeispiel in axialer Richtung in der Reihenfolge "RS1, RS4, RS2, RS3" koaxial hintereinander angeordnet. Die Schaltelemente A und B sind als Bremsen ausgebildet, beispielhaft ausgeführt als reibschlüssig schaltbare Lamellenbremsen. Die Schaltelemente C, D und E sind als Kupplungen ausgebildet, beispielhaft ausgeführt als reibschlüssig schaltbare Lamellenkupplungen. Mit diesen fünf Schaltelementen A bis E ist ein selektives Schalten von acht Vorwärtsgängen und einem Rückwärtsgang realisierbar.

Hinsichtlich der kinematischen Kopplung der einzelnen Elemente der vier Planetenradsätze RS1, RS2, RS3, RS4 untereinander und zur Antriebs- und Abtriebswelle AN, AB ist bei dem Mehrstufengetriebe gemäß Figur 6 folgendes vorgesehen: Ein Steg ST4 des vierten Planetenradsatzes RS4 und die Antriebswelle AN sind ständig miteinander verbunden und bilden die erste Welle 1 des Getriebes. Ein Steg ST3 des dritten Planetenradsatzes RS3 bildet die zweite Welle 2 des Getriebes. Ein Sonnenrad SO1 des ersten Planetenradsatzes RS1 und ein Sonnenrad SO4 des vierten Planetenradsatzes RS4 sind ständig miteinander verbunden und bilden die dritte Welle 3 des Getriebes. Ein Hohlrad HO1 des ersten Planetenradsatzes RS1 bildet die vierte Welle 4 des Getriebes. Ein Hohlrad H02 des zweiten Planetenradsatzes RS2 und ein Sonnenrad S03 des dritten Planetenradsatzes RS3 sind ständig miteinander verbunden und bilden die fünfte Welle 5 des Getriebes. Ein Steg ST1 des ersten Planetenradsatzes RS1 und ein Steg ST2 des zweiten Planetenradsatzes RS2 und ein Hohlrad H03 des dritten Planetenradsatzes RS3 sind ständig miteinander verbunden und bilden die sechste Welle 6 des Getriebes. Ein Hohlrad H04 des vierten Planetenradsatzes RS4 bildet die siebte Welle 7 des Getriebes. Ein Sonnenrad S02 des zweiten Planetenradsatzes RS2 schließlich bildet die achte Welle 8 des Getriebes.

Hinsichtlich der kinematischen Kopplung der fünf Schaltelemente A bis E an die so beschriebenen Wellen 1 bis 8 des Getriebes ist bei dem Mehrstufengetriebe gemäß Figur 6 folgendes vorgesehen: Die Bremse A ist im Kraftfluss zwischen der dritten Welle 3 und dem Getriebegehäuse GG, die Bremse B im Kraftfluss zwischen der vierten Welle 4 und dem Getriebegehäuse GG, die Kupplung C im Kraftfluss zwischen der ersten und fünften Welle 1, 5, die Kupplung D im Kraftfluss zwischen der siebten und achten Welle 7, 8 und die Kupplung E im Kraftfluss zwischen der fünften und siebten Welle 5, 7 angeordnet.

Der Unterschied zwischen den Radsatzschemata der gattungsgemäßen Patentanmeldung DE 102005002337.1 und der Figuren 1 bis 6 liegt somit in der kinematischen Anbindung des zweiten Planetenradsatzes RS2 an die anderen drei Planetenradsätze RS1, RS3, RS4 des Getriebes.

Im Prinzip kann die räumliche Anordnung der Schaltelemente des in Figur 6 dargestellten Ausführungsbeispiels eines erfindungsgemäßen Mehrstufengetriebes innerhalb des Getriebes beliebig sein und wird nur durch die Abmessungen und die äußere Formgebung des Getriebegehäuses GG begrenzt. So wurde in Figur 6 die räumliche Anordnung der beiden Bremsen A, B wiederum beispielhaft aus Figur 1 übernommen; entsprechend sind auch die diesbezüglich im Rahmen der Beschreibung der Figur 1 getroffenen Aussagen auch auf Figur 6 übertragbar. Die räumliche Anordnung der drei Kupplungen C, D, E wurde beispielhaft aus Figur 4 übernommen; entsprechend sind die diesbezüglich im Rahmen der Beschreibung der Figur 4 getroffen Aussagen sinngemäß auch auf Figur 6 übertragbar. Auf konstruktiv sinnvolle Varianten zur Anordnung der Schaltelemente wird später noch im Detail eingegangen.

Entsprechend der räumlichen Anordnung der vier Radsätze in axialer Richtung gesehenen in der Folge "RS1, RS4, RS2, RS3" in Verbindung mit der in Figur 6 dargestellten räumlichen Anordnung der fünf Schaltelemente A bis E verläuft die erste Welle 1 des Getriebes abschnittsweise zentrisch innerhalb der dritten Welle 3 und abschnittsweise zentrisch innerhalb der siebten Welle 7 und abschnittsweise auch innerhalb der fünften Welle 5. Der erste und vierte Planetenradsatz RS1, RS4 wird also nur von der Welle 1 bzw. der Antriebswelle AN in axialer Richtung zentrisch durchgriffen. Die siebte Welle wiederum verläuft abschnittsweise zentrisch innerhalb der achten Welle 8 und durchgreift dabei den zweiten Planetenradsatz RS2 in axialer Richtung zentrisch. Somit wird der zweite Planetenradsatz RS2 von zwei Wellen - nämlich von Welle 1 bzw. Antriebswelle und Welle 7 - in axialer Richtung zentrisch durchgriffen. Die Kupplung D ist zumindest teilweise innerhalb eines Zylinderraums angeordnet, der durch einen als Außenlamellenträger für diese Kupplung D ausgebildeten Abschnitt der Welle 7 gebildet wird. Die Kupplung E ist zumindest weitgehend innerhalb eines Zylinderraums angeordnet, der durch einen als Außenlamellenträger für diese Kupplung E ausgebildeten anderen Abschnitt der Welle 7 gebildet wird. Die fünfte Welle 5 wiederum übergreift in ihrem axialen Verlauf die Kupplung E vollständig. Die sechste Welle 6 übergreift in ihrem axialen Verlauf den vierten Planetenradsatz RS4, die Welle 7, die Kupplung D, den zweiten Planetenradsatz RS2 und die Welle 5 und somit auch die Kupplungen E und C vollständig. Somit ist die Kupplung E auch innerhalb eines durch die Welle 5 gebildeten Zylinderraums und auch innerhalb eines durch die Welle 6 gebildeten Zylinderraums angeordnet. Weiterhin ist somit die Kupplung C auch innerhalb eines durch die Welle 5 gebildeten Zylinderraums und auch innerhalb eines durch die Welle 6 gebildeten Zylinderraums angeordnet.

In Figur 6a ist ein Schaltschema des erfindungsgemäßen Mehrstufengetriebes gemäß Figur 6 dargestellt. In jedem Gang sind drei Schaltelemente geschlossen und zwei Schaltelemente offen, wobei die Schaltlogik identisch ist zu Figur 1 a. Neben dieser Schaltlogik, können dem Schaltschema auch beispielhafte Werte für die jeweiligen Übersetzungen i der einzelnen Gangstufen und die daraus zu bestimmenden Stufensprünge φ entnommen werden. Die angegebenen Übersetzungen i ergeben sich aus den (typischen) Standgetriebeübersetzungen der vier Planetensätze RS1, RS2, RS3, RS4 von minus 1,55, minus 1,55, minus 3,70 und minus 1,70.

Ausgehend von dem Getriebeschema gemäß Figur 6 werden im folgenden anhand der Figuren 6b, 6c und 6d drei beispielhafte Bauteilanordnungsvarianten für dieses erfindungsgemäße Getriebe näher beschrieben. Dabei ist das erste und zweite Schaltelement A, B jeweils beispielhaft als Lamellenbremse und das dritte, vierte und fünfte Schaltelement C, D, E jeweils beispielhaft als Lamellenkupplung ausgeführt. Das jeweilige Lamellenpaket mit Innen- und Außenlamellen der Schaltelemente A, B, C, D, E ist mit A_l, B_l, C_l, D_l bzw. E_l bezeichnet, der jeweilige Innenlamellenträger mit A_i, B_i, C_i, D_i bzw. E_i, der jeweilige Außenlamellenträger mit A_a, B_a, C_a, D_a bzw. E_a und - in stark vereinfacht schematischer Darstellung - die jeweilige Servoeinrichtung zur Betätigung des Schaltelementes mit A_s, B_s, C_s, D_s bzw. E_s. In bekannter Weise können alle Servoeinrichtungen A_s bis E_s einen Druckraum, einen auf das jeweilige Lamellenpaket A_l bis E_l wirkenden Kolben sowie ein als Tellerfeder oder ringförmiges Paket parallelgeschalteter Spiralfedern ausgebildetes Kolbenrückstellelement aufweisen, die Servoeinrichtungen C_s bis E_s der drei Kupplungen C bis E zusätzlich auch einen dynamischen Druckausgleich zur Kompensation des rotatorischen Drucks des jeweiligen rotierenden Druckraums. Zusätzlich in den Figuren 6b, 6c und 6d eingezeichnet ist ein an sich bekannter hydrodynamischer Drehmomentwandler mit integrierter Überbrückungskupplung, der als beispielhaftes Anfahrelement ANF des Getriebes im Kraftfluss zwischen einem nicht näher dargestellten Antriebsmotor des Getriebes und der Antriebswelle AN des Getriebes angeordnet ist. Antriebswelle AN und Abtriebswelle AB sind beispielhaft koaxial zueinander angeordnet, sodass sich Antrieb und Abtrieb des Getriebes auf gegenüberliegenden Seiten des Getriebes befinden. Der erste und vierte Planetenradsatz RS1, RS4 sind in allen drei Bauteilanordnungsvarianten unmittelbar nebeneinander angeordnet, wobei der erste Planetenradsatz RS1 dem Anfahrelement ANF bzw. dem Antriebsmotor zugewandt ist.

Figur 6b zeigt nun die erste beispielhafte Bauteilanordnungsvariante für das Mehrstufengetriebe gemäß Figur 6. Die räumliche Anordnung und konstruktive Ausbildung der beiden Bremsen A und B ist weitgehend aus Figur 4b übernommen. Diese beiden Bremsen sind auf der dem Antriebsmotor bzw. dem externen Anfahrelement ANF zugewandten Seite des Getriebes unmittelbar benachbart zum ersten Planetenradsatz RS1 angeordnet. Dabei sind die beiden Bremsen A, B im wesentlichen axial nebeneinander angeordnet, die Bremse B allerdings auf einem größeren Durchmesser als die Bremse A. Räumlich gesehen ist die Bremse B in etwa radial über dem ersten Planetenradsatz RS2 angeordnet, wobei der Innenlamellenträger B_i der Bremse B als ein Abschnitt der Welle 4 des Getriebes mit dem Hohlrad dieser Planetenradsatzes RS1 verbunden ist. Die Bremse A ist räumlich gesehen in etwa auf dem Durchmesser des Hohlrades des Planetenradsatzes RS1 auf dessen dem Antrieb des Getriebes zugewandten Seite und damit näher am Antrieb angeordnet als die Bremse B. Der Innenlamellenträger A_i der Bremse A ist als ein Abschnitt der Welle 3 des Getriebes mit den Sonnenrädern der Planetenradsätze RS1 und RS4 verbunden. Die Außenlamellenträger A_a, B_a der beiden Bremsen sind beid beispielhaft in die mit dem Getriebegehäuse GG verbundene antriebsnahe Gehäusewand GW integriert. Die Servoeinrichtungen A_s, B_s der beiden Bremsen A, B sind in dieser Gehäusewand axial verschiebbar gelagert und betätigen das ihnen jeweils zugeordnete Lamellenpaket A_l, B_l beim Schließen der jeweiligen Bremse A, B axial in Richtung der Planetenradsätze.

Im Unterschied zu Figur 6 ist die Kupplung C in Figur 6b in einem Bereich axial zwischen den Planetenradsätzen RS4 und RS2 angeordnet, dabei unmittelbar axial angrenzend an den Planetenradsatz RS4. Der Außenlamellenträger C_a der Kupplung C ist als ein in Richtung Planetenradsatz RS2 hin geöffneter zylinderförmiger Topf ausgebildet, innerhalb dessen das Lamellenpaket C_l und die diesem Lamellenpaket C_l zugeordnete Servoeinrichtung C_s der Kupplung C angeordnet sind. Kinematisch ist der Außenlamellenträger C_a der Welle 1 des Getriebes zugeordnet und mit dem Steg des Planetenradsatzes RS4 und der Antriebswelle AN des Getriebes verbunden. Entsprechend rotiert die Servoeinrichtung C_s stets mit Drehzahl der Antriebswelle AN und betätigt das ihr zugeordnete Lamellenpaket C_l beim Schließen der Kupplung C axial in Richtung des Planetenradsatzes RS2. Der Innenlamellenträger C_i ist kinematisch der Welle 5 des Getriebes zugeordnet und mit dem Sonnenrad des Planetenradsatzes RS3 und dem Hohlrad des Planetenradsatzes RS2 verbunden. Für den Fachmann ist leicht ersichtlich, dass Druck- und Schmiermittelzuführung zur Kupplung C konstruktiv sehr einfach realisierbar ist, beispielsweise über entsprechende Bohrungen bzw. Kanäle der Antriebswelle AN und nur eine rotierende Druck- bzw. Schmiermittelzuführung.

Im Unterschied zu Figur 6 bilden die Kupplung D und E in Figur 6b eine vormontierbare Baugruppe, die axial zwischen den Planetenradsätzen RS2 und RS3 angeordnet ist. Dabei ist für diese beiden Kupplungen D, E ein gemeinsamer Außenlamellenträger D_a / E_a vorgesehen, der kinematisch der Welle 7 des Getriebes zugeordnet und mit dem Hohlrad des Planetenradsatzes RS4 verbunden ist. Geometrisch ist dieser gemeinsame Außenlamellenträger D_a /E_a als ein beidseitig geöffneter zylinderförmiger Topf mit in etwa mittig angeordnetem Topfboden ausgebildet. Die Kupplung D ist auf der dem Planetenradsatz RS2 zugewandten Seite dieses Topfbodens und die Kupplung E auf der dem Planetenradsatz RS4 zugewandten Seite dieses Topfbodens angeordnet, jeweils innerhalb eines Zylinderraums, der durch den Außenlamellenträger D_a / E_a gebildet wird. Die Servoeinrichtungen D_s, E_s der beiden Kupplungen D, E grenzen jeweils an den genannten Topfboden an und sind beide an dem gemeinsamen Außenlamellenträger D_a / E_a axial verschiebbar gelagert, sodass die Servoeinrichtung D_s das ihr zugeordnete Lamellenpaket D_l beim Schließen der Kupplung D axial in Richtung Planetenradsatz RS2 betätigt, und sodass die Servoeinrichtung E_s das ihr zugeordnete Lamellenpaket E_l beim Schließen der Kupplung E axial in Richtung Planetenradsatz RS3 betätigt. Beide Servoeinrichtungen D_s, E_s rotieren also stets mit Drehzahl der Welle 7 bzw. mit Drehzahl des Hohlrades des Planetenradsatzes RS4. Der Innenlamellenträger D_i der Kupplung D ist kinematisch der Welle 8 zugeordnet und mit dem Sonnenrad des Planetenradsatzes RS2 verbunden. Der Innenlamellenträger E_i der Kupplung E ist kinematisch der Welle 5 zugeordnet und mit dem Sonnenrad des Planetenradsatzes RS3 und dem Hohlrad des Planetenradsatzes RS2 verbunden. Für den Fachmann ist leicht ersichtlich, dass Druck- und Schmiermittelzuführung zu den beiden Kupplungen D, E konstruktiv vergleichsweise einfach realisierbar ist, beispielsweise über entsprechende Bohrungen bzw. Kanäle der Welle 5, in die wiederum das Druck- bzw. Schmiermittel über rotierende Druck- bzw. Schmiermittelzuführungen - wahlweise über die Antriebswelle AN oder die Abtriebswelle AB - eingebracht wird.

In Figur 6c ist die zweite beispielhafte Bauteilanordnungsvariante für das Mehrstufengetriebe gemäß Figur 6 dargestellt. Die räumliche Anordnung der beiden Bremsen A, B axial nebeneinander auf gleichem Durchmesser entspricht deren Anordnung aus Figur 6. Als Konstruktionsdetail ist ein Außenlamellenträger A_a der Bremse A vorgesehen, der verdrehfest in das Getriebegehäuse GG von der dem Antrieb des Getriebes zugewandten Seite her eingesetzt ist und sowohl das Lamellenpaket A_l und die diesem Lamellenpaket A_l zugeordnete Servoeinrichtung A_s der Bremse A aufnimmt, als auch die dem Lamellenpaket B_l zugeordnete Servoeinrichtung B_s der Bremse B. Der Außenlamellenträger B_a der Bremse B ist in dem Getriebegehäuse GG integriert. Die beiden axial verschiebbar am Außenlamellenträger A_a gelagerten Servoeinrichtungen A_s, B_s sind also unmittelbar axial nebeneinander angeordnet und werden nur durch eine Mantelfläche dieses Außenlamellenträgers A_a voneinander getrennt. Entsprechend betätigt die Servoeinrichtung A_s das ihr zugeordnete Lamellenpaket A_l beim Schließen der Bremse A axial in zu den Planetenradsätzen entgegengesetzter Richtung bzw. axial in Richtung der dem Antrieb des Getriebes zugewandten Gehäuseaußenwand GW. Entsprechend betätigt die Servoeinrichtung B_s das ihr zugeordnete Lamellenpaket B_l beim Schließen der Bremse B axial in Richtung der Planetenradsätze.

Im Unterschied zu Figur 6 ist in Figur 6c nur die Kupplung C axial zwischen den Planetenradsätzen RS2 und RS3 angeordnet, dabei unmittelbar axial angrenzend an den Planetenradsatz RS3. Der Außenlamellenträger C_a der Kupplung C ist als ein in Richtung Planetenradsatz RS2 hin geöffneter zylinderförmiger Topf ausgebildet, innerhalb dessen das Lamellenpaket C_l und die diesem Lamellenpaket C_l zugeordnete Servoeinrichtung C_s der Kupplung C angeordnet sind. Kinematisch ist der Außenlamellenträger C_a der Welle 5 des Getriebes zugeordnet und entsprechend mit dem Sonnenrad des Planetenradsatzes RS3 und dem Hohlrad des Planetenradsatzes RS2 verbunden. Entsprechend rotiert die am Außenlamellenträger C_a axial verschiebbar gelagerte Servoeinrichtung C_s stets mit Drehzahl der Welle 5 und betätigt das ihr zugeordnete Lamellenpaket C_l beim Schließen der Kupplung C axial in Richtung des Planetenradsatzes RS2. Der Innenlamellenträger C_i ist kinematisch der Welle 1 des Getriebes zugeordnet und entsprechend mit dem Steg des Planetenradsatzes RS4 und der Antriebswelle AN des Getriebes verbunden. Die Druck- und Schmiermittelzuführung zur Kupplung C ist konstruktiv sehr einfach realisierbar, beispielsweise über entsprechende Bohrungen bzw. Kanäle der Antriebswelle AN und nur eine rotierende Druck- bzw. Schmiermittelzuführung.

Wie in Figur 6c weiterhin ersichtlich, bilden die Kupplungen D und E im Unterschied zu Figur 6 ein Baugruppe, die axial zwischen den Planetenradsätzen RS4 und RS2 angeordnet ist. Räumlich gesehen ist die Kupplung E dabei vollständig innerhalb eines Zylinderraums angeordnet, der durch die Kupplung D gebildet wird. Die Lamellenpakete D_l, E_l der Kupplungen D, E sind in etwa radial übereinander angeordnet. Die Außenlamellenträger D_a, E_a der Kupplungen D, E sind beide kinematisch der Welle 7 des Getriebes zugeordnet und entsprechend miteinander und mit dem Hohlrad des Planetenradsatzes RS4 verbunden. Praktischerweise sind beide Außenlamellenträger D_a, E_a in ihrem Nabenbereich miteinander verbunden und radial auf der Antriebswelle AN bzw. der Welle 1 des Getriebes verdrehbar gelagert. Der Innenlamellenträger D_i der Kupplung D ist kinematisch der Welle 8 des Getriebes zugeordnet und entsprechend mit dem Sonnenrad des Planetenradsatzes RS2 verbunden. Der Innenlamellenträger E_i der Kupplung E ist kinematisch der Welle 5 zugeordnet und entsprechend mit dem Sonnenrad des Planetenradsatzes RS3 und dem Hohlrad des Planetenradsatzes RS2 verbunden. Praktischerweise ist der Innenlamellenträger E_i in seinem Nabenbereich radial auf der Antriebswelle AN bzw. der Welle 1 des Getriebes und der Innenlamellenträger D_i in seinem Nabenbereich an der Nabe des Innenlamellenträger E_i bzw. radial auf der Welle 8 des Getriebes verdrehbar gelagert. Geometrisch ist der Außenlamellenträger D_a der radial äußeren Kupplung D der Baugruppe als ein in Richtung Planetenradsatz RS2 hin geöffneter zylinderförmiger Topf ausgebildet, innerhalb dessen das Lamellenpaket D_l und die diesem Lamellenpaket D_l zugeordnete Servoeinrichtung D_s der Kupplung D angeordnet sind. Diese stets mit Drehzahl der Welle 7 rotierende und am Außenlamellenträger D_a axial verschiebbar gelagerte Servoeinrichtung D_s ist näher am Planetenradsatz RS4 angeordnet als das ihr zugeordnete Lamellenpaket D_l und betätigt dieses beim Schließen der Kupplung D axial in Richtung Planetenradsatz RS2. Der Außenlamellenträger E_a der radial inneren Kupplung E der Baugruppe ist geometrisch ebenfalls als ein in Richtung Planetenradsatz RS2 hin geöffneter zylinderförmiger Topf ausgebildet. Das Lamellenpaket E_l und die diesem Lamellenpaket E_l zugeordnete Servoeinrichtung E_s der Kupplung E sind innerhalb des Zylinderraums angeordnet, der durch diesen Außenlamellenträger E_a gebildet wird. Diese stets mit Drehzahl der Welle 7 rotierende und am Außenlamellenträger E_a axial verschiebbar gelagerte Servoeinrichtung E_s ist näher am Planetenradsatz RS4 angeordnet als das ihr zugeordnete Lamellenpaket E_l und betätigt dieses beim Schließen der Kupplung E axial in Richtung Planetenradsatz RS2. Servoeinrichtung D_s und Innenlamellenträger D_i der (radial äußeren) Kupplung D umschließen also den Außen- und Innenlamellenträger E_a, E_i der (radial inneren) Kupplung E. Die Druck- und Schmiermittelzuführungen zu den Kupplung C ist konstruktiv vergleichsweise einfach realisierbar, beispielsweise über entsprechende Bohrungen bzw. Kanäle der Antriebswelle AN und der Welle 7.

In Figur 6d schließlich ist die dritte beispielhafte Bauteilanordnungsvariante für das Mehrstufengetriebe gemäß Figur 6 dargestellt. Aus Figur 6d ist leicht ersichtlich, dass die räumliche Anordnung und konstruktive Ausbildung der Schaltelemente A, B, D und E aus Figur 6c übernommen wurden, sodass auf eine diesbezügliche Beschreibung an dieser Stelle verzichtet werden kann. Der Unterschied zu Figur 6c besteht nur in der räumlichen Anordnung und konstruktiven Ausbildung der Kupplung C.

Räumlich gesehen, ist die Kupplung C gemäß Figur 6d nunmehr auf der Seite des dritten Planetenradsatzes RS3 angeordnet, die dem zweiten Planetenradsatz RS2 gegenüber liegt. Entsprechend der beispielhaften koaxialen Anordnung von Antriebs- und Abtriebswelle AN, AB des Getriebes ist die Kupplung C also nunmehr im Bereich der getriebeabtriebsnahen Außenwand des Getriebegehäuses GG angeordnet. Dabei umgreift die Welle 2 des Getriebes die Kupplung C in axialer Richtung radialer vollständig. Nunmehr ist der Innenlamellenträger C_i der Kupplung C kinematisch der Welle 5 des Getriebes zugeordnet und der Außenlamellenträger C_a der Kupplung C kinematisch der Welle 1 des Getriebes. Geometrisch ist der Außenlamellenträger C_a der Kupplung C als ein in Richtung Planetenradsatz RS3 hin geöffneter zylinderförmiger Topf ausgebildet, innerhalb dessen das Lamellenpaket C_l und die diesem Lamellenpaket C_l zugeordnete Servoeinrichtung C_s der Kupplung C angeordnet sind. Dabei ist das Lamellenpaket C_l benachbart zum Planetenradsatz RS3 angeordnet. Entsprechend rotiert die am Außenlamellenträger C_a axial verschiebbar gelagerte Servoeinrichtung C_s stets mit Drehzahl der Antriebswelle AN bzw. der Welle 1 und betätigt das ihr zugeordnete Lamellenpaket C_l beim Schließen der Kupplung C axial in Richtung des Planetenradsatzes RS3. Für den Fachmann ist leicht ersichtlich, dass Druck- und Schmiermittelzuführung zur Kupplung C konstruktiv einfach realisierbar ist, beispielsweise über entsprechende Bohrungen bzw. Kanäle der Antriebswelle AN und nur eine rotierende Druck- bzw. Schmiermittelzuführung.

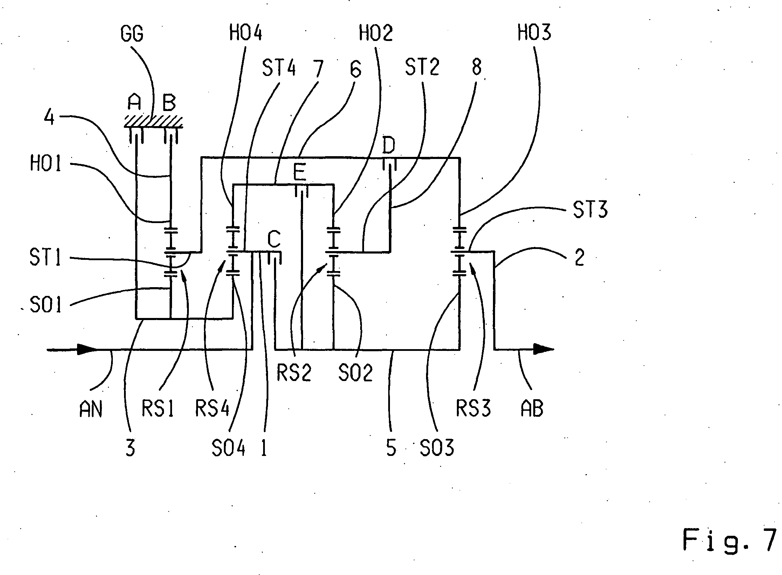

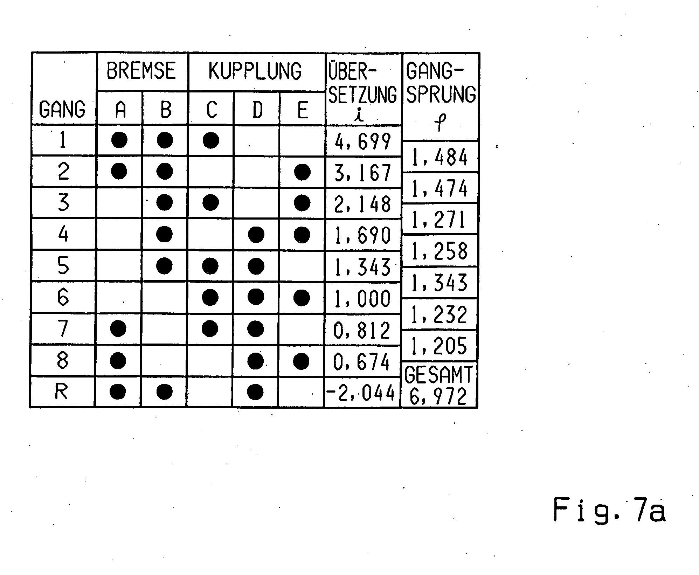

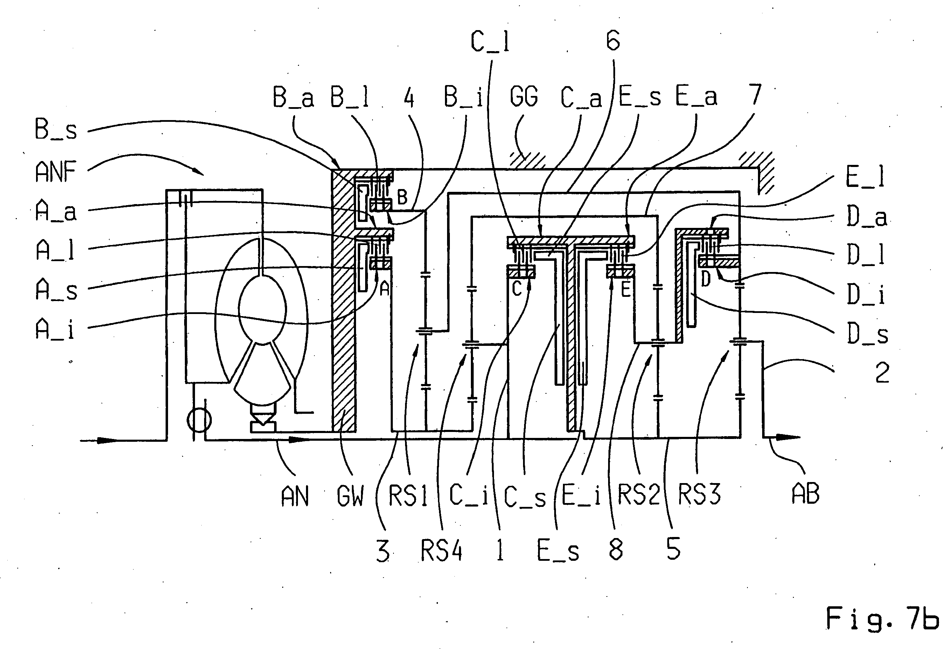

Figur 7 schließlich zeigt ein Ausführungsbeispiel für ein Mehrstufengetriebe gemäß der siebten erfindungsgemäßen Lösung, wiederum in schematischer Darstellung. Vergleichbar zu Figur 1, weist das Getriebe eine Antriebswelle AN und eine Abtriebswelle AB, in einem Gehäuse GG des Getriebes angeordnete vier Planetenradsätze RS1, RS2, RS3, RS4 und fünf Schaltelemente A, B, C, D, E, sowie insgesamt zumindest acht drehbare Wellen 1, 2, 3, 4, 5, 6, 7, 8 auf. Alle vier Planetenradsätze RS1, RS2, RS3, RS4 sind als einfache Minus-Planetenradsätze ausgebildet und in diesem Ausführungsbeispiel in axialer Richtung in der Reihenfolge "RS1, RS4, RS2, RS3" koaxial hintereinander angeordnet. Die Schaltelemente A und B sind als Bremsen ausgebildet, beispielhaft ausgeführt als reibschlüssig schaltbare Lamellenbremsen. Die Schaltelemente C, D und E sind als Kupplungen ausgebildet, beispielhaft ausgeführt als reibschlüssig schaltbare Lamellenkupplungen. Mit diesen fünf Schaltelementen A bis E ist ein selektives Schalten von acht Vorwärtsgängen und einem Rückwärtsgang realisierbar.

Hinsichtlich der kinematischen Kopplung der einzelnen Elemente der vier Planetenradsätze RS1, RS2, RS3, RS4 untereinander und zur Antriebs- und Abtriebswelle AN, AB ist bei dem Mehrstufengetriebe gemäß Figur 7 folgendes vorgesehen: Ein Steg ST4 des vierten Planetenradsatzes RS4 und die Antriebswelle AN sind ständig miteinander verbunden und bilden die erste Welle 1 des Getriebes. Ein Steg ST3 des dritten Planetenradsatzes RS3 bildet die zweite Welle 2 des Getriebes. Ein Sonnenrad SO1 des ersten Planetenradsatzes RS1 und ein Sonnenrad S04 des vierten Planetenradsatzes RS4 sind ständig miteinander verbunden und bilden die dritte Welle 3 des Getriebes. Ein Hohlrad HO1 des ersten Planetenradsatzes RS1 bildet die vierte Welle 4 des Getriebes. Ein Sonnenrad S02 des zweiten Planetenradsatzes RS2 und ein Sonnenrad S03 des dritten Planetenradsatzes RS3 sind ständig miteinander verbunden und bilden die fünfte Welle 5 des Getriebes. Ein Steg ST1 des ersten Planetenradsatzes RS1 und ein Hohlrad H03 des dritten Planetenradsatzes RS3 sind ständig miteinander verbunden und bilden die sechste Welle 6 des Getriebes. Ein Hohlrad H02 des zweiten Planetenradsatzes RS2 und ein Hohlrad H04 des vierten Planetenradsatzes RS4 sind ständig miteinander verbunden und bilden die siebte Welle 7 des Getriebes. Ein Steg ST2 des zweiten Planetenradsatzes RS2 schließlich bildet die achte Welle 8 des Getriebes.

Hinsichtlich der kinematischen Kopplung der fünf Schaltelemente A bis E an die so beschriebenen Wellen 1 bis 8 des Getriebes ist bei dem Mehrstufengetriebe gemäß Figur 7 folgendes vorgesehen: Die Bremse A ist im Kraftfluss zwischen der dritten Welle 3 und dem Getriebegehäuse GG, die Bremse B im Kraftfluss zwischen der vierten Welle 4 und dem Getriebegehäuse GG, die Kupplung C im Kraftfluss zwischen der ersten und fünften Welle 1, 5, die Kupplung D im Kraftfluss zwischen der sechsten und achten Welle 6, 8 und die Kupplung E im Kraftfluss zwischen der fünften und siebten Welle 5, 7 angeordnet.

Der Unterschied zwischen den Radsatzschemata der gattungsgemäßen Patentanmeldung DE 102005002337.1 und der Figuren 1 bis 7 liegt somit wiederum in der kinematischen Anbindung des zweiten Planetenradsatzes RS2 an die anderen drei Planetenradsätze RS1, RS3, RS4 des Getriebes.

Im Prinzip kann die räumliche Anordnung der Schaltelemente des in Figur 7 dargestellten Ausführungsbeispiels eines erfindungsgemäßen Mehrstufengetriebes innerhalb des Getriebes beliebig sein und wird nur durch die Abmessungen und die äußere Formgebung des Getriebegehäuses GG begrenzt. So wurde in Figur 7 die räumliche Anordnung der beiden Bremsen A, B wiederum beispielhaft aus Figur 1 übernommen; entsprechend sind die diesbezüglich im Rahmen der Beschreibung der Figur 1 getroffenen Aussagen sinngemäß auch auf Figur 7 übertragbar. Die räumliche Lage der beiden Kupplungen C, E wurde beispielhaft aus Figur 5 übernommen, die Kupplung D ist im Unterschied zu Figur 5 nunmehr axial zwischen den beiden Planetenradsätzen RS2 und RS3 angeordnet. Entsprechend sind die diesbezüglich im Rahmen der Beschreibung der Figur 5 und der Figur 5c getroffenen Aussagen sinngemäß auch auf Figur 7 übertragbar, natürlich unter Berücksichtigung der unterschiedlichen Anbindung der Kupplung D an den zweiten Planetenradsatz RS2. Auf eine weitere konstruktiv sinnvolle Variante zur Anordnung der Schaltelemente wird später noch im Detail eingegangen.

Entsprechend der räumlichen Anordnung der vier Radsätze in axialer Richtung gesehenen in der Folge "RS1, RS4, RS2, RS3" in Verbindung mit der in Figur 7 dargestellten räumlichen Anordnung der fünf Schaltelemente A bis E verläuft die erste Welle 1 des Getriebes abschnittsweise zentrisch innerhalb der dritten Welle 3. Der erste und vierte Planetenradsatz RS1, RS4 wird also nur von der Welle 1 bzw. der Antriebswelle AN in axialer Richtung zentrisch durchgriffen. Ein Abschnitt der fünften Welle 5 bildet eine Sonnenwelle des zweiten und dritten Planetenradsatzes RS2, RS3, die beide von keiner Welle des Getriebes in axialer Richtung zentrisch durchgriffen werden. Die siebte Welle 7 übergreift in ihrem axialen Verlauf die Kupplung C vollständig und bildet einen abschnittsweise als Außenlamellenträger ausgebildeten Zylinderraum, innerhalb dessen die Kupplung E angeordnet ist. Die Kupplung C ist zumindest weitgehend innerhalb eines Zylinderraums angeordnet, der durch einen als Außenlamellenträger für diese Kupplung C ausgebildeten Abschnitt der Welle 1 gebildet wird. Die sechste Welle 6 weist einen als Außenlamellenträger für die Kupplung D ausgebildeten Abschnitt auf und übergreift in ihrem axialen Verlauf den vierten Planetenradsatz RS4, die Welle 7, den zweiten Planetenradsatz RS2 und die Kupplung D und somit auch die Kupplung C vollständig. Somit ist die Kupplung C auch innerhalb eines durch die Welle 7 gebildeten Zylinderraums und auch innerhalb eines durch die Welle 6 gebildeten Zylinderraums angeordnet. Weiterhin ist auch die Kupplung E innerhalb eines durch die Welle 6 gebildeten Zylinderraums angeordnet.

In Figur 7a ist ein Schaltschema des erfindungsgemäßen Mehrstufengetriebes gemäß Figur 7 dargestellt. In jedem Gang sind drei Schaltelemente geschlossen und zwei Schaltelemente offen, wobei die Schaltlogik identisch ist zu Figur 1 a. Neben dieser Schaltlogik, können dem Schaltschema auch beispielhafte Werte für die jeweiligen Übersetzungen i der einzelnen Gangstufen und die daraus zu bestimmenden Stufensprünge φ entnommen werden. Die angegebenen Übersetzungen i ergeben sich aus den (typischen) Standgetriebeübersetzungen der vier Planetensätze RS1, RS2, RS3, RS4 von minus 2,12, minus 1,55, minus 3,70 und minus 2,07.

Figur 7b zeigt nun eine beispielhafte, konstruktiv sinnvolle Bauteilanordnungsvariante für das Mehrstufengetriebe gemäß Figur 7. Die räumliche Anordnung und konstruktive Ausbildung der beiden Bremsen A, B ist aus Figur 5b übernommen, sodass auf eine diesbezügliche Beschreibung an dieser Stelle verzichtet werden kann. Aus Figur 7b ist leicht ersichtlich, dass die Unterschiede zu Figur 7 nur konstruktive Ausbildung der Kupplungen C, D und E betreffen. Ähnlich wie in Figur 7 sind die Kupplungen C und E räumlich gesehen axial zwischen dem vierten Planetenradsatz RS4 und dem zweiten Planetenradsatz RS2 angeordnet, die Kupplung D axial zwischen dem zweiten Planetenradsatz RS2 und dem dritten Planetenradsatz RS3.

Als konstruktives Detail ist in Figur 7b vorgesehen, dass die beiden Kupplungen C und E eine vormontierbare Baugruppe bilden. Hierzu ist für diese beiden Kupplungen C, E ein gemeinsamer Außenlamellenträger C_a/E_a vorgesehen, der kinematisch der Welle 5 des Getriebes zugeordnet und entsprechend dem zugrunde liegenden Getriebeschema mit den Sonnenrädern des zweiten und dritten Planetenradsatzes RS2, RS3 verbunden ist. Geometrisch ist dieser gemeinsame Außenlamellenträger C_a / E_a als ein beidseitig geöffneter zylinderförmiger Topf mit in etwa mittig angeordnetem Topfboden ausgebildet. Die Kupplung C ist auf der dem Planetenradsatz RS4 zugewandten Seite dieses Topfbodens und die Kupplung E auf der dem Planetenradsatz RS2 zugewandten Seite dieses Topfbodens angeordnet, jeweils innerhalb eines Zylinderraumes, der durch den Außenfamellenträger C_a / E_a gebildet wird. Die Servoeinrichtungen C_s, E_s der beiden Kupplungen C, E grenzen jeweils an den genannten Topfboden an und sind beide an dem gemeinsamen Außenlamellenträger C_a / E_a axial verschiebbar gelagert, sodass die Servoeinrichtung C_s das ihr zugeordnete Lamellenpaket C_l beim Schließen der Kupplung C axial in Richtung Planetenradsatz RS4 betätigt, und sodass die Servoeinrichtung E_s das ihr zugeordnete Lamellenpaket E_l beim Schließen der Kupplung E axial in Richtung Planetenradsatz RS2 betätigt. Beide Servoeinrichtungen C_s, E_s rotieren also stets mit Drehzahl der (Sonnen-)Welle 5. Der Innenlamellenträger C_i der Kupplung C ist kinematisch der Welle 1 des Getriebes zugeordnet und entsprechend mit dem Steg des Planetenradsatzes RS4 und der Antriebswelle AN verbunden. Der Innenlamellenträger E_i der Kupplung E ist kinematisch der Welle 8 des Getriebes zugeordnet und entsprechend mit dem Steg des Planetenradsatzes RS2 verbunden. Für den Fachmann ist leicht ersichtlich, dass den beiden Kupplungen C, E Druck-und Schmiermittel konstruktiv vergleichsweise einfach wahlweise von der Antriebswelle AN oder von der Abtriebswelle AB her zugeleitet werden kann.

Als weiteres konstruktives Detail ist in Figur 7b vorgesehen, dass der Außenlamellenträger D_a der Kupplung D kinematische der Welle 5 zugeordnet und entsprechend dem zugrundeliegenden Getriebeschema mit dem Steg des zweiten Planetenradsatzes RS2 verbunden ist, und dass der Innenlamellenträger D_i der Kupplung D kinematisch der Welle 6 des Getriebes zugeordnet und entsprechend mit dem Hohlrad des dritten Planetenradsatzes RS3 und dem Steg des ersten Planetenradsatzes RS1 verbunden ist. Geometrisch ist der Außenlamellenträger D_a dabei als ein in Richtung Planetenradsatz RS3 hin geöffneter zylinderförmiger Topf ausgebildet, innerhalb dessen das Lamellenpaket D_l und die diesem Lamellenpaket D_l zugeordnete Servoeinrichtung D_s der Kupplung D angeordnet sind. Dabei ist das Lamellenpaket D_l unmittelbar benachbart zum Planetenradsatz RS3 angeordnet. Der Außenlamellenträger D_a und ein dem Planetenradsatz RS3 zugewandtes Stegblech des Planetenradsatzes RS2 können beispielsweise einstückig ausgeführt sein und auf der (Sonnen-)Welle 8 radial verdrehbar gelagert sein. Die stets mit Drehzahl der Welle 6 rotierende und am Außenlamellenträger D_a axial verschiebbar gelagerte Servoeinrichtung D_s betätigt das ihr zugeordnete Lamellenpaket D_l beim Schließen der Kupplung D axial in Richtung des Planetenradsatzes RS3. Für den Fachmann ist leicht ersichtlich, dass Druck- und Schmiermittelzuführung zur Kupplung D konstruktiv vergleichsweise einfach über nur zwei rotierende Druck- bzw. Schmiermittelzuführungen realisierbar ist.

Für alle zuvor dargestellten bzw. beschriebenen Ausführungsbeispiele der ganzen Getriebefamilie gemäß der Erfindung gilt zudem folgendes:
Gemäß der Erfindung können sich auch bei gleichem Getriebeschema, je nach Standgetriebeübersetzung der einzelnen Planetensätze, unterschiedliche Gangsprünge ergeben, so dass eine anwendungs- bzw. fahrzeugspezifische Variation ermöglicht wird.

Es ist zudem möglich, an jeder geeigneten Stelle des Mehrstufengetriebes zusätzliche Freiläufe vorzusehen, beispielsweise zwischen einer Welle und dem Gehäuse oder um zwei Wellen gegebenenfalls zu verbinden.

Auf der Antriebsseite oder auf der Abtriebsseite können erfindungsgemäß ein Achsdifferential und/oder ein Verteilerdifferential angeordnet werden.

Im Rahmen einer vorteilhaften Weiterbildung kann die Antriebswelle AN durch ein Anfahrelement von einem Antriebsmotor nach Bedarf getrennt werden, wobei als ein solches Anfahrelement ein hydrodynamischer Wandler, eine hydraulische Kupplung, eine trockene Anfahrkupplung, eine nasse Anfahrkupplung, eine Magnetpulverkupplung oder eine Fliehkraftkupplung einsetzbar sind. Es ist auch möglich, ein derartiges Anfahrelement in Kraftflussrichtung hinter dem Getriebe anzuordnen, wobei in diesem Fall die Antriebswelle AN ständig mit der Kurbelwelle des Antriebsmotors verbunden ist.

Das erfindungsgemäße Mehrstufengetriebe ermöglicht außerdem die Anordnung eines Torsionsschwingungsdämpfers zwischen Antriebsmotor und Getriebe.

Im Rahmen einer weiteren, nicht dargestellten Ausführungsform der Erfindung kann auf jeder Welle, bevorzugt auf der Antriebswelle AN oder der Abtriebswelle AB, eine verschleißfreie Bremse, wie z.B. ein hydraulischer oder elektrischer Retarder oder dergleichen, angeordnet sein, welche insbesondere für den Einsatz in Nutzkraftfahrzeugen von besonderer Bedeutung ist. Des weiteren kann zum Antrieb von zusätzlichen Aggregaten auf jeder Welle, bevorzugt auf der Antriebswelle AN oder der Abtriebswelle AB, ein Nebenabtrieb vorgesehen sein.

Die eingesetzten Schaltelemente können als lastschaltende Kupplungen oder Bremsen ausgebildet sein. Insbesondere können kraftschlüssige Kupplungen oder Bremsen, wie z.B. Lamellenkupplungen, Bandbremsen und/oder Konuskupplungen, verwendet werden. Des weiteren können als Schaltelemente auch formschlüssige Bremsen und/oder Kupplungen, wie z.B. Synchronisierungen oder Klauenkupplungen eingesetzt werden.

Ein weiterer Vorteil des hier vorgestellten Mehrstufengetriebes besteht darin, dass an jeder Welle zusätzlich eine elektrische Maschine als Generator und/oder als zusätzliche Antriebsmaschine anbringbar ist.

Selbstverständlich fällt auch jede konstruktive Ausbildung, insbesondere jede räumliche Anordnung der Planetensätze und der Schaltelemente an sich sowie zueinander und soweit technisch sinnvoll, unter den Schutzumfang der vorliegende Ansprüche, ohne die Funktion des Getriebes, wie sie in den Ansprüchen angegeben ist, zu beeinflussen, auch wenn diese Ausbildungen nicht explizit in den Figuren oder in der Beschreibung dargestellt sind.

### Bezugszeichen

- 1: erste Welle
- 2: zweite Welle
- 3: dritte Welle
- 4: vierte Welle
- 5: fünfte Welle
- 6: sechste Welle
- 7: siebte Welle
- 8: achte Welle

- A: erstes Schaltelement, erste Bremse
- A_a: Außenlamellenträger des ersten Schaltelementes
- A_i: Innenlamellenträger des ersten Schaltelementes
- A_l: Lamellenpaket des ersten Schaltelementes
- A_s: Servoeinrichtung des ersten Schaltelementes

- B: zweites Schaltelement, zweite Bremse
- B_a: Außenlamellenträger des zweiten Schaltelementes
- B_i: Innenlamellenträger des zweiten Schaltelementes
- B_l: Lamellenpaket des zweiten Schaltelementes
- B_s: Servoeinrichtung des zweiten Schaltelementes

- C: drittes Schaltelement, erste Kupplung
- C_a: Außenlamellenträger des dritten Schaltelementes
- C_i: Innenlamellenträger des dritten Schaltelementes
- C_l: Lamellenpaket des dritten Schaltelementes
- C_s: Servoeinrichtung des dritten Schaltelementes

- D: viertes Schaltelement, zweite Kupplung
- D_a: Außenlamellenträger des vierten Schaltelementes
- D_i: Innenlamellenträger des vierten Schaltelementes
- D_l: Lamellenpaket des vierten Schaltelementes
- D_s: Servoeinrichtung des vierten Schaltelementes

- E: fünftes Schaltelement, dritte Kupplung
- E_a: Außenlamellenträger des fünften Schaltelementes
- E_i: Innenlamellenträger des fünften Schaltelementes
- E_l: Lamellenpaket des fünften Schaltelementes
- E_s: Servoeinrichtung des fünften Schaltelementes
- E_is: Stützscheibe des fünften Schaltelementes

- AB: Abtriebswelle
- AN: Antriebswelle
- GG: Gehäuse
- GN: gehäusefeste Nabe
- GW: Gehäusewand
- PU: Ölpumpe
- ANF: Anfahrelement, Drehmomentwandler
- NAB: Drehzahlsensor
- NAN: Drehzahlsensor

- RS1: erster Planetenradsatz
- HO1: Hohlrad des ersten Planetenradsatzes
- SO1: Sonnenrad des ersten Planetenradsatzes
- ST1: Steg des ersten Planetenradsatzes
- PL1: Planetenräder des ersten Planetenradsatzes

- RS2: zweiter Planetenradsatz
- HO2: Hohlrad des zweiten Planetenradsatzes
- SO2: Sonnenrad des zweiten Planetenradsatzes
- ST2: Steg des zweiten Planetenradsatzes
- PL2: Planetenräder des zweiten Planetenradsatzes

- RS3: dritter Planetenradsatz
- HO3: Hohlrad des dritten Planetenradsatzes
- SO3: Sonnenrad des dritten Planetenradsatzes
- ST3: Steg des dritten Planetenradsatzes
- PL3: Planetenräder des dritten Planetenradsatzes

- RS4: vierter Planetenradsatz
- HO4: Hohlrad des vierten Planetenradsatzes
- SO4: Sonnenrad des vierten Planetenradsatzes
- ST4: Steg des vierten Planetenradsatzes
- PL4: Planetenräder des vierten Planetenradsatzes

- i: Übersetzung
- φ: Stufensprung

## Patentansprüche

1. Mehrstufengetriebe in Planetenbauweise, insbesondere Automatgetriebe für ein Kraftfahrzeug, umfassend eine Antriebswelle (AN), eine Abtriebswelle (AB), vier Planetenradsätze (RS1, RS2, RS3, RS4), mindestens acht drehbare Wellen (1, 2, 3, 4, 5, 6, 7, 8), sowie fünf Schaltelemente (A, B, C, D, E), deren selektives Eingreifen verschiedene Übersetzungsverhältnisse zwischen Antriebswelle (AN) und Abtriebswelle (AB) bewirkt, sodass acht Vorwärtsgänge und ein Rückwärtsgang realisierbar sind, wobei
■ das erste Schaltelement (A) im Kraftfluss zwischen der dritten Welle (3) und einem Gehäuse (GG) des Getriebes angeordnet ist,
■ das zweite Schaltelement (B) im Kraftfluss zwischen der vierten Welle (4) und dem Gehäuse (GG) des Getriebes angeordnet ist,
■ das dritte Schaltelement (C) im Kraftfluss zwischen der ersten Welle (1) und der fünften Welle (5) angeordnet ist,
■ das vierte Schaltelement (D) im Kraftfluss zwischen der zweiten Welle (2) und der achten Welle (8) angeordnet ist,
■ das fünfte Schaltelement (E) im Kraftfluss zwischen der fünften Welle (5) und der siebten Welle (7) angeordnet ist,
■ ein Steg (ST4) des vierten Planetenradsatzes (RS4) und die Antriebswelle (AN) miteinander verbunden sind und die erste Welle (1) bilden,
■ ein Steg (ST3) des dritten Planetenradsatzes (RS3) und die Abtriebswelle (AB) miteinander verbunden sind und die zweite Welle (2) bilden,
■ ein Sonnenrad (SO1) des ersten Planetenradsatzes (RS1) und ein Sonnenrad (SO4) des vierten Planetenradsatzes (RS4) miteinander verbunden sind und die dritte Welle (3) bilden,
■ ein Hohlrad (HO1) des ersten Planetenradsatzes (RS1) die vierte Welle (4) bildet und
■ ein Sonnenrad (SO2) des zweiten Planetenradsatzes (RS2) und ein Hohlrad (HO4) des vierten Planetenradsatzes (RS4) miteinander verbunden sind und die siebte Welle (7) bilden,
**dadurch gekennzeichnet, dass**
■ ein Sonnenrad (SO3) des dritten Planetenradsatzes (RS3) die fünfte Welle (5) bildet,
■ ein Steg (ST1) des ersten Planetenradsatzes (RS1) und ein Steg (ST2) des zweiten Planetenradsatzes (RS2) und ein Hohlrad (HO3) des dritten Planetenradsatzes (RS3) miteinander verbunden sind und die sechste Welle (6) bilden und
■ ein Hohlrad (HO2) des zweiten Planetenradsatzes (RS2) die achte Welle (8) bildet.

2. Mehrstufengetriebe in Planetenbauweise, insbesondere Automatgetriebe für ein Kraftfahrzeug, umfassend eine Antriebswelle (AN), eine Abtriebswelle (AB), vier Planetenradsätze (RS1; RS2, RS3, RS4), mindestens acht drehbare Wellen (1, 2, 3, 4, 5, 6, 7, 8), sowie fünf Schaltelemente (A, B, C, D, E), deren selektives Eingreifen verschiedene Übersetzungsverhältnisse zwischen Antriebswelle (AN) und Abtriebswelle (AB) bewirkt, sodass acht Vorwärtsgänge und ein Rückwärtsgang realisierbar sind, wobei
■ das erste Schaltelement (A) im Kraftfluss zwischen der dritten Welle (3) und einem Gehäuse (GG) des Getriebes angeordnet ist,
■ das zweite Schaltelement (B) im Kraftfluss zwischen der vierten Welle (4) und dem Gehäuse (GG) des Getriebes angeordnet ist,
■ das dritte Schaltelement (C) im Kraftfluss zwischen der ersten Welle (1) und der fünften Welle (5) angeordnet ist,
■ das vierte Schaltelement (D) im Kraftfluss zwischen der siebten Welle (7) und der achten Welle (8) angeordnet ist,
■ das fünfte Schaltelement (E) im Kraftflüss zwischen der fünften Welle (5) und der siebten Welle (7) angeordnet ist,
■ ein Steg (ST4) des vierten Planetenradsatzes (RS4) und die Antriebswelle (AN) miteinander verbunden sind und die erste Welle (1) bilden,
■ ein Sonnenrad (SO1) des ersten Planetenradsatzes (RS1) und ein Sonnenrad (SO4) des vierten Planetenradsatzes (RS4) miteinander verbunden sind und die dritte Welle (3) bilden,
■ ein Hohlrad (HO1) des ersten Planetenradsatzes (RS1) die vierte Welle (4) bildet,
■ ein Hohlrad (HO2) des zweiten Planetenradsatzes (RS2) und ein Sonnenrad (SO3) des dritten Planetenradsatzes (RS3) miteinander verbunden sind und die fünfte Welle (5) bilden und
■ ein Steg (ST1) des ersten Planetenradsatzes (RS1) und ein Hohlrad (HO3) des dritten Planetenradsatzes (RS3) miteinander verbunden sind und die sechste Welle (6) bilden,
**dadurch gekennzeichnet, dass**
■ ein Steg (ST2) des zweiten Planetenradsatzes (RS2) und ein Steg (ST3) des dritten Planetenradsatzes (RS3) und die Abtriebswelle (AB) miteinander verbunden sind und die zweite Welle (2) bilden,
■ ein Hohlrad (HO4) des vierten Planetenradsatzes (RS4) die siebte Welle (7) bilde und
■ ein Sonnenrad (SO2) des zweiten Planetenradsatzes (RS2) die achte Welle (8) bildet.

3. Mehrstufengetriebe in Planetenbauweise, insbesondere Automatgetriebe für ein Kraftfahrzeug, umfassend eine Antriebswelle (AN), eine Abtriebswelle (AB), vier Planetenradsätze (RS1, RS2, RS3, RS4), mindestens acht drehbare Wellen (1, 2, 3, 4, 5, 6, 7, 8), sowie fünf Schaltelemente (A, B, C, D, E), deren selektives Eingreifen verschiedene Übersetzungsverhältnisse zwischen Antriebswelle (AN) und Abtriebswelle (AB) bewirkt, sodass acht Vorwärtsgänge und ein Rückwärtsgang realisierbar sind, wobei
■ das erste Schaltelement (A) im Kraftfluss zwischen der dritten Welle (3) und einem Gehäuse (GG) des Getriebes angeordnet ist,
■ das zweite Schaltelement (B) im Kraftfluss zwischen der vierten Welle (4) und dem Gehäuse (GG) des Getriebes angeordnet ist,
■ das dritte Schaltelement (C) im Kraftfluss zwischen der ersten Welle (1) und der fünften Welle (5) angeordnet ist,
■ das vierte Schaltelement (D) im Kraftfluss zwischen der sechsten Welle (6) und der achten Welle (8) angeordnet ist,
■ das fünfte Schaltelement (E) im Kraftfluss zwischen der fünften Welle (5) und der siebten Welle (7) angeordnet ist,
■ ein Steg (ST4) des vierten Planetenradsatzes (RS4) und die Antriebswelle (AN) miteinander verbunden sind und die erste Welle (1) bilden,
■ ein Sonnenrad (SO1) des ersten Planetenradsatzes (RS1) und ein Sonnenrad (SO4) des vierten Planetenradsatzes (RS4) miteinander verbunden sind und die dritte Welle (3) bilden,
■ ein Hohlrad (HO1) des ersten Planetenradsatzes (RS1) die vierte Welle (4) bildet,
■ ein Steg (ST1) des ersten Planetenradsatzes (RS1) und ein Hohlrad (HO3) des dritten Planetenradsatzes (RS3) miteinander verbunden sind und die sechste Welle (6) bilden,
■ ein Sonnenrad (SO2) des zweiten Planetenradsatzes (RS2) und ein Hohlrad (HO4) des vierten Planetenradsatzes (RS4) miteinander verbunden sind und die siebte Welle (7) bilden und
■ ein Steg (ST2) des zweiten Planetenradsatzes (RS2) die achte Welle (8) bildet,
**dadurch gekennzeichnet, dass**
■ ein Hohlrad (HO2) des zweiten Planetenradsatzes (RS2) und ein Steg (ST3) des dritten Planetenradsatzes (RS3) und die Abtriebswelle (AB) miteinander verbunden sind und die zweite Welle (2) bilden und
■ ein Sonnenrad (SO3) des dritten Planetenradsatzes (RS3) die fünfte Welle (5) bildet.

4. Mehrstufengetriebe in Planetenbauweise, insbesondere Automatgetriebe für ein Kraftfahrzeug, umfassend eine Antriebswelle (AN), eine Abtriebswelle (AB), vier Planetenradsätze (RS1, RS2, RS3, RS4), mindestens acht drehbare Wellen (1, 2, 3, 4, 5, 6; 7, 8), sowie fünf Schaltelemente (A, B, C, D, E), deren selektives Eingreifen verschiedene Übersetzungsverhältnisse zwischen Antriebswelle (AN) und Abtriebswelle (AB) bewirkt, sodass acht Vorwärtsgänge und ein Rückwärtsgang realisierbar sind, wobei
■ das erste Schaltelement (A) im Kraftfluss zwischen der dritten Welle (3) und einem Gehäuse (GG) des Getriebes angeordnet ist,
■ das zweite Schaltelement (B) im Kraftfluss zwischen der vierten Welle (4) und dem Gehäuse (GG) des Getriebes angeordnet ist,
■ das dritte Schaltelement (C) im Kraftfluss zwischen der ersten Welle (1) und der fünften Welle (5) angeordnet ist,
■ das fünfte Schaltelement (E) im Kraftfluss zwischen der fünften Welle (5) und der siebten Welle (7) angeordnet ist,
■ ein Steg (ST4) des vierten Planetenradsatzes (RS4) und die Antriebswelle (AN) miteinander verbunden sind und die erste Welle (1) bilden,
■ ein Sonnenrad (SO1) des ersten Planetenradsatzes (RS1) und ein Sonnenrad (SO4) des vierten Planetenradsatzes (RS4) miteinander verbunden sind und die dritte Welle (3) bilden und
■ ein Hohlrad (HO1) des ersten Planetenradsatzes (RS1) die vierte Welle (4) bildet,
**dadurch gekennzeichnet, dass**
■ das vierte Schaltelement (D) im Kraftfluss zwischen der siebten Welle (7) und der achten Welle (8) angeordnet ist,
■ ein Hohlrad (HO2) des zweiten Planetenradsatzes (RS2) und ein Steg (ST3) des dritten Planetenradsatzes (RS3) und die Abtriebswelle (AB) miteinander verbunden sind und die zweite Welle (2) bilden,
■ ein Sonnenrad (SO3) des dritten Planetenradsatzes (RS3) die fünfte Welle (5) bildet, ,
■ ein Steg (ST1) des ersten Planetenradsatzes (RS1) und ein Steg (ST2) des zweiten Planetenradsatzes (RS2) und ein Hohlrad (HO3) des dritten Planetenradsatzes (RS3) miteinander verbunden sind und die sechste Welle (6) bilden,
■ ein Hohlrad (HO4) des vierten Planetenradsatzes (RS4) die siebte Welle (7) bildet und
■ ein Sonnenrad (SO2) des zweiten Planetenradsatzes (RS2) die achte Welle (8) bildet.

5. Mehrstufengetriebe in Planetenbauweise, insbesondere Automatgetriebe für ein Kraftfahrzeug, umfassend eine Antriebswelle (AN), eine Abtriebswelle (AB), vier Planetenradsätze (RS1, RS2, RS3, RS4), mindestens acht drehbare Wellen (1, 2, 3, 4, 5, 6, 7, 8), sowie fünf Schaltelemente (A, B, C, D, E), deren selektives Eingreifen verschiedene Übersetzungsverhältnisse zwischen Antriebswelle (AN) und Abtriebswelle (AB) bewirkt, sodass acht Vorwärtsgänge und ein Rückwärtsgang realisierbar sind, wobei
■ das erste Schaltelement (A) im Kraftfluss zwischen der dritten Welle (3) und einem Gehäuse (GG) des Getriebes angeordnet ist,
■ das zweite Schaltelement (B) im Kraftfluss zwischen der vierten Welle (4) und dem Gehäuse (GG) des Getriebes angeordnet ist,
■ das dritte Schaltelement (C) im Kraftfluss zwischen der ersten Welle (1) und der fünften Welle (5) angeordnet ist,
■ das fünfte Schaltelement (E) im Kraftfluss zwischen der fünften Welle (5) und der siebten Welle (7) angeordnet ist,
■ ein Steg (ST4) des vierten Planetenradsatzes (RS4) und die Antriebswelle (AN) miteinander verbunden sind und die erste Welle (1) bilden,
■ ein Steg (ST3) des dritten Planetenradsatzes (RS3) und die Abtriebswelle (AB) miteinander verbunden sind und die zweite Welle (2) bilden,
■ ein Sonnenrad (SO1) des ersten Planetenradsatzes (RS1) und ein Sonnenrad (SO4) des vierten Planetenradsatzes (RS4) miteinander verbunden sind und die dritte Welle (3) bilden und
■ ein Hohlrad (HO1) des ersten Planetenradsatzes (RS1) die vierte Welle (4) bildet,
**dadurch gekennzeichnet, dass**
■ das vierte Schaltelement (D) im Kraftfluss zwischen der fünften Welle (5) und der achten Welle (8) angeordnet ist,
■ ein Sonnenrad (SO3) des dritten Planetenradsatzes (RS3) die fünfte Welle (5) bildet,
■ ein Steg (ST1) des ersten Planetenradsatzes (RS1) und ein Steg (ST2) des zweiten Planetenradsatzes (RS2) und ein Hohlrad (HO3) des dritten Planetenradsatzes (RS3) miteinander verbunden sind und die sechste Welle (6) bilden,
■ ein Hohlrad (HO2) des zweiten Planetenradsatzes (RS2) und ein Hohlrad (HO4) des vierten Planetenradsatzes (RS4) miteinander verbunden sind und die siebte Welle (7) bilden und
■ ein Sonnenrad (SO2) des zweiten Planetenradsatzes (RS2) die achte Welle (8) bildet.

6. Mehrstufengetriebe in Planetenbauweise, insbesondere Automatgetriebe für ein Kraftfahrzeug, umfassend eine Antriebswelle (AN), eine Abtriebswelle (AB), vier Planetenradsätze (RS1, RS2, RS3, RS4), mindestens acht drehbare Wellen (1, 2, 3, 4, 5, 6, 7, 8), sowie fünf Schaltelemente (A, B, C, D, E), deren selektives Eingreifen verschiedene Übersetzungsverhältnisse zwischen Antriebswelle (AN) und Abtriebswelle (AB) bewirkt, sodass acht Vorwärtsgänge und ein Rückwärtsgang realisierbar sind, wobei
■ das erste Schaltelement (A) im Kraftfluss zwischen der dritten Welle (3) und einem Gehäuse (GG) des Getriebes angeordnet ist,
■ das zweite Schaltelement (B) im Kraftfluss zwischen der vierten Welle (4) und dem Gehäuse (GG) des Getriebes angeordnet ist
■ das dritte Schaltelement (C) im Kraftfluss zwischen der ersten Welle (1) und der fünften Welle (5) angeordnet ist,
■ das fünfte Schaltelement (E) im Kraftfluss zwischen der fünften Welle (5) und der siebten Welle (7) angeordnet ist,
■ ein Steg (ST4) des vierten Planetenradsatzes (RS4) und die Antriebswelle (AN) miteinander verbunden sind und die erste Welle (1) bilden,
■ ein Steg (ST3) des dritten Planetenradsatzes (RS3) und die Abtriebswelle (AB) miteinander verbunden sind und die zweite Welle (2) bilden,
■ ein Sonnenrad (SO1) des ersten Planetenradsatzes (RS1) und ein Sonnenrad (SO4) des vierten Planetenradsatzes (RS4) miteinander verbunden sind und die dritte Welle (3) bilden,
■ ein Hohlrad (HO1) des ersten Planetenradsatzes (RS1) die vierte Welle (4) bildet und
■ ein Hohlrad (HO2) des zweiten Planetenradsatzes (RS2) und ein Sonnenrad (SO3) des dritten Planetenradsatzes (RS3) miteinander verbunden sind und die fünfte Welle (5) bilden,
**dadurch gekennzeichnet, dass**
■ das vierte Schaltelement (D) im Kraftfluss zwischen der siebten Welle (7) und der achten Welle (8) angeordnet ist,
■ ein Steg (ST1) des ersten Planetenradsatzes (RS1) und ein Steg (ST2) des zweiten Planetenradsatzes (RS2) und ein Hohlrad (HO3) des dritten Planetenradsatzes (RS3) miteinander verbunden sind und die sechste Welle (6) bilden,
■ ein Hohlrad (HO4) des vierten Planetenradsatzes (RS4) die siebte Welle (7) bildet und
■ und ein Sonnenrad (SO2) des zweiten Planeteriradsatzes (RS2) die achte Welle (8) bildet.

7. Mehrstufengetriebe in Planetenbauweise, insbesondere Automatgetriebe für ein Kraftfahrzeug, umfassend eine Antriebswelle (AN), eine Abtriebswelle (AB), vier Planetenradsätze (RS1, RS2, RS3, RS4), mindestens acht drehbare Wellen (1, 2, 3, 4, 5, 6, 7, 8), sowie fünf Schaltelemente (A, B, C, D, E), deren selektives Eingreifen verschiedene Übersetzungsverhältnisse zwischen der Antriebswelle (AN) und der Abtriebswelle (AB) bewirkt, sodass acht Vorwärtsgänge und ein Rückwärtsgang realisierbar sind, wobei
■ das erste Schaltelement (A) im Kraftfluss zwischen der dritten Welle (3) und einem Gehäuse (GG) des Getriebes angeordnet ist,
■ das zweite Schaltelement (B) im Kraftfluss zwischen der vierten Welle (4) und dem Gehäuse (GG) des Getriebes angeordnet ist,
■ das dritte Schaltelement (C) im Kraftfluss zwischen der ersten Welle (1) und der fünften Welle (5) angeordnet ist,
■ das vierte Schaltelement (D) im Kraftfluss zwischen der sechsten Welle (6) und der achten Welle (8) angeordnet ist,
■ as fünfte Schaltelement (E) im Kraftfluss zwischen der fünften Welle (5) und der siebten Welle (7) angeordnet ist,
■ ein Steg (ST4) des vierten Planetenradsatzes (RS4) und die Antriebswelle (AN) miteinander verbunden sind und die erste Welle (1) bilden,
■ ein Steg (ST3) des dritten Planetenradsatzes (RS3) und die Abtriebswelle (AB) miteinander verbunden sind und die zweite Welle (2) bilden,
■ ein Sonnenrad (SO1) des ersten Planetenradsatzes (RS1) und ein Sonnenrad (SO4) des vierten Planetenradsatzes (RS4) verdrehfest miteinander verbunden sind und die dritte Welle (3) bilden,
■ ein Hohlrad (HO1) des ersten Planetenradsatzes (RS1) die vierte Welle (4) bildet,
■ ein Steg (ST1) des ersten Planetenradsatzes (RS1) und ein Hohlrad (HO3) des dritten Planetenradsatzes (RS3) miteinander verbunden sind und die sechste Welle (6) bilden und
■ ein Steg (ST2) des zweiten Planetenradsatzes (RS2) die achte Welle (8) bildet,
**dadurch gekennzeichnet, dass**
■ ein Sonnenrad (SO2) des zweiten Planetenradsatzes (RS2) und ein Sonnenrad (SO3) des dritten Planetenradsatzes (RS3) miteinander verbunden sind und die fünfte Welle (5) bilden und
■ ein Hohlrad (HO2) des zweiten Planetenradsatzes (RS2) und ein Hohlrad (HO4) des vierten Planetenradsatzes (RS4) miteinander verbunden sind und die siebte Welle (7) bilden.

8. Mehrstufengetriebe nach einem der Ansprüche 1 bis 7, **dadurch gekennzeichnet, dass** sich
■ der erste Vorwärtsgang durch Schließen des ersten, zweiten und dritten Schaltelementes (A, B, C),
■ der zweite Vorwärtsgang durch Schließen des ersten, zweiten und fünften Schaltelementes (A, B, E),
■ der dritte Vorwärtsgang durch Schließen des zweiten, dritten und fünften Schaltelementes (B, C, E),
■ der vierte Vorwärtsgang durch Schließen des zweiten, vierten und fünften Schaltelementes (B, D, E),
■ der fünfte Vorwärtsgang durch Schließen des zweiten, dritten und vierten Schaltelementes (B, C, D),
■ der sechste Vorwärtsgang durch Schließen des dritten, vierten und fünften Schaltelementes (C, D, E),
■ der siebte Vorwärtsgang durch Schließen des ersten; dritten und vierten Schaltelementes (A, C, D) und
■ der achte Vorwärtsgang durch Schließen des ersten, vierten und fünften Schaltelementes (A, D, E) ergibt.

9. Mehrstufengetriebe nach einem der Ansprüche 1 bis 8, **dadurch gekennzeichnet, dass** sich ein Rückwärtsgang durch Schließen des ersten, zweiten und vierten Schaltelementes (A, B, D) ergibt.

10. Mehrstufengetriebe nach einem der Ansprüche 1 bis 9, **dadurch gekennzeichnet, dass** alle vier Planetenradsätze (RS1, RS2, RS3, RS4) als Minus-Planetenradsätze ausgebildet sind.

11. Mehrstufengetriebe nach einem der Ansprüche 1 bis 10, **dadurch gekennzeichnet, dass** die Planetenradsätze (RS1, RS2, RS3, RS4) koaxial zueinander und in axialer Richtung hintereinander in einer Reihenfolge "RS1, RS4, RS2, RS3" angeordnet sind.

12. Mehrstufengetriebe nach einem der Ansprüche 1 bis 11, **dadurch gekennzeichnet, dass** alle vier Planetenradsätze (RS1, RS2, RS3, RS4) jeweils höchstens von einer Welle des Getriebes in axialer Richtung zentrisch durchgriffen werden.

13. Mehrstufengetriebe nach einem der Ansprüche 1 bis 12, **dadurch gekennzeichnet, dass** der zweite und/oder dritte Planetenradsatz (RS2, RS3) von keiner Welle des Getriebes in axialer Richtung zentrisch durchgriffen werden.

14. Mehrstufengetriebe nach einem der Ansprüche 1 bis 11, **dadurch gekennzeichnet, dass** der erste und vierte Planetenradsatz (RS1, RS4) nur von der Antriebswelle (AN) bzw. der ersten Welle (1) des Getriebes in axialer Richtung zentrisch durchgriffen werden, und dass der zweite Planetenradsatz (RS2) sowohl von der Antriebswelle (AN) bzw. der ersten Welle (1) des Getriebes als auch von der siebten Welle (7) des Getriebes in axialer Richtung zentrisch durchgriffen wird.

15. Mehrstufengetriebe nach einem der Ansprüche 1 bis 14, **dadurch gekennzeichnet, dass** die dritte Welle (3) an einer gehäusefesten Nabe (GN) verdrehbar gelagert ist.

16. Mehrstufengetriebe nach einem der Ansprüche 1 bis 15, **dadurch gekennzeichnet, dass** das erste und/oder zweite Schaltelement (A, B) räumlich gesehen zumindest teilweise in einem Bereich radial oberhalb des ersten oder vierten Planetenradsatzes (RS1, RS4) angeordnet ist.

17. Mehrstufengetriebe nach einem der Ansprüche 1 bis 16, **dadurch gekennzeichnet, dass** das erste und zweite Schaltelement (A, B) räumlich gesehen axial unmittelbar nebeneinander angeordnet sind.

18. Mehrstufengetriebe nach einem der Ansprüche 1 bis 16, **dadurch gekennzeichnet, dass** das zweite Schaltelement (B) räumlich gesehen zumindest weitgehend radial über dem ersten Schaltelement (A) angeordnet ist.

19. Mehrstufengetriebe nach einem der Ansprüche 1 bis 18, **dadurch gekennzeichnet, dass** das erste Schaltelement (A) räumlich gesehen zumindest teilweise auf der dem vierten Planetenradsatz (RS4) abgewandten Seite des ersten Planetenradsatzes (RS1) angeordnet ist.

20. Mehrstufengetriebe nach einem der Ansprüche 1 bis 19, **dadurch gekennzeichnet, dass** das dritte Schaltelement (C) räumlich gesehen im Wesentlichen auf der Seite des dritten Planetenradsatzes (RS3) angeordnet ist, die dem zweiten Planetenradsatz (RS2) gegenüberliegt.

21. Mehrstufengetriebe nach einem der Ansprüche 1 bis 19, **dadurch gekennzeichnet, dass** das dritte Schaltelement (C) räumlich gesehen im Wesentlichen in einem Bereich axial zwischen dem zweiten und dritten Planetenradsatz (RS2, RS3) angeordnet ist.

22. Mehrstufengetriebe nach Anspruch 21, **dadurch gekennzeichnet, dass** das dritte Schaltelement (C) räumlich gesehen im Wesentlichen in einem Bereich axial zwischen dem fünften und vierten Schaltelement (E, D) angeordnet ist.

23. Mehrstufengetriebe nach Anspruch 21, **dadurch gekennzeichnet, dass** das dritte Schaltelement (C) räumlich gesehen zumindest teilweise in einem Bereich radial unterhalb eines Lamellenpaketes des vierten der fünften Schaltelementes (D, E) angeordnet ist.

24. Mehrstufengetriebe nach einem der Ansprüche 1 bis 19, **dadurch gekennzeichnet, dass** das dritte Schaltelement (C) räumlich gesehen im Wesentlichen in einem Bereich axial zwischen dem vierten und zweiten Planetenradsatz (RS4, RS2) angeordnet ist.

25. Mehrstufengetriebe nach Anspruch 24, **dadurch gekennzeichnet, dass** das dritte Schaltelement (C) axial benachbart zum vierten Planetenradsatz (RS4) angeordnet ist.

26. Mehrstufengetriebe nach einem der Ansprüche 1 bis 25, **dadurch gekennzeichnet, dass** das vierte Schaltelement (D) räumlich gesehen im Wesentlichen in einem Bereich axial zwischen dem zweiten und dritten Planetenradsatz (RS2, RS3) angeordnet ist.

27. Mehrstufengetriebe nach Anspruch 26, **dadurch gekennzeichnet, dass** das vierte Schaltelement (D) axial unmittelbar an den dritten Planetenradsatz (RS3) angrenzt.

28. Mehrstufengetriebe nach einem der Ansprüche 1 bis 25, **dadurch gekennzeichnet, dass** das vierte Schaltelement (D) räumlich gesehen im Wesentlichen in einem Bereich axial zwischen dem vierten und zweiten Planetenradsatz (RS4, RS2) angeordnet ist.

29. Mehrstufengetriebe nach Anspruch 26 oder 28, **dadurch gekennzeichnet, dass** das vierte Schaltelement (D) benachbart zum zweiten Planetenradsatz (RS2) angeordnet ist.

30. Mehrstufengetriebe nach einem der Ansprüche 1 bis 25, **dadurch gekenntzeichnet, dass** das vierte Schaltelement (D) räumlich gesehen im Wesentlichen in einem Bereich axial zwischen dem ersten und vierten Planetenradsatz (RS1, RS4) angeordnet ist.

31. Mehrstufengetriebe nach Anspruch 30, **dadurch gekennzeichnet, dass** das vierte Schaltelement. (D) benachbart zum ersten Planetenradsatz (RS1) angeordnet ist.

32. Mehrstufengetriebe nach einem der Ansprüche 1 bis 25, **dadurch gekennzeichnet, dass** das vierte Schaltelement (D) räumlich gesehen zumindest teilweise in einem Bereich radial über dem zweiten oder vierten Planetenradsatz (RS2, RS4) angeordnet ist.

33. Mehrstufengetriebe nach einem der Ansprüche 1 bis 32, **dadurch gekennzeichnet, dass** das fünfte Schaltelement (E) räumlich gesehen im Wesentlichen in einem Bereich axial zwischen dem zweiten und dritten Planetenradsatz (RS2, RS3) angeordnet ist.

34. Mehrstufengetriebe nach einem der Ansprüche 1 bis 32, **dadurch gekennzeichnet, dass** das fünfte Schaltelement (E) räumlich gesehen im Wesentlichen in einem Bereich axial zwischen dem zweiten und vierten Planetenradsatz (RS2, RS4) angeordnet ist.

35. Mehrstufengetriebe nach Anspruch 33 oder 34, **dadurch gekennzeichnet, dass** das fünfte Schaltelement (E) axial unmittelbar an den zweiten Planetenradsatz (RS2) angrenzt.

36. Mehrstufengetriebe nach einem der vorstehenden Ansprüche, **dadurch gekennzeichnet, dass** zwischen den Wellen (AN, AB, 1, 2, 3, 4, 5, 6, 7, 8) und dem Gehäuse (GG) des Getriebes zusätzliche Freiläufe einsetzbar sind.

37. Mehrstufengetriebe nach einem der Ansprüche 1 bis 36, **dadurch gekennzeichnet, dass** Antrieb und Abtrieb des Getriebes auf gegenüberliegenden Seiten des Gehäuses (GG) vorgesehen sind.

38. Mehrstufengetriebe nach einem der Ansprüche 1 bis 36, **dadurch gekennzeichnet, dass** Antrieb und Abtrieb des Getriebes auf der gleichen Seite des Gehäuses (GG) vorgesehen sind.

39. Mehrstufengetriebe nach einem der vorstehenden Ansprüche, **dadurch gekennzeichnet, dass** ein Achs- und/oder ein Verteilerdifferential auf der Antriebsseite oder der Abtriebsseite des Getriebes angeordnet ist.

40. Mehrstufengetriebe nach einem der vorstehenden Ansprüche, **dadurch gekennzeichnet, dass** die Antriebswelle (AN) durch ein Anfahrelement (ANF) von einem Antriebs-Motor des Kraftfahrzeugs trennbar ist.

41. Mehrstufengetriebe nach Anspruch 40, **dadurch gekennzeichnet, dass** als Anfahrelement (ANF) ein hydrodynamischer Wandler, eine hydraulische Kupplung, eine trockene Anfahrkupplung, eine nasse Anfahrkupplung, eine Magnetpulverkupplung oder eine Fliehkraftkupplung vorgesehen ist.

42. Mehrstufengetriebe nach einem der vorstehenden Ansprüche, **dadurch gekennzeichnet, dass** in Kraftflussrichtung hinter dem Getriebe ein externes Anfahrelement, insbesondere nach Anspruch 41, angeordnet ist, wobei die Antriebswelle (AN) verdrehfest oder drehelastisch mit einer Kurbelwelle des Antriebs-Motors verbunden ist.

43. Mehrstufengetriebe nach einem der vorstehenden Ansprüche, **dadurch gekennzeichnet, dass** ein Anfahren des Kraftfahrzeugs mittels eines getriebeinternen Schaltelementes, insbesondere mittels des ersten, zweiten, dritten oder vierten Schaltelementes (A, B, C, D) des Getriebes erfolgt, wobei die Antriebswelle (AN) ständig verdrehfest oder drehelastisch mit der Kurbelwelle des Antriebs-Motors verbunden ist.

44. Mehrstufengetriebe nach Anspruch 43, **dadurch gekennzeichnet, dass** das Anfahren des Kraftfahrzeugs in Vorwärts- und Rückwärtsfahrtrichtung mittels des gleichen getriebeinternen Schaltelementes erfolgt, insbesondere mittels des ersten oder des zweiten Schaltelementes (A, B).

45. Mehrstufengetriebe nach einem der vorstehenden Ansprüche, **dadurch gekennzeichnet, dass** zwischen Antriebs-Motor und Getriebe ein Torsionsschwingungsdämpfer angeordnet ist.

46. Mehrstufengetriebe nach einem der vorstehenden Ansprüche, **dadurch gekennzeichnet, dass** an jeder Welle (AN, AB, 1, 2, 3, 4, 5, 6, 7, 8) des Getriebes eine verschleißfreie Bremse oder ein Nebenabtrieb zum Antrieb von zusätzlichen Aggregaten oder eine elektrische Maschine als Generator und/oder als zusätzliche Antriebsmaschine anbringbar ist.

47. Mehrstufengetriebe nach einem der vorstehenden Ansprüche, **dadurch gekennzeichnet, dass** als Schaltelemente (A, B, C, D, E) reibschlüssige Kupplungen bzw. reibschlüssige Bremsen - insbesondere Lamellenkupplungen, Bandbremsen und/oder Konuskupplungen - und/oder formschlüssige Kupplungen bzw. formschlüssige Bremsen - insbesondere Konuskupplungen und/oder Klauenkupplungen - vorgesehen sind.

## Claims

1. The invention relates to a planetary-style multistep transmission, in particular an automatic automotive transmission, which comprises an input shaft (AN), an output shaft (AB), four planetary gearsets (RS1, RS2, RS3, RS4), at least eight turning shafts (1, 2, 3, 4, 5, 6, 7, 8) as well as five shifting components (A, B, C, D, E), selective intervention of which brings about various ratios between input shaft (AN) and output shaft (AB) so that eight forward gears and one reverse gear can be realized, with
• the first shifting component (A) being arranged in the power flow between the third shaft (3) and a housing (GG) of the transmission;
• the second shifting component (B) being arranged in the power flow between the fourth shaft (4) and the housing (GG) of the transmission;
• the third shifting component (C) being arranged in the power flow between the first shaft (1) and the fifth shaft (5);
• the fourth shifting component (D) being arranged in the power flow between the second shaft (2) and the eighth shaft (8);
• the fifth shifting component (E) being arranged in the power flow between the fifth shaft (5) and the seventh shaft (7);
• a web (ST4) of the fourth planetary gearset (RS4) and the input shaft (AN) being connected with each other and constituting the first shaft (1);
• a web (ST3) of the third planetary gearset (RS3) and the output shaft (AB) being connected with each other and constituting the second shaft (2);
• a center gear (SO1) of the first planetary gearset (RS1) and a center gear (SO4) of the fourth planetary gearset (RS4) being connected with each other and constituting the third shaft (3);
• a ring gear (HO1) of the first planetary gearset (RS1) constituting the fourth shaft (4); and
• a center gear (SO2) of the second planetary gearset (RS2) and a ring gear (HO4) of the fourth planetary gearset (RS4) being connected with each other and constituting the seventh shaft (7);
**characterized in that**
• a center gear (S03) of the third planetary gearset (RS3) constitutes the fifth shaft (5);
• a web (ST1) of the first planetary gearset (RS1) and a web (ST2) of the second planetary gearset (RS2) and a ring gear (HO3) of the third planetary gearset (RS3) are connected with each other and constitute the sixth shaft (6); and
• a ring gear (HO2) of the second planetary gearset (RS2) constitutes the eighth shaft (8).

2. A planetary-style multistep transmission, in particular an automatic automotive transmission, which comprises an input shaft (AN), an output shaft (AB), four planetary gearsets (RS1, RS2, RS3, RS4), at least eight turning shafts (1, 2, 3, 4, 5, 6, 7, 8) as well as five shifting components (A, B, C, D, E), selective intervention of which brings about various ratios between input shaft (AN) and output shaft (AB) so that eight forward gears and one reverse gear can be realized, with
• the first shifting component (A) being arranged in the power flow between the third shaft (3) and a housing (GG) of the transmission;
• the second shifting component (B) being arranged in the power flow between the fourth shaft (4) and the housing (GG) of the transmission;
• the third shifting component (C) being arranged in the power flow between the first shaft (1) and the fifth shaft (5);
• the fourth shifting component (D) being arranged in the power flow between the seventh shaft (7) and the eighth shaft (8);
• the fifth shifting component (E) being arranged in the power flow between the fifth shaft (5) and the seventh shaft (7);
• a web (ST4) of the fourth planetary gearset (RS4) and the input shaft (AN) being connected with each other and constituting the first shaft (1);
• a center gear (SO1) of the first planetary gearset (RS1) and a center gear (SO4) of the fourth planetary gearset (RS4) being connected with each other and constituting the third shaft (3);
• a ring gear (HO1) of the first planetary gearset (RS1) constituting the fourth shaft (4);
• a ring gear (H02) of the second planetary gearset (RS2) and a center gear (S03) of the third planetary gearset (RS3) being connected with each other and constituting the fifth shaft (5); and
• a web (ST1) of the first planetary gearset (RS1) and a ring gear (H03) of the third planetary gearset (RS3) being connected with each other and constituting the sixth shaft (6);
**characterized in that**
• a web (ST2) of the second planetary gearset (RS2) and a web (ST3) of the third planetary gearset (RS3) and the output shaft (AB) are connected with each other and constitute the second shaft (2);
• a ring gear (H04) of the fourth planetary gearset (RS4) constitutes the seventh shaft (7); and
• a center gear (SO2) of the second planetary gearset (RS2) constitutes the eighth shaft (8).

3. A planetary-style multistep transmission, in particular an automatic automotive transmission, which comprises an input shaft (AN), an output shaft (AB), four planetary gearsets (RS1, RS2, RS3, RS4), at least eight turning shafts (1, 2, 3, 4, 5, 6, 7, 8) as well as five shifting components (A, B, C, D, E), selective intervention of which brings about various ratios between input shaft (AN) and output shaft (AB) so that eight forward gears and one reverse gear can be realized, with
• the first shifting component (A) being arranged in the power flow between the third shaft (3) and a housing (GG) of the transmission;
• the second shifting component (B) being arranged in the power flow between the fourth shaft (4) and the housing (GG) of the transmission;
• the third shifting component (C) being arranged in the power flow between the first shaft (1) and the fifth shaft (5);
• the fourth shifting component (D) being arranged in the power flow between the sixth shaft (6) and the eighth shaft (8);
• the fifth shifting component (E) being arranged in the power flow between the fifth shaft (5) and the seventh shaft (7);
• a web (ST4) of the fourth planetary gearset (RS4) and the input shaft (AN) being connected with each other and constituting the first shaft (1);
• a center gear (SO1) of the first planetary gearset (RS1) and a center gear (SO4) of the fourth planetary gearset (RS4) being connected with each other and constituting the third shaft (3);
• a ring gear (HO1) of the first planetary gearset (RS1) constituting the fourth shaft (4);
• a web (ST1) of the first planetary gearset (RS1) and a ring gear (H03) of the third planetary gearset (RS3) being connected with each other and constituting the sixth shaft (6);
• a center gear (SO2) of the second planetary gearset (RS2) and a ring gear (H04) of the fourth planetary gearset (RS4) being connected with each other and constituting the seventh shaft (7); and
• a web (ST2) of the second planetary gearset (RS2) constituting the eighth shaft (8);
**characterized in that**
• a ring gear (H02) of the second planetary gearset (RS2) and a web (ST3) of the third planetary gearset (RS3) and the output shaft (AB) are connected with each other and constitute the second shaft (2); and
• a center gear (SO3) of the third planetary gearset (RS3) constitutes the fifth shaft (5).

4. A planetary-style multistep transmission, in particular an automatic automotive transmission, which comprises an input shaft (AN), an output shaft (AB), four planetary gearsets (RS1, RS2, RS3, RS4), at least eight turning shafts (1, 2, 3, 4, 5, 6, 7, 8) as well as five shifting components (A, B, C, D, E), selective intervention of which brings about various ratios between input shaft (AN) and output shaft (AB) so that eight forward gears and one reverse gear can be realized, with
• the first shifting component (A) being arranged in the power flow between the third shaft (3) and a housing (GG) of the transmission;
• the second shifting component (B) being arranged in the power flow between the fourth shaft (4) and the housing (GG) of the transmission;
• the third shifting component (C) being arranged in the power flow between the first shaft (1) and the fifth shaft (5);
• the fifth shifting component (E) being arranged in the power flow between the fifth shaft (5) and the seventh shaft (7);
• a web (ST4) of the fourth planetary gearset (RS4) and the input shaft (AN) being connected with each other and constituting the first shaft (1);
• a center gear (SO1) of the first planetary gearset (RS1) and a center gear (SO4) of the fourth planetary gearset (RS4) being connected with each other and constituting the third shaft (3); and
• a ring gear (HO1) of the first planetary gearset (RS1) constituting the fourth shaft (4);
**characterized in that**
• the fourth shifting component (D) is arranged in the power flow between the seventh shaft (7) and the eighth shaft (8);
• a ring gear (H02) of the second planetary gearset (RS2) and a web (ST3) of the third planetary gearset (RS3) and the output shaft (AB) are connected with each other and constitute the second shaft (2);
• a center gear (S03) of the third planetary gearset (RS3) constitutes the fifth shaft (5);
• a web (ST1) of the first planetary gearset (RS1) and a web (ST2) of the second planetary gearset (RS2) and a ring gear (H03) of the third planetary gearset (RS3) are connected with each other and constitute the sixth shaft (6);
• a ring gear (H04) of the fourth planetary gearset (RS4) constitutes the seventh shaft (7); and
• a center gear (SO2) of the second planetary gearset (RS2) constitutes the eighth shaft (8).

5. A planetary-style multistep transmission, in particular an automatic automotive transmission, which comprises an input shaft (AN), an output shaft (AB), four planetary gearsets (RS1, RS2, RS3, RS4), at least eight turning shafts (1, 2, 3, 4, 5, 6, 7, 8) as well as five shifting components (A, B, C, D, E), selective intervention of which brings about various ratios between input shaft (AN) and output shaft (AB) so that eight forward gears and one reverse gear can be realized, with
• the first shifting component (A) being arranged in the power flow between the third shaft (3) and a housing (GG) of the transmission;
• the second shifting component (B) being arranged in the power flow between the fourth shaft (4) and the housing (GG) of the transmission;
• the third shifting component (C) being arranged in the power flow between the first shaft (1) and the fifth shaft (5);
• the fifth shifting component (E) being arranged in the power flow between the fifth shaft (5) and the seventh shaft (7);
• a web (ST4) of the fourth planetary gearset (RS4) and the input shaft (AN) being connected with each other and constituting the first shaft (1);
• a web (ST3) of the third planetary gearset (RS3) and the output shaft (AB) being connected with each other and constituting the second shaft (2);
• a center gear (SO1) of the first planetary gearset (RS1) and a center gear (SO4) of the fourth planetary gearset (RS4) being connected with each other and constituting the third shaft (3); and
• a ring gear (HO1) of the first planetary gearset (RS1) constituting the fourth shaft (4);
**characterized in that**
• the fourth shifting component (D) is arranged in the power flow between the fifth shaft (5) and the eighth shaft (8);
• a center gear (S03) of the third planetary gearset (RS3) constitutes the fifth shaft (5);
• a web (ST1) of the first planetary gearset (RS1) and a web (ST2) of the second planetary gearset (RS2) and a ring gear (H03) of the third planetary gearset (RS3) are connected with each other and constitute the sixth shaft (6);
• a ring gear (H02) of the second planetary gearset (RS2) and a ring gear (H04) of the fourth planetary gearset (RS4) are connected with each other and constitute the seventh shaft (7); and
• a center gear (SO2) of the second planetary gearset (RS2) constitutes the eighth shaft (8).

6. A planetary-style multistep transmission, in particular an automatic automotive transmission, which comprises an input shaft (AN), an output shaft (AB), four planetary gearsets (RS1, RS2, RS3, RS4), at least eight turning shafts (1, 2, 3, 4, 5, 6, 7, 8) as well as five shifting components (A, B, C, D, E), selective intervention of which brings about various ratios between input shaft (AN) and output shaft (AB) so that eight forward gears and one reverse gear can be realized, with
• the first shifting component (A) being arranged in the power flow between the third shaft (3) and a housing (GG) of the transmission;
• the second shifting component (B) being arranged in the power flow between the fourth shaft (4) and the housing (GG) of the transmission;
• the third shifting component (C) being arranged in the power flow between the first shaft (1) and the fifth shaft (5);
• the fifth shifting component (E) being arranged in the power flow between the fifth shaft (5) and the seventh shaft (7);
• a web (ST4) of the fourth planetary gearset (RS4) and the input shaft (AN) being connected with each other and constituting the first shaft (1);
• a web (ST3) of the third planetary gearset (RS3) and the output shaft (AB) being connected with each other and constituting the second shaft (2);
• a center gear (SO1) of the first planetary gearset (RS1) and a center gear (SO4) of the fourth planetary gearset (RS4) being connected with each other and constituting the third shaft (3);
• a ring gear (HO1) of the first planetary gearset (RS1) constituting the fourth shaft (4); and
• a ring gear (H02) of the second planetary gearset (RS2) and a center gear (S03) of the third planetary gearset (RS3) being connected with each other and constituting the fifth shaft (5);
**characterized in that**
• the fourth shifting component (D) is arranged in the power flow between the seventh shaft (7) and the eighth shaft (8);
• a web (ST1) of the first planetary gearset (RS1) and a web (ST2) of the second planetary gearset (RS2) and a ring gear HO3) of the third planetary gearset (RS3) are connected with each other and constitute the sixth shaft (6);
• a ring gear (H04) of the fourth planetary gearset (RS4) constitutes the seventh shaft (7); and
• a center gear (SO2) of the second planetary gearset (RS2) constitutes the eighth shaft (8).

7. A planetary-style multistep transmission, in particular an automatic automotive transmission, which comprises an input shaft (AN), an output shaft (AB), four planetary gearsets (RS1, RS2, RS3, RS4), at least eight turning shafts (1, 2, 3, 4, 5, 6, 7, 8) as well as five shifting components (A, B, C, D, E), selective intervention of which brings about various ratios between input shaft (AN) and output shaft (AB) so that eight forward gears and one reverse gear can be realized, with
• the first shifting component (A) being arranged in the power flow between the third shaft (3) and a housing (GG) of the transmission;
• the second shifting component (B) being arranged in the power flow between the fourth shaft (4) and the housing (GG) of the transmission;
• the third shifting component (C) being arranged in the power flow between the first shaft (1) and the fifth shaft (5);
• the fourth shifting component (D) being arranged in the power flow between the sixth shaft (6) and the eighth shaft (8);
• the fifth shifting component (E) being arranged in the power flow between the fifth shaft (5) and the seventh shaft (7);
• a web (ST4) of the fourth planetary gearset (RS4) and the input shaft (AN) being connected with each other and constituting the first shaft (1);
• a web (ST3) of the third planetary gearset (RS3) and the output shaft (AB) being connected with each other and constituting the second shaft (2);
• a center gear (SO1) of the first planetary gearset (RS1) and a center gear (SO4) of the fourth planetary gearset (RS4) being torsionally rigidly connected with each other and constituting the third shaft (3);
• a ring gear (HO1) of the first planetary gearset (RS1) constituting the fourth shaft (4);
• a web (ST1) of the first planetary gearset (RS1) and a ring gear (H03) of the third planetary gearset (RS3) being connected with each other and constituting the sixth shaft (6); and
• a web (ST2) of the second planetary gearset (RS2) constituting the eighth shaft (8);
**characterized in that**
• a center gear (SO2) of the second planetary gearset (RS2) and a center gear (S03) of the third planetary gearset (RS3) are connected with each other and constitute the fifth shaft (5); and
• a ring gear (H02) of the second planetary gearset (RS2) and a ring gear (H04) of the fourth planetary gearset (RS4) are connected with each other and constitute the seventh shaft (7).

8. Multistep transmission according to one of the claims 1 thru 7,
**characterized in that**
• the first forward gear results from closure of the first, second and third shifting component (A, B, C);
• the second forward gear results from closure of the first, second and fifth shifting component (A, B, E);
• the third forward gear results from closure of the second, third and fifth shifting component (B, C, E);
• the fourth forward gear results from closure of the second, fourth and fifth shifting component (B, D, E);
• the fifth forward gear results from closure of the second, third and fourth shifting component (B, C, D);
• the sixth forward gear results from closure of the third, fourth and fifth shifting component (C, D, E);
• the seventh forward gear results from closure of the first, third and fourth shifting component (A, C, D); and
• the eighth forward gear results from closure of the first, fourth and fifth shifting component (A, D, E).

9. Multistep transmission according to one of the claims 1 thru 8, **characterized in that** a reverse gear results from closure of the first, second and fourth shifting component (A, B, D).

10. Multistep transmission according to one of the claims 1 thru 9, **characterized in that** all four planetary gearsets (RS1, RS2, RS3, RS4) are designed as minus planetary gearsets.

11. Multistep transmission according to one of the claims 1 thru 10, **characterized in that** the planetary gearsets (RS1, RS2, RS3, RS4) are arranged coaxially in relation to each other and in axial direction one after the other in the sequence "RS1, RS4, RS2, RS3".

12. Multistep transmission according to one of the claims 1 thru 11, **characterized in that** each of the four planetary gearsets (RS1, RS2, RS3, RS4) is centrally penetrated in axial direction by not more than one shaft of the transmission.

13. Multistep transmission according to one of the claims 1 thru 12, **characterized in that** the second and/or third planetary gear set (RS2, RS3) is/are not centrally penetrated in axial direction by a shaft of the transmission.

14. Multistep transmission according to one of the claims 1 thru 11, **characterized in that** the first and fourth planetary gearsets (RS1, RS4) are centrally penetrated in axial direction only by the input shaft (AN) or the first shaft (1) of the transmission; and that the second planetary gearset (RS2) is centrally penetrated in axial direction by the input shaft (AN) or the first shaft (1) of the transmission as well as by the seventh shaft (7) of the transmission.

15. Multistep transmission according to one of the claims 1 thru 14, **characterized in that** the third shaft (3) is bearing-supported on a housing-fixed hub (GN).

16. Multistep transmission according to one of the claims 1 thru 15, **characterized in that** the first and/or second shifting component(s) (A, B) is/are arranged at least partially in an area radially above the first or fourth planetary gearset (RS1, RS4).

17. Multistep transmission according to one of the claims 1 thru 16, **characterized in that** the first and second shifting components (A, B) are arranged axially immediately adjacent to each other.

18. Multistep transmission according to one of the claims 1 thru 16, **characterized in that** the second shifting component (B) is arranged at least for the most part radially above the first shifting component (A).

19. Multistep transmission according to one of the claims 1 thru 18, **characterized in that** the first shifting component (A) is arranged at least partly on the side of the first planetary gearset (RS1) not facing the fourth planetary gearset (RS4).

20. Multistep transmission according to one of the claims 1 thru 19, **characterized in that** the third shifting component (C) is arranged for the most part on the side of the third planetary gearset (RS3) opposite to the second planetary gearset (RS2).

21. Multistep transmission according to one of the claims 1 thru 19, **characterized in that** the third shifting component (C) is arranged for the most part in an area axially between the second and third planetary gearsets (RS2, RS3).

22. Multistep transmission according to claim 21, **characterized in that** the third shifting component (C) is arranged for the most part in an area axially between the fifth and fourth shifting components (E, D).

23. Multitstep transmission according to claim 21, **characterized in that** the third shifting component (C) is arranged at least partly in an area radially below a disk set of the fourth or fifth shifting component (D, E).

24. Multistep transmission according to one of the claims 1 thru 19, **characterized in that** the third shifting component (C) is arranged for the most part in an area axially between the fourth and second planetary gearsets (RS4, RS2).

25. Multistep transmission according to claim 24, **characterized in that** the third shifting component (C) is arranged axially adjacent to the fourth planetary gearset (RS4).

26. Multistep transmission according to one of the claims 1 thru 25, **characterized in that** the fourth shifting component (D) is arranged for the most part in an area axially between the second and third planetary gearsets (RS2, RS3).

27. Multistep transmission according to claim 26, **characterized in that** the fourth shifting component (D) is axially immediately adjacent to the third planetary gearset (RS3).

28. Multistep transmission according to one of the claims 1 thru 25, **characterized in that** the fourth shifting component (D) is arranged for the most part in an area axially between the fourth and second planetary gearsets (RS4, RS2).

29. Multistep transmission according to claim 26 or 28, **characterized in that** the fourth shifting component (D) is arranged adjacent to the second planetary gearset (RS2).

30. Multistep transmission according to one of the claims 1 thru 25, **characterized in that** the fourth shifting component (D) is arranged for the most part in an area axially between the first and fourth planetary gearsets (RS1, RS4).

31. Multistep transmission according to claim 30, **characterized in that** the fourth shifting component (D) is arranged adjacent to the first planetary gearset (RS1).

32. Multistep transmission according to one of the claims 1 thru 25, **characterized in that** the fourth shifting component (D) is arranged at least partly in an area radially above the second or fourth planetary gearset (RS2, RS4).

33. Multistep transmission according to one of the claims 1 thru 32, **characterized in that** the fifth shifting component (E) is arranged for the most part in an area axially between the second and third planetary gearsets (RS2, RS3).

34. Multistep transmission according to one of the claims 1 thru 32, **characterized in that** the fifth shifting component (E) is arranged for the most part in an area axially between the second and fourth planetary gearsets (RS2, RS4).

35. Multistep transmission according to claim 33 or 34, **characterized in that** the fifth shifting component (E) is axially immediately adjacent to the second planetary gearset (RS2).

36. Multistep transmission according to one of the preceding claims, **characterized in that** extra sprag clutches can be inserted between the shafts (AN, AB, 1, 2, 3, 4, 5, 6, 7, 8) and the housing (GG) of the transmission.

37. Multistep transmission according to one of the claims 1 thru 36, **characterized in that** input and output of the transmission are provided on the opposite sides of the housing (GG).

38. Multistep transmission according to one of the claims 1 thru 36, **characterized in that** input and output of the transmission are provided on the same side of the housing (GG).

39. Multistep transmission according to one of the preceding claims, **characterized in that** an axle differential and/or a center differential is/are arranged on the input side or the output side of the transmission.

40. Multistep transmission according to one of the preceding claims, **characterized in that** the input shaft (AN) can be separated from a driving engine of the vehicle by a starting element (ANF).

41. Multistep transmission according to claim 40, **characterized in that** a hydrodynamic converter, a hydraulic clutch, a dry starting clutch, a wet starting clutch, a magnetic powder clutch or a centrifugal clutch is provided as starting element (ANF).

42. Multistep transmission according to one of the preceding claims, **characterized in that** an external starting element, in particular one according to claim 41, is arranged in power flow direction behind the transmission, with the input shaft (AN) being linked to a crankshaft of the driving engine in a torsionally rigid or torsionally elastic manner.

43. Multistep transmission according to one of the preceding claims, **characterized in that** starting of the motor vehicle is performed by means of a transmission-integrated shifting component, in particular by means of the first, second, third or fourth shifting component (A, B, C, D) of the transmission, with the input shaft (AN) being permanently linked to the crankshaft of the driving engine in torsionally rigid or torsionally elastic manner.

44. Multistep transmission according to claim 43, **characterized in that** forward or rearward starting of the motor vehicle is performed by means of the same transmission-integrated shifting component, in particular by means of the first or the second shifting component (A, B).

45. Multistep transmission according to one of the preceding claims, **characterized in that** a torsional-vibration damper is arranged between driving engine and transmission.

46. Multistep transmission according to one of the preceding claims, **characterized in that** a wearfree brake or a PTO for the drive of additional units or an electric machine as a generator and/or an additional drive motor can be attached to any shaft (AN, AB, 1, 2, 3, 4, 5, 6, 7, 8) of the transmission.

47. Multistep transmission according to one of the preceding claims **characterized in that** frictional clutches or frictional brakes — in particular, multidisk clutches, band brakes and/or cone clutches — and/or positive clutches or positive brakes — in particular cone clutches and/or dog clutches — are provided as shifting components (A, B, C, D, E).

## Revendications

1. Transmission multivitesses à trains épicycloïdaux, en particulier une transmission automatique pour un véhicule automobile, comprenant un arbre d'entrée (AN), un arbre de sortie (AB), quatre trains planétaires (RS1, RS2, RS3, RS4), au moins huit arbre rotatifs (1, 2, 3, 4, 5, 6, 7, 8), ainsi que cinq éléments de commande (A, B, C, D, E), dont l'intervention sélective détermine différents rapports de démultiplication entre l'arbre d'entrée (AN) et l'arbre de sortie (AB), de manière à ce que soient réalisables huit rapports de marche avant et un rapport de marche arrière, sachant que
- le premier élément de commande (A) est disposé dans la chaîne cinématique entre le troisième arbre (3) et un carter (GG) de la boîte de vitesses,
- le deuxième élément de commande (B) est disposé dans la chaîne cinématique entre le quatrième arbre (4) et le carter (GG) de la boîte de vitesses,
- le troisième élément de commande (C) est disposé dans la chaîne cinématique entre le premier arbre (1) et le cinquième arbre (5),
- le quatrième élément de commande (D) est disposé dans la chaîne cinématique entre le deuxième arbre (2) et le huitième arbre (8),
- le cinquième élément de commande (E) est disposé dans la chaîne cinématique entre le cinquième arbre (5) et le septième arbre (7),
- une nervure (ST4) du quatrième train planétaire (RS4) et l'arbre d'entrée (AN) sont liés l'une à l'autre, tout en formant le premier arbre (1),
- une nervure (ST3) du troisième train planétaire (RS3) et l'arbre de sortie (AB) sont liés l'une à l'autre, tout en formant le deuxième arbre (2),
- un planétaire (SO1) du premier train planétaire (RS1) et un planétaire (SO4) du quatrième train planétaire (RS4) sont liés l'un à l'autre, tout en formant le troisième arbre (3),
- une couronne (HO1) du premier train planétaire (RS1) forme le quatrième arbre (4) et
- un planétaire (SO2) du deuxième train planétaire (RS2) et une couronne (H04) du quatrième train planétaire (RS4) sont liés l'un à l'autre, tout en formant le septième arbre (7),
**caractérisée en ce que**
- un planétaire (S03) du troisième train planétaire (RS3) forme le cinquième arbre (5),
- une nervure (ST1) du premier train planétaire (RS1) et une nervure (ST2) du deuxième train planétaire (RS2) et une couronne (H03) du troisième train planétaire (RS3) sont liés l'une aux autres, tout en formant le sixième arbre (6) et
- une couronne (H02) du deuxième train planétaire (RS2) forme le huitième arbre (8).

2. Transmission multivitesses à trains épicycloïdaux, en particulier une transmission automatique pour un véhicule automobile, comprenant un arbre d'entrée (AN), un arbre de sortie (AB), quatre trains planétaires (RS1, RS2, RS3, RS4), au moins huit arbre rotatifs (1, 2, 3, 4, 5, 6, 7, 8), ainsi que cinq éléments de commande (A, B, C, D, E), dont l'intervention sélective détermine différents rapports de démultiplication entre l'arbre d'entrée (AN) et l'arbre de sortie (AB), de manière à ce que soient réalisables huit rapports de marche avant et un rapport de marche arrière, sachant que
— le premier élément de commande (A) est disposé dans la chaîne cinématique entre le troisième arbre (3) et un carter (GG) de la boîte de vitesses,
— le deuxième élément de commande (B) est disposé dans la chaîne cinématique entre le quatrième arbre (4) et le carter (GG) de la boîte de vitesses,
— le troisième élément de commande (C) est disposé dans la chaîne cinématique entre le premier arbre (1) et le cinquième arbre (5),
— le quatrième élément de commande (D) est disposé dans la chaîne cinématique entre le septième arbre (7) et le huitième arbre (8),
— le cinquième élément de commande (E) est disposé dans la chaîne cinématique entre le cinquième arbre (5) et le septième arbre (7),
— une nervure (ST4) du quatrième train planétaire (RS4) et l'arbre d'entrée (AN) sont liés l'une à l'autre, tout en formant le premier arbre (1),
— un planétaire (SO1) du premier train planétaire (RS1) et un planétaire (SO4) du quatrième train planétaire (RS4) sont liés l'un à l'autre, tout en formant le troisième arbre (3),
— une couronne (HO1) du premier train planétaire (RS1) forme le quatrième arbre (4),
— une couronne (HO2) du deuxième train planétaire (RS2) et un planétaire (SO3) du troisième train planétaire (RS3) sont liés l'une à l'autre, tout en formant le cinquième arbre (5) et
- une nervure (ST1) du premier train planétaire (RS1) et une couronne (HO3) du troisième train planétaire (RS3) sont liés l'une à l'autre, tout en formant le sixième arbre (6),
**caractérisée en ce que**
— une nervure (ST2) du deuxième train planétaire (RS2) et une nervure (ST3) du troisième train planétaire (RS3) et l'arbre de sortie (AB) sont liés l'une aux autres, tout en formant le deuxième arbre (2),
— une couronne (HO4) du quatrième train planétaire (RS4) forme le septième arbre (7) et
- un planétaire (SO2) du deuxième train planétaire (RS2) forme le huitième arbre (8).

3. Transmission multivitesses à trains épicycloïdaux, en particulier une transmission automatique pour un véhicule automobile, comprenant un arbre d'entrée (AN), un arbre de sortie (AB), quatre trains planétaires (RS1, RS2, RS3, RS4), au moins huit arbre rotatifs (1, 2, 3, 4, 5, 6, 7, 8), ainsi que cinq éléments de commande (A, B, C, D, E), dont l'intervention sélective détermine différents rapports de démultiplication entre l'arbre d'entrée (AN) et l'arbre de sortie (AB), de manière à ce que soient réalisables huit rapports de marche avant et un rapport de marche arrière, sachant que
— le premier élément de commande (A) est disposé dans la chaîne cinématique entre le troisième arbre (3) et un carter (GG) de la boîte de vitesses,
— le deuxième élément de commande (B) est disposé dans la chaîne cinématique entre le quatrième arbre (4) et le carter (GG) de la boîte de vitesses,
— le troisième élément de commande (C) est disposé dans la chaîne cinématique entre le premier arbre (1) et le cinquième arbre (5),
— le quatrième élément de commande (D) est disposé dans la chaîne cinématique entre le sixième arbre (6) et le huitième arbre (8),
— le cinquième élément de commande (E) est disposé dans la chaîne cinématique entre le cinquième arbre (5) et le septième arbre (7),
— une nervure (ST4) du quatrième train planétaire (RS4) et l'arbre d'entrée (AN) sont liés l'une à l'autre, tout en formant le premier arbre (1),
— un planétaire (SO1) du premier train planétaire (RS1) et un planétaire (SO4) du quatrième train planétaire (RS4) sont liés l'un à l'autre, tout en formant le troisième arbre (3),
— une couronne (HO1) du premier train planétaire (RS1) forme le quatrième arbre (4),
- une nervure (ST1) du premier train planétaire (RS1) et une couronne (HO3) du troisième train planétaire (RS3) sont liés l'une à l'autre, tout en formant le sixième arbre (6),
- un planétaire (SO2) du deuxième train planétaire (RS2) et une couronne (HO4) du quatrième train planétaire (RS4) sont liés l'un à l'autre, tout en formant le septième arbre (7) et
- une nervure (ST2) du deuxième train planétaire (RS2) forme le huitième arbre (8),
**caractérisée en ce que**
— une couronne (HO2) du deuxième train planétaire (RS2) et une nervure (ST3) du troisième train planétaire (RS3) et l'arbre de sortie (AB) sont liés l'une aux autres, tout en formant le deuxième arbre (2) et
- un planétaire (SO3) du troisième train planétaire (RS3) forme le cinquième arbre (5).

4. Transmission multivitesses à trains épicycloïdaux, en particulier une transmission automatique pour un véhicule automobile, comprenant un arbre d'entrée (AN), un arbre de sortie (AB), quatre trains planétaires (RS1, RS2, RS3, RS4), au moins huit arbre rotatifs (1, 2, 3, 4, 5, 6, 7, 8), ainsi que cinq éléments de commande (A, B, C, D, E), dont l'intervention sélective détermine différents rapports de démultiplication entre l'arbre d'entrée (AN) et l'arbre de sortie (AB), de manière à ce que soient réalisables huit rapports de marche avant et un rapport de marche arrière, sachant que
— le premier élément de commande (A) est disposé dans la chaîne cinématique entre le troisième arbre (3) et un carter (GG) de la boîte de vitesses,
— le deuxième élément de commande (B) est disposé dans la chaîne cinématique entre le quatrième arbre (4) et le carter (GG) de la boîte de vitesses,
— le troisième élément de commande (C) est disposé dans la chaîne cinématique entre le premier arbre (1) et le cinquième arbre (5),
— le cinquième élément de commande (E) est disposé dans la chaîne cinématique entre le cinquième arbre (5) et le septième arbre (7),
— une nervure (ST4) du quatrième train planétaire (RS4) et l'arbre d'entrée (AN) sont liés l'une à l'autre, tout en formant le premier arbre (1),
— un planétaire (SO1) du premier train planétaire (RS1) et un planétaire (SO4) du quatrième train planétaire (RS4) sont liés l'un à l'autre, tout en formant le troisième arbre (3),
— une couronne (HO1) du premier train planétaire (RS1) forme le quatrième arbre (4),
**caractérisée en ce que**
- le quatrième élément de commande (D) est disposé dans la chaîne cinématique entre le septième arbre (7) et le huitième arbre (8),
- une couronne (HO2) du deuxième train planétaire (RS2) et une nervure (ST3) du troisième train planétaire (RS3) et l'arbre de sortie (AB) sont liés l'une aux autres, tout en formant le deuxième arbre (2),
- un planétaire (SO3) du troisième train planétaire (RS3) forme le cinquième arbre (5),
- une nervure (ST1) du premier train planétaire (RS1) et une nervure (ST2) du deuxième train planétaire (RS2) et une couronne (HO3) du troisième train planétaire (RS3) sont liées l'une aux autres, tout en formant le sixième arbre (6),
- une couronne (HO4) du quatrième train planétaire (RS4) forme le septième arbre (7) et
- un planétaire (SO2) du deuxième train planétaire (RS2) forme le huitième arbre (8).

5. Transmission multivitesses à trains épicycloïdaux, en particulier une transmission automatique pour un véhicule automobile, comprenant un arbre d'entrée (AN), un arbre de sortie (AB), quatre trains planétaires (RS1, RS2, RS3, RS4), au moins huit arbre rotatifs (1, 2, 3, 4, 5, 6, 7, 8), ainsi que cinq éléments de commande (A, B, C, D, E), dont l'intervention sélective détermine différents rapports de démultiplication entre l'arbre d'entrée (AN) et l'arbre de sortie (AB), de manière à ce que soient réalisables huit rapports de marche avant et un rapport de marche arrière, sachant que
— le premier élément de commande (A) est disposé dans la chaîne cinématique entre le troisième arbre (3) et un carter (GG) de la boîte de vitesses,
— le deuxième élément de commande (B) est disposé dans la chaîne cinématique entre le quatrième arbre (4) et le carter (GG) de la boîte de vitesses,
— le troisième élément de commande (C) est disposé dans la chaîne cinématique entre le premier arbre (1) et le cinquième arbre (5),
— le cinquième élément de commande (E) est disposé dans la chaîne cinématique entre le cinquième arbre (5) et le septième arbre (7),
— une nervure (ST4) du quatrième train planétaire (RS4) et l'arbre d'entrée (AN) sont liés l'une à l'autre, tout en formant le premier arbre (1),
— une nervure (ST3) du troisième train planétaire (RS3) et l'arbre de sortie (AB) sont liés l'une à l'autre, tout en formant le deuxième arbre (2),
— un planétaire (SO1) du premier train planétaire (RS1) et un planétaire (SO4) du quatrième train planétaire (RS4) sont liés l'un à l'autre, tout en formant le troisième arbre (3) et
— une couronne (HO1) du premier train planétaire (RS1) forme le quatrième arbre (4),
**caractérisée en ce que**
le quatrième élément de commande (D) est disposé dans la chaîne cinématique entre le cinquième arbre (5) et le huitième arbre (8),
— un planétaire (S03) du troisième train planétaire (RS3) forme le cinquième arbre (5),
— une nervure (ST1) du premier train planétaire (RS1) et une nervure (ST2) du deuxième train planétaire (RS2) et une couronne (H03) du troisième train planétaire (RS3) sont liés l'une aux autres, tout en formant le sixième arbre (6),
— une couronne (H02) du deuxième train planétaire (RS2) et une couronne (HO4) du quatrième train planétaire (RS4) sont liées l'une à l'autre, tout en formant le septième arbre (7) et
- un planétaire (SO2) du deuxième train planétaire (RS2) forme le huitième arbre (8).

6. Transmission multivitesses à trains épicycloïdaux, en particulier une transmission automatique pour un véhicule automobile, comprenant un arbre d'entrée (AN), un arbre de sortie (AB), quatre trains planétaires (RS1, RS2, RS3, RS4), au moins huit arbre rotatifs (1, 2, 3, 4, 5, 6, 7, 8), ainsi que cinq éléments de commande (A, B, C, D, E), dont l'intervention sélective détermine différents rapports de démultiplication entre l'arbre d'entrée (AN) et l'arbre de sortie (AB), de manière à ce que soient réalisables huit rapports de marche avant et un rapport de marche arrière, sachant que
— le premier élément de commande (A) est disposé dans la chaîne cinématique entre le troisième arbre (3) et un carter (GG) de la boîte de vitesses,
— le deuxième élément de commande (B) est disposé dans la chaîne cinématique entre le quatrième arbre (4) et le carter (GG) de la boîte de vitesses,
— le troisième élément de commande (C) est disposé dans la chaîne cinématique entre le premier arbre (1) et le cinquième arbre (5),
— le cinquième élément de commande (E) est disposé dans la chaîne cinématique entre le cinquième arbre (5) et le septième arbre (7),
— une nervure (ST4) du quatrième train planétaire (RS4) et l'arbre d'entrée (AN) sont liés l'une à l'autre, tout en formant le premier arbre (1),
- une nervure (ST3) du troisième train planétaire (RS3) et l'arbre de sortie (AB) sont liés l'une à l'autre, tout en formant le deuxième arbre (2),
— un planétaire (SO1) du premier train planétaire (RS1) et un planétaire (SO4) du quatrième train planétaire (RS4) sont liés l'un à l'autre, tout en formant le troisième arbre (3),
— une couronne (HO1) du premier train planétaire (RS1) forme le quatrième arbre (4) et
- une couronne (HO2) du deuxième train planétaire (RS2) et un planétaire (SO3) du troisième train planétaire (RS3) sont liés l'une à l'autre, tout en formant le cinquième arbre (5),
**caractérisée en ce que**
- le quatrième élément de commande (D) est disposé dans la chaîne cinématique entre le septième arbre (7) et le huitième arbre (8),
- une nervure (ST1) du premier train planétaire (RS1) et une nervure (ST2) du deuxième train planétaire (RS2) et une couronne (HO3) du troisième train planétaire (RS3) sont liées l'une aux autres, tout en formant le sixième arbre (6),
- une couronne (HO4) du quatrième train planétaire (RS4) forme le septième arbre (7) et
- un planétaire (SO2) du deuxième train planétaire (RS2) forme le huitième arbre (8).

7. Transmission multivitesses à trains épicycloïdaux, en particulier une transmission automatique pour un véhicule automobile, comprenant un arbre d'entrée (AN), un arbre de sortie (AB), quatre trains planétaires (RS1, RS2, RS3, RS4), au moins huit arbre rotatifs (1, 2, 3, 4, 5, 6, 7, 8), ainsi que cinq éléments de commande (A, B, C, D, E), dont l'intervention sélective détermine différents rapports de démultiplication entre l'arbre d'entrée (AN) et l'arbre de sortie (AB), de manière à ce que soient réalisables huit rapports de marche avant et un rapport de marche arrière, sachant que
— le premier élément de commande (A) est disposé dans la chaîne cinématique entre le troisième arbre (3) et un carter (GG) de la boîte de vitesses,
— le deuxième élément de commande (B) est disposé dans la chaîne cinématique entre le quatrième arbre (4) et le carter (GG) de la boîte de vitesses,
— le troisième élément de commande (C) est disposé dans la chaîne cinématique entre le premier arbre (1) et le cinquième arbre (5),
- le quatrième élément de commande (D) est disposé dans la chaîne cinématique entre le sixième arbre (6) et le huitième arbre (8),
— le cinquième élément de commande (E) est disposé dans la chaîne cinématique entre le cinquième arbre (5) et le septième arbre (7),
— une nervure (ST4) du quatrième train planétaire (RS4) et l'arbre d'entrée (AN) sont liés l'une à l'autre, tout en formant le premier arbre (1),
- une nervure (ST3) du troisième train planétaire (RS3) et l'arbre de sortie (AB) sont liés l'une à l'autre, tout en formant le deuxième arbre (2),
— un planétaire (SO1) du premier train planétaire (RS1) et un planétaire (SO4) du quatrième train planétaire (RS4) sont liés solidaires en rotation l'un à l'autre, tout en formant le troisième arbre (3),
— une couronne (HO1) du premier train planétaire (RS1) forme le quatrième arbre (4),
- une nervure (ST1) du premier train planétaire (RS1) et une couronne (HO3) du troisième train planétaire (RS3) sont liés l'une à l'autre, tout en formant le sixième arbre (6),
- une nervure (ST2) du deuxième train planétaire (RS2) forme le huitième arbre (8),
**caractérisée en ce que**
- un planétaire (SO2) du deuxième train planétaire (RS2) et un planétaire (SO3) du troisième train planétaire (RS3) sont liés l'un à l'autre, tout en formant le cinquième arbre (5) et
- une couronne (HO2) du deuxième train planétaire (RS2) et une couronne (HO4) du quatrième train planétaire (RS4) sont liées l'une à l'autre, tout en formant le septième arbre (7).

8. Transmission multivitesses selon une des revendications 1 à 7,
**caractérisée en ce que**
- le premier rapport de marche avant est obtenu par la fermeture du premier, deuxième et troisième éléments de commande (A, B, C),
- le deuxième rapport de marche avant est obtenu par la fermeture du premier, deuxième et cinquième éléments de commande (A, B, E),
- le troisième rapport de marche avant est obtenu par la fermeture du deuxième, troisième et cinquième éléments de commande (B, C, E),
- le quatrième rapport de marche avant est obtenu par la fermeture du deuxième, quatrième et cinquième éléments de commande (B, D, E),
- le cinquième rapport de marche avant est obtenu par la fermeture du deuxième, troisième et quatrième éléments de commande (B, C, D),
- le sixième rapport de marche avant est obtenu par la fermeture du troisième, quatrième et cinquième éléments de commande (C, D, E),
- le septième rapport de marche avant est obtenu par la fermeture du premier, troisième et quatrième éléments de commande (A, C, D) et
- le huitième rapport de marche avant est obtenu par la fermeture du premier, quatrième et cinquième éléments de commande (A, D, E).

9. Transmission multivitesses selon une des revendications 1 à 8, **caractérisée en ce que** un rapport de marche arrière est obtenu par la fermeture du premier, deuxième et quatrième éléments de commande (A, B, D).

10. Transmission multivitesses selon une des revendications 1 à 9, **caractérisée en ce que** les quatre trains planétaires (RS1, RS2, RS3, RS4) sont réalisés comme trains planétaires négatifs.

11. Transmission multivitesses selon une des revendications 1 à 10, **caractérisée en ce que** les trains planétaires (RS1, RS2, RS3, RS4) sont disposés coaxialement l'un par rapport à l'autre et dans le sens axial l'un après l'autre et dans un ordre "RS1, RS4, RS2, RS3".

12. Transmission multivitesses selon une des revendications 1 à 11, **caractérisée en ce que** les quatre trains planétaires (RS1, RS2, RS3, RS4) sont pénétrés respectivement d'au maximum un arbre de la boîte de vitesses et cela dans le sens axial et centriquement.

13. Transmission multivitesses selon une des revendications 1 à 12, **caractérisée en ce que** le deuxième et/ou le troisième train planétaire (RS2, RS3) n'est pénétré par aucun arbre de la boîte de vitesses dans le sens axial et centriquement.

14. Transmission multivitesses selon une des revendications 1 à 11, **caractérisée en ce que** le premier et le quatrième trains planétaires (RS1, RS4) ne sont pémétrés dans le sens axial et centriquement que par l'arbre d'entrée (AN) ou le premier arbre (1) de la boîte de vitesses, et **en ce que** le deuxième train planétaire (RS2) est pénétré dans le sens axial et centriquement soit par l'arbre d'entrée (AN) ou par le premier arbre (1) de la bôite de vitesses soit par le septième arbre (7) de la boîte de vitesses.

15. Transmission multivitesses selon une des revendications 1 à 14, **caractérisée en ce que** le troisième arbre (3) est logé sur une came solidaire du carter (GN) et de façon pivotable.

16. Transmission multivitesses selon une des revendications 1 à 15, **caractérisée en ce que** le premier et/ou le deuxième éléments de commande (A, B) sont disposés au moins partiellement dans une zone radiale au-dessus du premier ou du quatrième trains planétaires (RS1, RS4).

17. Transmission multivitesses selon une des revendications 1 à 16, **caractérisée en ce que** le premier et le deuxième éléments de commande (A, B) sont immédiatement juxtaposés axialement.

18. Transmission multivitesses selon une des revendications 1 à 16, **caractérisée en ce que** le deuxième élément de commande (B) est disposé radialement au moins en grande partie au-dessus du premier élément de commande (A).

19. Transmission multivitesses selon une des revendications 1 à 18, **caractérisée en ce que** le premier élément de commande (A) est disposé au moins partiellement sur le côté opposé au quatrième train planétaire (RS4) du premier train planétaire (RS1).

20. Transmission multivitesses selon une des revendications 1 à 19, **caractérisée en ce que** le troisième élément de commande (C) est disposé essentiellement du côté du troisième train planétaire (RS3), à savoir le côté étant opposé au deuxième train planétaire (RS2).

21. Transmission multivitesses selon une des revendications 1 à 19, **caractérisée en ce que** le troisième élément de commande (C) est disposé essentiellement dans une zone axiale entre le deuxième et le troisième trains planétaires (RS2, RS3).

22. Transmission multivitesses selon la revendication 21, **caractérisée en ce que** le troisième élément de commande (C) est disposé essentiellement dans une zone axiale entre le cinquième et le quatrième éléments de commande (E, D).

23. Transmission multivitesses selon la revendication 21, **caractérisée en ce que** le troisième élément de commande (C) est disposé au moins partiellement dans une zone radiale en-dessous d'un ensemble de disques du quatrième ou du cinquième éléments de commande (D, E).

24. Transmission multivitesses selon une des revendications 1 à 19, **caractérisée en ce que** le troisième élément de commande (C) est disposé essentiellement dans une zone axiale entre le quatrième et le deuxième trains planétaires (RS4, RS2).

25. Transmission multivitesse selon la revendication 24, **caractérisée en ce que** le troisième élément de commande (C) est disposé de manière adjacente axialement au quatrième train planétaire (RS4).

26. Transmission multivitesses selon une des revendications 1 à 25, **caractérisée en ce que** le quatrième élément de commande (D) est disposé essentiellement dans une zone axiale entre le deuxième et le troisième trains planétaires (RS2, RS3).

27. Transmission multivitesses selon la revendication 26, **caractérisée en ce que** le quatrième élément de commande (D) est immédiatement adjacent axialement au troisième train planétaire (RS3).

28. Transmission multivitesses selon une des revendications 1 à 25, **caractérisée en ce que** le quatrième élément de commande (D) est disposé essentiellement dans une zone axiale entre le quatrième et le deuxième trains planétaires (RS4, RS2).

29. Transmission multivitesse selon la revendication 26 ou 28, **caractérisée en ce que** le quatrième élément de commande (D) est disposé de manière adjacente au deuxième train planétaire (RS2).

30. Transmission multivitesses selon une des revendications 1 à 25, **caractérisée en ce que** le quatrième élément de commande (D) est disposé essentiellement dans une zone axiale entre le premier et le quatrième trains planétaires (RS1, RS4).

31. Transmission multivitesses selon la revendication 30, **caractérisée en ce que** le quatrième élément de commande (D) est disposé de manière adjacente au premier train planétaire (RS1).

32. Transmission multivitesses selon une des revendications 1 à 25, **caractérisée en ce que** le quatrième élément de commande (D) est disposé au moins partiellement dans une zone radiale au-dessus du deuxième ou quatrième trains planétaires (RS2, RS4).

33. Transmission multivitesses selon une des revendications 1 à 32, **caractérisée en ce que** le cinquième élément de commande (E) est disposé essentiellement dans une zone axiale entre le deuxième et le troisième trains planétaires (RS2, RS3).

34. Transmission multivitesses selon une des revendications 1 à 32, **caractérisée en ce que** le cinquième élément de commande (E) est disposé essentiellement dans une zone axiale entre le deuxième et le quatrième trains planétaires (RS2, RS4).

35. Transmission multivitesses selon la revendication 33 ou 34, **caractérisée en ce que** le cinquième élément de commande (E) est immédiatement adjacent axialement au deuxième train planétaire (RS2).

36. Transmission multivitesses selon une des revendications précédentes, **caractérisée en ce que** entre les arbres (AN, AB, 1, 2, 3, 4, 5, 6, 7, 8) et le carter (GG) de la boîte de vitesses peuvent être montés des pignons fous supplémentaires.

37. Transmission multivitesses selon une des revendications 1 à 36, **caractérisée en ce que** l'entrée et la sortie de la boîte de vitesses sont prévues sur des côtés opposées du carter (GG).

38. Transmission multivitesses selon une des revendications 1 à 36, **caractérisée en ce que** l'entrée et la sortie de la boîte de vitesses sont prévues du même côté du carter (GG).

39. Transmission multivitesses selon une des revendications précédentes, **caractérisée en ce que** un différentiel de pont et/ou un différentiel de transfert sont disposés du côté entrée ou du côté sortie de la boîte de vitesses.

40. Transmission multivitesses selon une des revendications précédentes, **caractérisée en ce que** l'arbre d'entrée (AN) peut être désolidarisé du moteur d'entraînement du véhicule automobile par un élément de démarrage (ANF).

41. Transmission multivitesses selon la revendication 40, **caractérisée en que** en tant qu'élément de démarrage (ANF) est prévu un convertisseur de couple hydrodynamique, un coupleur hydraulique, un embrayage de démarrage à sec, un embrayage de démarrage en bain d'huile, un embrayage à poudre magnétique ou un embrayage centrifuge.

42. Transmission multivitesses selon une des revendications précédentes, **caractérisée en que** dans le sens de la chaîne cinématique et en aval de la boîte de vitesses est disposé un élément de démarrage externe, et cela en particulier selon la revendication 41, sachant que l'arbre d'entrée (AN) est accouplé de manière solidaire en rotation ou élastique en rotation au vilebrequin du moteur d'entraînement.

43. Transmission multivitesses selon une des revendications précédentes, **caractérisée en ce que** un démarrage du véhicule automobile s'effectue à l'aide d'un élément de commande monté à l'intérieur de la boîte de vitesses, en particulier à l'aide du premier, deuxième, troisième ou quatrième éléments de commande (A, B, C, D) de la boîte de vitesses, sachant que l'arbre d'entrée (AN) est lié en permanence et de manière solidaire en rotation ou élastique en rotation au vilebrequin du moteur d'entraînement.

44. Transmission multivitesses selon la revendication 43, **caractérisée en ce que** le démarrage du véhicule automobile en direction de marche avant et en direction de marche arrière s'effectue à l'aide du même élément de commande monté à l'intérieur de la boîte de vitesses, en particulier à l'aide du premier ou du deuxième éléments de commande (A, B).

45. Transmission multivitesses selon une des revendications précédentes, **caractérisée en que** entre le moteur d'entraînement et la boîte de vitesses est disposé un amortisseur torsionnel.

46. Transmission multivitesses selon une des revendications précédentes, **caractérisée en ce que** sur chaque arbre (AN, AB, 1, 2, 3, 4, 5, 6, 7, 8) de la boîte de vitesses peuvent être montés un frein exempt d'usure ou une prise de mouvement pour l'entraînement de groupes supplémentaires ou un moteur électrique en tant que générateur et/ou machine motrice supplémentaire.

47. Transmission multivitesses selon une des revendications précédentes, **caractérisée en ce que** en tant que éléments de commande (A, B, C, D, E) sont prévus des embrayages à friction ou des freins à friction - en particulier des embrayages à disques multiples, des freins à ruban et/ou des embrayages à cône - et/ou des embrayages à engagement positif ou des freins à engagement positif - en particulier des embrayages à cône et/ou des embrayages à crabots.
